# EUROPEAN PATENT APPLICATION

(11) **EP 3 780 793 A1**
(43) Date of publication of application: **17.02.2021**
(21) Application number: 19776551.4
(22) Date of filing: 24.01.2019
(51) Int. Cl.: H04W 72/02, H04W 4/40, H04W 92/18

(54) **COMMUNICATION DEVICE**

(30) Priority: 29.03.2018 JP 2018063585; 09.05.2018 JP 2018090733
(71) Applicant: Sony Corporation, 108-0075 Tokyo (JP)
(72) Inventor: UCHIYAMA, Hiromasa, Tokyo 108-0075 (JP); TANG, Yifu, Tokyo 108-0075 (JP)
(74) Representative: Witte, Weller & Partner Patentanwälte mbB
(86) International application number: PCT/JP2019/002281
(87) International publication number: WO 2019/187562

(57) **Abstract**

[Problem] To enable allocation of resources in a more flexible manner in the inter-device communication including the V2X communication.

[Solution] A communication device includes a communication unit that performs wireless communication; an obtaining unit that obtains, from another communication device, information about a first-type range of some of the resources which have been reserved by the other communication device for use in the inter-device communication; and a control unit that, based on the obtained information about the first-type range, controls a second-type range from which the resources are to be selected for use in the inter-device communication.

## Description

### Field

The application concerned is related to a communication device.

### Background

With the aim of putting automated diving into practice in future, there are raised expectations about in-vehicle communication (V2X communication). The V2X communication stands for Vehicle to X communication, and implies a system in which a vehicle and "something" communicate with each other. Examples of "something" include a vehicle, infrastructure, a network, and a pedestrian (i.e., V2V, V2I, V2N, and V2P). For example, in Patent Literature 1, an example of the technology related to the V2X communication is disclosed.

As far as the wireless communication for vehicles is concerned, till now, mainly the development of DSRC (Dedicated Short Range Communication) based on 801.11p was carried out. However, in recent years, standardization of "LTE-based V2X" communication representing in-vehicle communication based on the LTE was undertaken. In the LTE-based V2X communication, the communication of fundamental safety messages is supported.

### Citation List

### Patent Literature

Patent Literature 1: JP 2017-208796 A

### Summary

### Technical Problem

Moreover, with the aim of achieving further improvement in the V2X communication, the NR V2X communication using the 5G technology (NR: New Radio) is being studied in recent years. In the NR V2X communication, use cases requiring high reliability, low delay, high-speed communication, and high capacity are supported that were not supportable in the LTE-based V2X communication in the past.

At the same time, as a result of diversification of the specifications required according to use cases, it is possible to think of situations in which there is variability in the packet transmission timings in accordance with the jitter component included in the traffic, or situations in which there is variation in the size of the transmitted packets.

In that regard, in the application concerned, a technology is proposed that enables allocation of resources in a more flexible manner in the inter-device communication including the V2X communication.

### Solution to Problem

According to the present disclosure, a communication device is provided that includes: a communication unit that performs wireless communication; an obtaining unit that obtains, from another communication device, information about a first-type range of some of resources which have been reserved by the other communication device for use in inter-device communication; and a control unit that, based on the obtained information about the first-type range, controls a second-type range from which the resources are to be selected for use in the inter-device communication.

Moreover, according to the present disclosure, a communication device is provided that includes: a communication unit that performs wireless communication; a control unit that, in order to use some of resources in inter-device communication, controls a first-type range from which the resources are to be reserved; and a notifying unit that, in order to control a second-type range from which another communication device selects the resources to be used in the inter-device communication, notifies the other communication device about information regarding the first-type range.

Moreover, according to the present disclosure, a communication device is provided that includes: a communication unit that performs wireless communication; a notifying unit that notifies a base station about first-type information regarding condition for periodic packet transmission to another terminal device during inter-device communication; an obtaining unit that, after notification of the first-type information, obtains, from the base station, second-type information regarding transmission resources allocated to be usable in the periodic packet transmission; and a control unit that, based on the second-type information, selects resources to be used in the periodic packet transmission.

Moreover, according to the present disclosure, a communication device is provided that includes: a communication unit that performs wireless communication; and a control unit that, according to information about first-type resources usable in transmission of packets during inter-device communication and according to information about the packets scheduled to be transmitted, selects second-type resources that are different than the first-type resources.

### Advantageous Effects of Invention

As explained above, according to the application concerned, a technology is proposed that enables allocation of resources in a more flexible manner in the inter-device communication including the V2X communication.

Meanwhile, the abovementioned effect is not necessarily limited in scope and, in place of or in addition to the abovementioned effect, any other effect indicated in the present written description or any other effect that may occur from the present written description can also be achieved.

### Brief Description of Drawings

FIG. 1 is an explanatory diagram for explaining an exemplary schematic configuration of a system according to embodiments of the application concerned.
FIG. 2 is a block diagram illustrating an exemplary configuration of a base station according to the embodiments.
FIG. 3 is a block diagram illustrating an exemplary configuration of a terminal device according to the embodiments.
FIG. 4 is a diagram illustrating the overview of V2X communication.
FIG. 5 is an explanatory diagram for explaining an example of the overall picture of the V2X communication.
FIG. 6 is a diagram illustrating exemplary use cases of the V2X communication.
FIG. 7 is an explanatory diagram for explaining an exemplary V2X operation scenario.
FIG. 8 is an explanatory diagram for explaining an exemplary V2X operation scenario.
FIG. 9 is an explanatory diagram for explaining an exemplary V2X operation scenario.
FIG. 10 is an explanatory diagram for explaining an exemplary V2X operation scenario.
FIG. 11 is an explanatory diagram for explaining an exemplary V2X operation scenario.
FIG. 12 is an explanatory diagram for explaining an exemplary V2X operation scenario.
FIG. 13 is an explanatory diagram for explaining the overview of the features of the packets expected in NR V2X communication.
FIG. 14 is a diagram illustrating an exemplary configuration of resources allocated for sidelink communication.
FIG. 15 is an explanatory diagram for explaining an example of the operation timeline in the case in which a terminal device transmits packets based on Mode4 resource allocation.
FIG. 16 is an explanatory diagram for explaining an example of a sensing operation performed for selecting resources from the resource pool.
FIG. 17 is an explanatory diagram for explaining a case in which the same resource allocation method as implemented in the conventional sidelink communication is implemented in the NR V2X communication.
FIG. 18 is an explanatory diagram for explaining the overview of proactive-type resource reservation.
FIG. 19 is an explanatory diagram for explaining the overview of burst resource reservation.
FIG. 20 is a diagram illustrating an example in which the range for reserved resources is partitioned into a plurality of ranges according to the reservation levels.
FIG. 21 is an explanatory diagram for explaining the overview of an exemplary decision method for deciding the area for resource reservation.
FIG. 22 is an explanatory diagram for explaining the overview of another example of the decision method for deciding the area for resource reservation.
FIG. 23 is an explanatory diagram for explaining the overview of still another example of the decision method for deciding the area for resource reservation.
FIG. 24 is an explanatory diagram for explaining the overview of still another example of the decision method for deciding the area for resource reservation.
FIG. 25 is a flowchart for explaining an example of the flow of operations performed at the time of selecting the resources according to the reservation levels.
FIG. 26 is a flowchart for explaining another example of the flow of operations performed at the time of selecting the resources according to the reservation levels.
FIG. 27 is an explanatory diagram for explaining the overview of partial resource reservation.
FIG. 28 is an explanatory diagram for explaining the overview of one mode of the partial resource reservation.
FIG. 29 is an explanatory diagram for explaining an example of the operations related to packet transmission when the partial resource reservation is implemented.
FIG. 30 is an explanatory diagram for explaining an example of the operations related to packet transmission when the partial resource reservation is implemented.
FIG. 31 is an explanatory diagram for explaining the overview of the operations of the terminal device that performs sensing when the partial resource reservation is implemented.
FIG. 32 is an explanatory diagram for explaining the overview of reactive-type resource reservation.
FIG. 33 is a sequence diagram illustrating an example of the flow of operations in Mode3 resource allocation.
FIG. 34 is a sequence diagram illustrating another example of the flow of operations in the Mode3 resource allocation.
FIG. 35 is an explanatory diagram for explaining the overview of SPS assistance information.
FIG. 36 is a timing chart illustrating an example of the flow of operations performed when the semi-persistent scheduling is implemented.
FIG. 37 is an explanatory diagram for explaining a case in which the same resource allocation method as implemented in the conventional sidelink communication is implemented in the NR V2X communication.
FIG. 38 is an explanatory diagram for explaining the overview of proactive-type resource allocation.
FIG. 39 is a sequence diagram illustrating an example of the flow of operations performed in the system according to a second embodiment of the application concerned.
FIG. 40 is an explanatory diagram for explaining an example of the method for setting the levels in the resource blocks obtained by partitioning an SPS resource.
FIG. 41 is an explanatory diagram for explaining an example of the method for setting the levels in the resource blocks obtained by partitioning an SPS resource.
FIG. 42 is an explanatory diagram for explaining an example of the method for setting the levels in the resource blocks obtained by partitioning an SPS resource.
FIG. 43 is an explanatory diagram for explaining the overview of reactive-type resource allocation.
FIG. 44 is a flowchart for explaining an example of the flow of operations performed by the terminal device when the reactive-type resource allocation is performed.
FIG. 45 is a flowchart for explaining another example of the flow of operations performed by the terminal device when the reactive-type resource allocation is performed.
FIG. 46 is a flowchart for explaining still another example of the flow of operations performed by the terminal device when the reactive-type resource allocation is performed.
FIG. 47 is a sequence diagram for explaining an example of the flow of operations performed regarding the setting of a backup resource pool (BRP).
FIG. 48 is a flowchart for explaining still another example of the flow of operations performed by the terminal device when the reactive-type resource allocation is performed.
FIG. 49 is a flowchart for explaining an example of the flow of operations performed by the terminal device in the system according to a modification example.
FIG. 50 is a flowchart for explaining another example of the flow of operations performed by the terminal device in the system according to the modification example.
FIG. 51 is a flowchart for explaining an example of the flow of operations performed by the base station in the system according to the modification example.
FIG. 52 is a block diagram illustrating a first example of a schematic configuration of an eNB.
FIG. 53 is a block diagram illustrating a second example of a schematic configuration of the eNB.
FIG. 54 is a block diagram illustrating an example of a schematic configuration of a smartphone.
FIG. 55 is a block diagram illustrating an example of a schematic configuration of a car navigation device.

### Description of Embodiments

Preferred embodiments of the application concerned are described below in detail with reference to the accompanying drawings. In the present written description and the drawings, the constituent elements having practically identical functional configuration are referred to by the same reference numerals, and the explanation is not given repeatedly.

The explanation is given in the following sequence.
1. Configuration example
   1.1. Example of system configuration
   1.2. Configuration example of base station
   1.3. Configuration example of terminal device
2. V2X communication
3. First embodiment
   3.1. Study related to resource allocation in V2X communication
   3.2. Technical features
      3.2.1. Proactive-type resource reservation
      3.2.2. Reactive-type resource reservation
   3.3. Evaluation
4. Second embodiment
   4.1. Study related to resource allocation in V2X communication
   4.2. Technical features
      4.2.1. Proactive-type resource allocation
      4.2.2. Reactive-type resource allocation
      4.2.3. Modification example
   4.3. Evaluation
5. Application examples
   5.1. Application examples related to base station
   5.2. Application examples related to terminal device
6. Summary

### <<1. Configuration example>>

### <1.1. Example of system configuration>

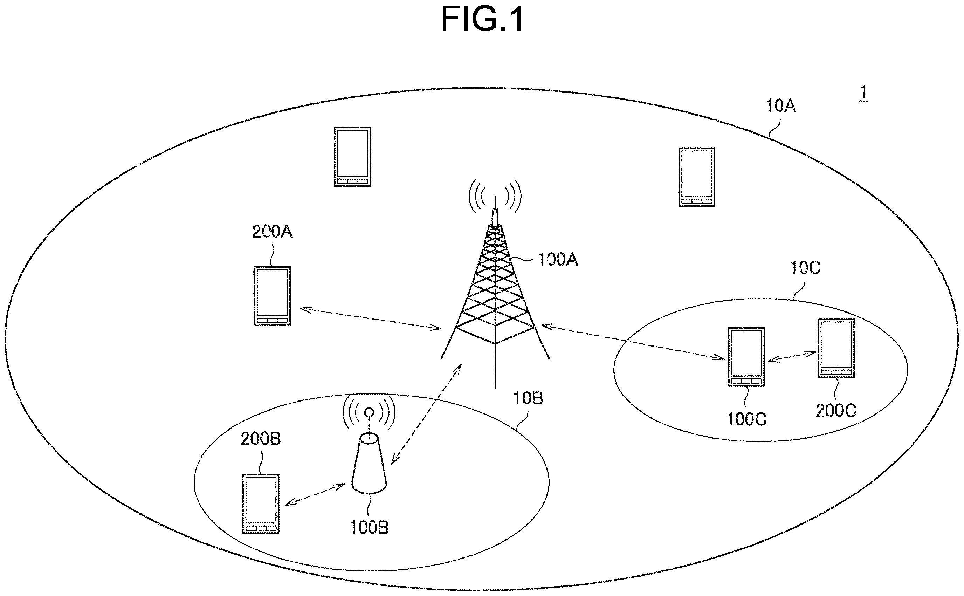

Firstly, explained with reference to FIG. 1 is an exemplary schematic configuration of a system 1 according to the embodiments of the application concerned. FIG. 1 is an explanatory diagram for explaining an exemplary schematic configuration of the system 1 according to the embodiments of the application concerned. As illustrated in FIG. 1, the system 1 includes wireless communication devices 100 and terminal devices 200. Herein, each terminal device 200 is also called a user; and the user can also be called a UE. A wireless communication device 100C is also called a UE-Relay. Herein, a UE can imply a UE defined in the LTE or the LTE-A; and a UE-Relay can imply the "Prose UE to Network Relay" that is in discussion in 3GPP, or can imply a communication device in broader terms.

### (1) Wireless communication device 100

Each wireless communication device 100 is a device that provides wireless communication service to its subordinate devices. For example, a wireless communication device 100A is a base station of a cellular system (or a mobile communication system). The base station 100A performs wireless communication with the devices (such as a terminal device 200A) positioned inside a cell 10A of the base station 100A. For example, the base station 100A sends downlink signals to the terminal device 200A and receives uplink signals from the terminal device 200A.

The base station 100A is logically connected to other base stations by, for example, the X2 interface; and is capable of sending and receiving control information. Moreover, the base station 100A is logically connected to, what is called, a core network (not illustrated) by, for example, the S1 interface; and is capable of sending and receiving control information. Meanwhile, as far as the physical relay is concerned, the communication among those devices can be physically relayed using various devices.

Herein, the wireless communication device 100A illustrated in FIG. 1 is a macro cell base station, and the cell 10A is a macro cell. On the other hand, wireless communication devices 100B and 100C are master devices that operate small cells 10B and 10C, respectively. As an example, the master device 100B is a small cell base station installed in a fixed manner. The small cell base station 100B establishes a wireless backhaul link with the macro cell base station 100A, and establishes an access link with one or more terminal devices (for example, a terminal device 200B) positioned inside the small cell 10B. Moreover, the wireless communication device 100B can be a relay node defined in 3GPP. The master device 100C is a dynamic AP (access point). The dynamic AP 100C is a mobile device that dynamically operates the small cell 10C. Moreover, the dynamic AP 100C establishes a wireless backhaul link with the macro cell base station 100A, and establishes an access link with one or more terminal devices (for example, a terminal device 200C) positioned inside the small cell 10C. The dynamic AP 100C can be, for example, a terminal device installed with hardware or software capable of operating as a base station or a wireless access point. In that case, the small cell 10C represents a dynamically-formed localized network (a localized network/a virtual cell).

The cell 10A can be operated using an arbitrary wireless communication method such as LTE, LTE-A (LTE-Advanced), LTE-ADVANCED-PRO, GSM (registered trademark), UMTS, W-CDMA, CDMA 2000, WiMAX, WiMAX2, or IEEE 802.16.

Herein, small cells is a concept that can include various types of cells (such as femto cells, nano cells, pico cells, and micro cells) which are smaller than macro cells and which are installed in an overlapping or nonoverlapping manner with macro cells. As an example, a small cell is operated by a dedicated base station. As another example, a small cell is operated when a terminal representing a master device temporarily operates as a small cell base station. Moreover, what is called a relay node can also be treated as a form of a small cell base station. The wireless communication device that functions as the parent station of a relay node is also referred to as a donor base station. A donor base station can imply DeNB in the LTE, or can imply the parent station of a relay node in broader terms.

### (2) Terminal device 200

Each terminal device 200 is capable of performing communication in a cellular system (or a mobile communication system). The terminal device 200 performs wireless communication with wireless communication devices in the concerned cellular system (for example, with the base station 100A, or the master device 100B, or the master device 100C). For example, the terminal device 200A receives downlink signals from the base station 100A and sends uplink signals to the base station 100A.

Meanwhile, the terminal device 200 is not limited to, what is called, a UE. Alternatively, for example, what is called a low cost UE, such as an MTC terminal, an eMTC (Enhanced MTC) terminal, or an NB-IoT terminal can also be used as the terminal device 200. Still alternatively, an infrastructure terminal such as an RSU (Road Side Unit) or a CPE (Customer Premises Equipment) can also be used as the terminal device 200.

### (3) Supplementary explanation

Till now, the explanation was given about the schematic configuration of the system 1. However, the concerned technology is not limited to the example illustrated in FIG. 1. For example, as far as the configuration of the system 1 is concerned, it is possible to have a configuration not including master devices, such as SCE (Small Cell Enhancement), HetNet (Heterogeneous Network), and MTC (Machine Type Communication) network. Moreover, as another example of the configuration of the system 1, master devices can be connected to small cells, and cells can be built under the small cells.

### <1.2. Configuration example of base station>

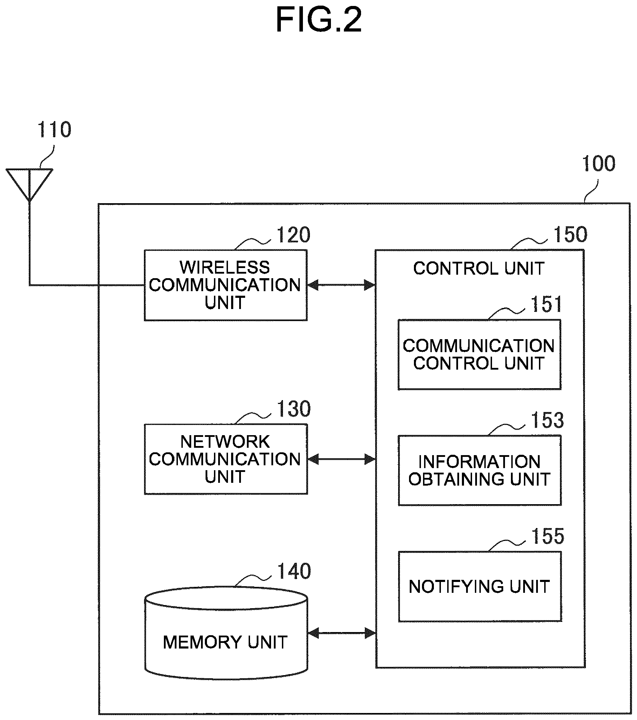

Explained below with reference to FIG. 2 is a configuration of the base station 100 according to the embodiments of the application concerned. FIG. 2 is a block diagram illustrating an exemplary configuration of the base station 100 according to the embodiments of the application concerned. With reference to FIG. 2, the base station 100 includes an antenna unit 110, a wireless communication unit 120, a network communication unit 130, a memory unit 140, and a control unit 150.

### (1) Antenna unit 110

The antenna unit 110 emits, as radio waves into the space, the signals output by the wireless communication unit 120. Moreover, the antenna unit 110 converts the radio waves present in the space into signals, and outputs the signals to the wireless communication unit 120.

### (2) Wireless communication unit 120

The wireless communication unit 120 sends and receives signals. For example, the wireless communication unit 120 sends downlink signals to terminal devices, and receives uplink signals from terminal devices.

### (3) Network communication unit 130

The network communication unit 130 sends and receives information. For example, the network communication unit 130 sends information to other nodes, and receives information from other nodes. For example, the other nodes include other base stations and core network nodes.

Meanwhile, as described earlier, in the system 1 according to the embodiments, there are times when a terminal device operates as a relay terminal and relays the communication between a remote terminal and a base station. In such a case, for example, the wireless communication device 100C that represents a relay terminal need not include the network communication unit 130.

### (4) Memory unit 140

The memory unit 140 is used to store, temporarily or permanently, programs and a variety of data to be used in the operations of the base station 100.

### (5) Control unit 150

The control unit 150 provides various functions of the base station 100. The control unit 150 includes a communication control unit 151, an information obtaining unit 153, and a notifying unit 155. Moreover, the control unit 150 can also include other constituent elements other than the constituent elements mentioned herein. That is, the control unit 150 can also perform operations other than the operations of the constituent elements mentioned herein.

The communication control unit 151 performs various operations related to the control of the wireless communication with the terminal device 200 via the wireless communication unit 120. For example, the communication control unit 151 can allocate resources to be used by the terminal device 200 in packet transmission. Moreover, at that time, in anticipation of periodic packet transmission from the terminal device 200, the communication control unit 151 can make a reservation of the available resources for the periodic packet transmission. More particularly, in addition to allocating the resources to be used by the terminal device 200 in the packet transmission in near future, the communication control unit 151 can allocate, in advance, the available resources for use in the packet transmission at other subsequent transmission timings. At that time, based on predetermined conditions, the communication control unit 151 can control the range for making a reservation of the resources. Moreover, the communication control unit 151 performs various operations related to the control of the communication with other nodes (for example, other base stations and other core network nodes) via the network communication unit 130.

The information obtaining unit 153 obtains a variety of information from the terminal device 200 and other nodes. As a specific example, the information obtaining unit 153 can obtain, from a particular terminal device 200, information about the periodic packet transmission (for example, information about the conditions for transmission of packets on a periodic basis) as performed by that terminal device 200 to the other terminal devices 200. The obtained information can be used, for example, in the control related to the wireless communication with the concerned terminal device 200 or in the control related to the coordination with the other nodes.

The notifying unit 155 notifies the terminal devices 200 and the other nodes about a variety of information. As a specific example, the notifying unit 155 can notify the terminal devices in the corresponding cell about a variety of information enabling the terminal devices to perform wireless communication with the base station. As another example, the notifying unit 155 can notify the other nodes (for example, the other base stations) about the information obtained from the terminal devices in the corresponding cell.

### <1.3. Configuration example of terminal device>

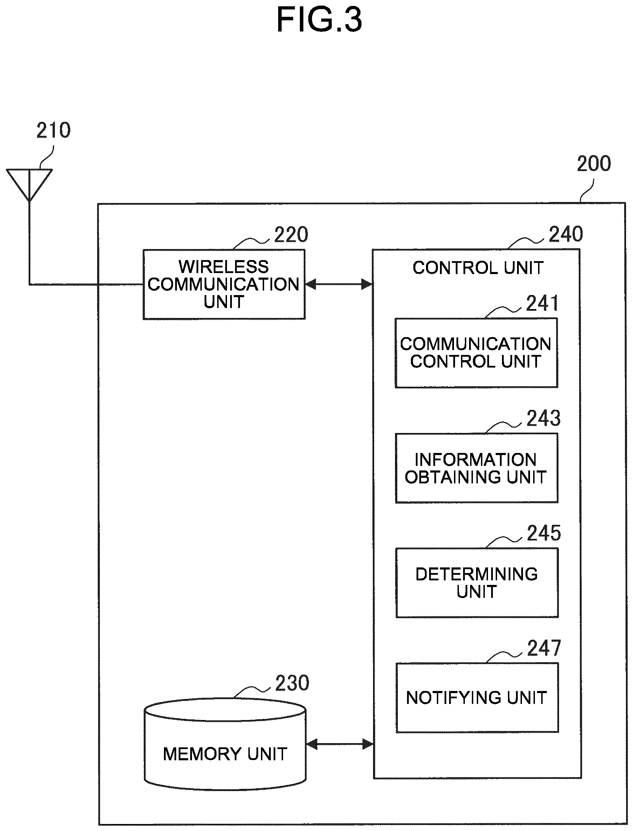

Explained below with reference to FIG. 3 is an exemplary configuration of the terminal device 200 according to the embodiments of the application concerned. FIG. 3 is a block diagram illustrating an exemplary configuration of the terminal device 200 according to the embodiments of the application concerned. As illustrated in FIG. 3, the terminal device 200 includes an antenna unit 210, a wireless communication unit 220, a memory unit 230, and a control unit 240.

### (1) Antenna unit 210

The antenna unit 210 emits, as radio waves into the space, the signals output by the wireless communication unit 220. Moreover, the antenna unit 210 converts the signals present in the space into signals, and outputs those signals to the wireless communication unit 220.

### (2) Wireless communication unit 220

The wireless communication unit 220 sends and receives signals. For example, the wireless communication unit 220 receives downlink signals from the base station, and sends uplink signals to the base station.

Meanwhile, as described earlier, in the system 1 according to the embodiments, sometimes the terminal device 200 directly communicates with the other terminal devices 200 without involving the base station 100. In that case, the wireless communication unit 220 can send sidelink signals to and receive sidelink signals from the other terminal devices 200.

### (3) Memory unit 230

The memory unit 230 is used to store, temporarily or permanently, programs and a variety of data to be used in the operations of the terminal device 200.

### (4) Control unit 240

The control unit 240 provides various functions of the terminal device 200. For example, the control unit 240 includes a communication control unit 241, an information obtaining unit 243, a determining unit 245, and a notifying unit 247. Moreover, the control unit 240 can also include other constituent elements other than the constituent elements mentioned herein. That is, the control unit 240 can also perform operations other than the operations of the constituent elements mentioned herein.

The communication control unit 241 controls various operations related to the wireless communication performed with the base station 100 or the other terminal devices 200 via the wireless communication unit 220. For example, the communication control unit 241 can make a reservation of the resources to be used in packet transmission. At that time, based on predetermined conditions, the communication control unit 241 can control the range for making a reservation of the resources. Moreover, the communication control unit 241 can perform control in such a way that some of the reserved resources are selected and packet transmission is performed using the selected resources. For example, the information obtaining unit 243 can obtain, from the base station 100, the information about the resources reserved by that base station 100.

The information obtaining unit 243 obtains a variety of information from the base station 100 and the other terminal devices 200. As a specific example, the information obtaining unit 243 can obtain, from the base station and the other terminal devices 200, a variety of information useful in selecting the resources to be used in communicating with the other terminal devices 200. As a more specific example, the information obtaining unit 243 can obtain the information about the resources reserved by the other terminal devices 200 from the other terminal devices 200.

The determining unit 245 performs operations related to a variety of determination. For example, the determining unit 245 can perform predetermined determination based on the information obtained from the base station 100 and the other terminal devices 200. As a more specific example, based on the information about the resources reserved by the other terminal devices 200, the determining unit 245 can perform determination regarding the selection of resources to be used in packet transmission. As another example, based on various conditions, the determining unit 245 can perform determination regarding the reservation of resources to be used in packet transmission. As still another example, using the resources reserved by the base station 100, the determining unit 245 can perform determination about whether or not it is possible to transmit the target packets for transmission. Moreover, if it is difficult to transmit packets using the resources reserved by the base station 100, the determining unit 245 can perform determination regarding the selection of resources to be used in transmitting those packets.

The notifying unit 247 notifies the base station 100 and the other terminal devices 200 about a variety of information. As a specific example, the notifying unit 247 can notify the other terminal devices 200 about the information regarding the resources reserved for use in packet transmission.

### <<2. V2X communication>>

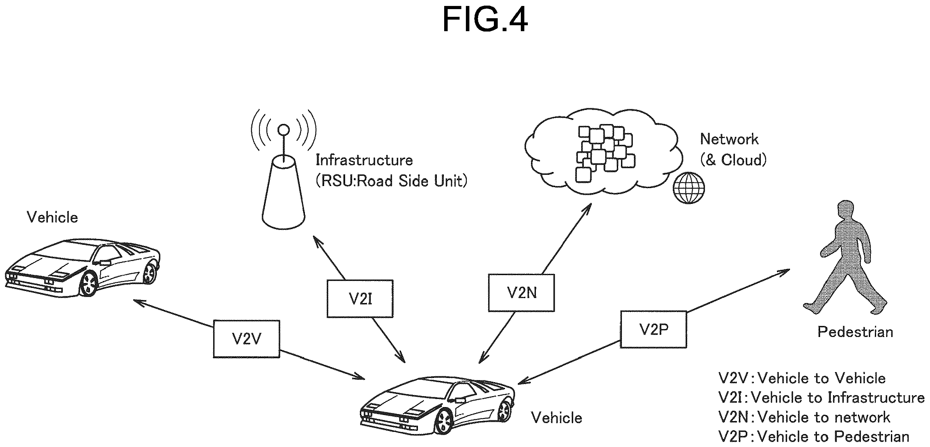

Given below is the explanation of the overview of the V2X communication. The V2X communication stands for Vehicle to X communication, and implies a system in which a vehicle and "something" communicate with each other. For example, FIG. 4 is a diagram illustrating the overview of the V2X communication. As illustrated in FIG. 4, examples of "something" include a vehicle, infrastructure, a network, and a pedestrian (i.e., V2V, V2I, V2N, and V2P).

### (Overall picture of V2X communication)

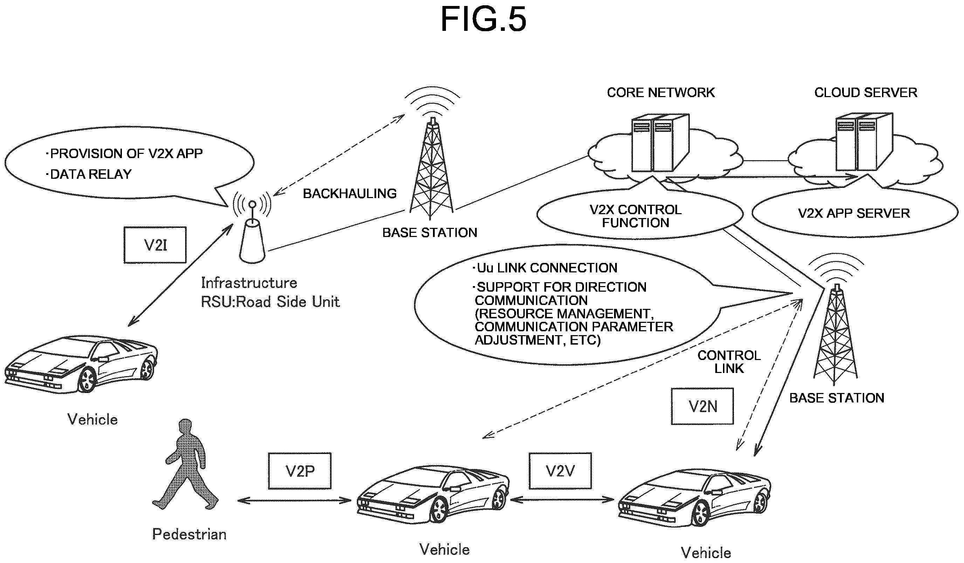

FIG. 5 is an explanatory diagram for explaining an example of the overall picture of the V2X communication. In the example illustrated in FIG. 5, a V2X application server (an APP server) is treated as a cloud server, and the control of the V2X communication at the core network side is performed by the application server. A base station performs Uu link communication with terminal devices, and performs communication control of direct communication such as the V2V communication or the V2P communication. Apart from the base station, an RSU (Road Side Unit) is installed as roadside infrastructure. As far as the RSU is concerned, it is possible to think of two types, namely, a base station type RSU and a UE type RSU. The RSU is used in providing a V2X application (V2X APP), and in supporting data relay.

### (Use cases of V2X communication)

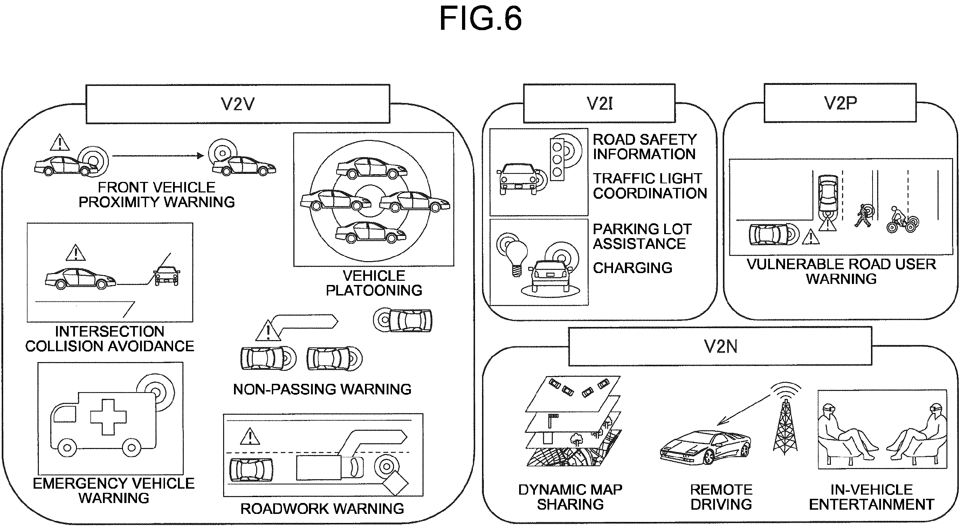

As far as the wireless communication for vehicles is concerned, till now, mainly the development of DSRC (Dedicated Short Range Communication) based on 802.11p was carried out. However, in recent years, standardization of "LTE-based V2X" representing in-vehicle communication based on the LTE was undertaken. In the LTE-based V2X communication, the communication of fundamental safety messages is supported. Moreover, with the aim of achieving further improvement in the V2X communication, the NR V2X communication using the 5G technology (NR: New Radio) is being studied in recent years. For example, FIG. 6 is a diagram illustrating exemplary use cases of the V2X communication.

In the NR V2X communication, use cases requiring high reliability, low delay, high-speed communication, and high capacity are supported that were not supportable in the LTE-based V2X communication in the past. As specific examples, from among the examples illustrated in FIG. 6, the provision of a dynamic map or remote driving can be cited. Besides, sensor data sharing in which sensor data is communicated between vehicles or between a vehicle and the road can be cited, or a platooning use case for vehicle platooning can be cited. Regarding such use cases and the requirements of the NR V2X communication, the specifications are given in 3GPP TR22.826. Given below is the explanation of exemplary use cases for reference.

### (1) Vehicles Platooning

In this use case for vehicle platooning, a plurality of vehicles travels in the same direction in line, and information for controlling the vehicle platooning is communicated between the vehicle leading the vehicle platooning and the other vehicles. As a result of communicating such information, for example, it becomes possible to close the inter-vehicular distance during the vehicle platooning.

### (3) Extended Sensors

This is a use case for enabling exchange of sensor-related information (pre-data-processing raw data or processed data) among the vehicles. The sensor information can be collected using local sensors, live video images (for example, live video images from the surrounding vehicles, the RSUs, and the pedestrians), and V2X application servers. As a result of such information exchange, the vehicles become able to obtain information that is not available in the respective sensor information, and thus become able to acknowledge/recognize a wider range of the environment. In this use case, since a large volume of information needs to be exchanged, a high data rate is required in communication.

### (3) Advanced Driving

This is a use case for enabling semi-automated driving or total-automated driving. In this use case, the RSUs share acknowledged/recognized information, which is obtained from their sensors, with the surrounding vehicles; so that each vehicle becomes able to adjust the path and the operations while synchronizing and cooperating with the other vehicles. Moreover, each vehicle also becomes able to share the intent/intention for driving with the surrounding vehicles.

### (4) Remote Driving

This is a use case for making a remote operator or a V2X application perform remote operations. The remote driving is used when a person having difficulty in driving is replaced by some other person, or used in the case of driving vehicles in dangerous areas. Regarding public transportation in which the routes and the roads to travel are fixed to a certain extent, it is also possible to implement driving based on cloud computing. In this use case, the communication requires high reliability and low transmission delay.

### (Physical layer enhancement)

In order to fulfil the requirements mentioned above, it is necessary to achieve further enhancement of the physical layer with reference to the LTE V2X communication. Examples of the target links include the Uu link and the PC5 link (sidelink). The Uu link is a link between the infrastructure, such as base stations and RSUs (Road Side Units), and the terminal devices. The PC5 link (sidelink) is a link among the terminal devices. The major points for enhancement are explained below.

In terms of enhancement, the following points can be cited.
- channel format
- sidelink feedback communication
- sidelink resource allocation method
- vehicle position information estimation technology
- inter-terminal relay communication
- support to unicast communication and multicast communication
- multicarrier communication, carrier aggregation
- MIMO/beam forming
- high-frequency compatibility (e.g. 6 GHz or more) ...etc.

Examples of the channel format include flexible numerology, short TTI (Transmission Time Interval), multi-antenna compatibility, and waveform. Examples of the sidelink feedback communication include HARQ and CSI (Channel Status Information).

### (V2X operation scenario)

Given below is the explanation of an example of the V2X communication operation scenario. The V2N communication is simple because it is performed using only the DL/UL communication between a base station and a terminal device. In contrast, in the V2V communication, it is possible to think of a variety of communication paths. In the following explanation, although each scenario is explained with the main focus on the V2V communication, the same communication operations can also be implemented in the V2P communication and the V2I communication. In the V2P communication and the V2I communication, a pedestrian and an RSU respectively serve as the communication destination.

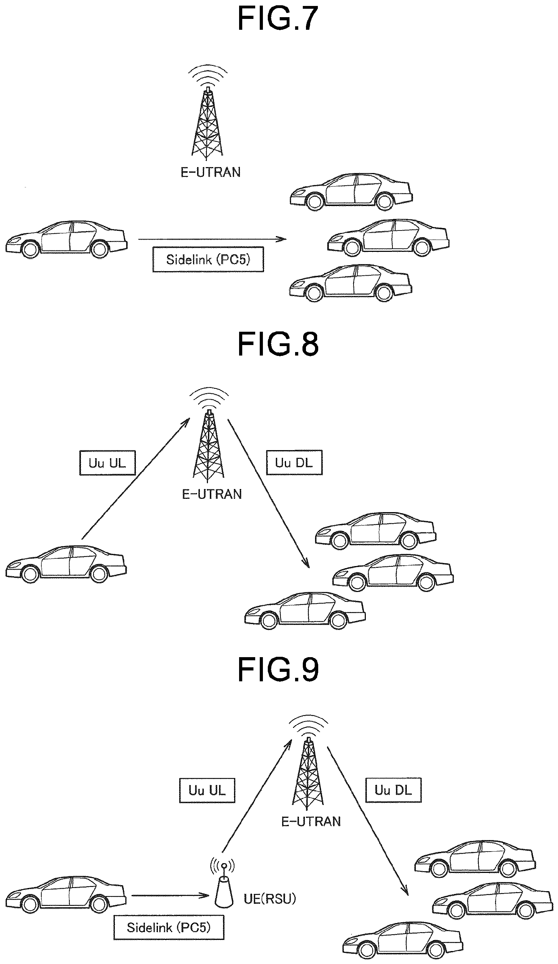

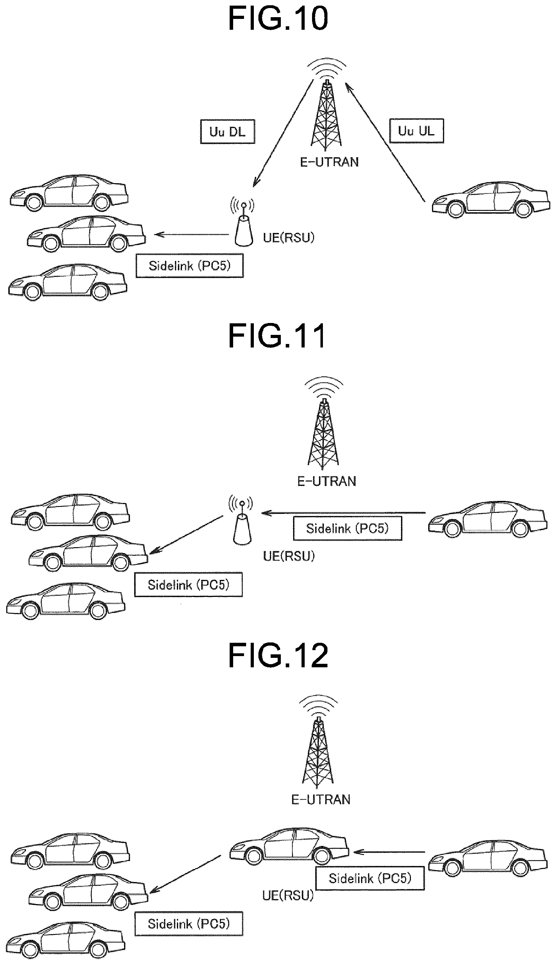

For example, FIGS. 7 to 12 are explanatory diagrams for explaining exemplary V2X operation scenarios. More specifically, in FIG. 7 is illustrated a scenario in which vehicles perform direct communication without involving a base station (E-UTRAN). In FIG. 8 is illustrated a scenario in which vehicles perform communication via a base station. In FIGS. 9 and 10 are illustrated scenarios in which vehicles perform communication via a terminal device (a UE; herein, an RSU) and a base station. In FIGS. 11 and 12 are illustrated scenarios in which vehicles perform communication via a terminal device (a UE; herein, an RSU or another vehicle).

With reference to FIGS. 7 to 12, "sidelink" represents the communication link among the terminal devices, and is also referred to as PC5. Specific examples of the sidelink include a V2V communication link, a V2P communication link, and a V2I communication link. Moreover, "Uu interface" represents a wireless interface between a terminal device and the base station. Specific examples of the Uu interface include a V2N communication link. Furthermore, "PC5 interface" represents a wireless interface between the terminal devices.

### <<3. First embodiment>>

Firstly, the explanation is given about a first embodiment of the application concerned.

### <3.1. Study related to resource allocation in V2X communication>

In the first embodiment of the application concerned, the focus is on the method for resource allocation for the V2V communication links in the NR V2X communication. In the conventional sidelink communication (particularly the V2V communication), it is fundamentally assumed to have a periodic traffic for periodically broadcasting safety-related messages to the surrounding vehicles.

On the other hand, in the NR V2X communication, for example, it is expected to deal with new use cases such as "sensor data sharing" and "advanced driving", and it is possible to think of a situation in which there is a collapse in the periodicity of the traffic. That is, although the traffic is periodic in nature, it is anticipated that the jitter component is included in the traffic, and there is some mismatch in the timings of packet arrival in the physical layer (i.e., the timings of the arrival of packets from the upper layer to the physical layer).

Moreover, regarding the packet size too, conventionally it is assumed to mainly have the packets of the identical size. However, in the new use cases, it is possible to think of a traffic in which the size changes for each packet. Such changes in the packet size are attributed to, for example, the fact that the transmission data is dependent on the surrounding environment of the automobile.

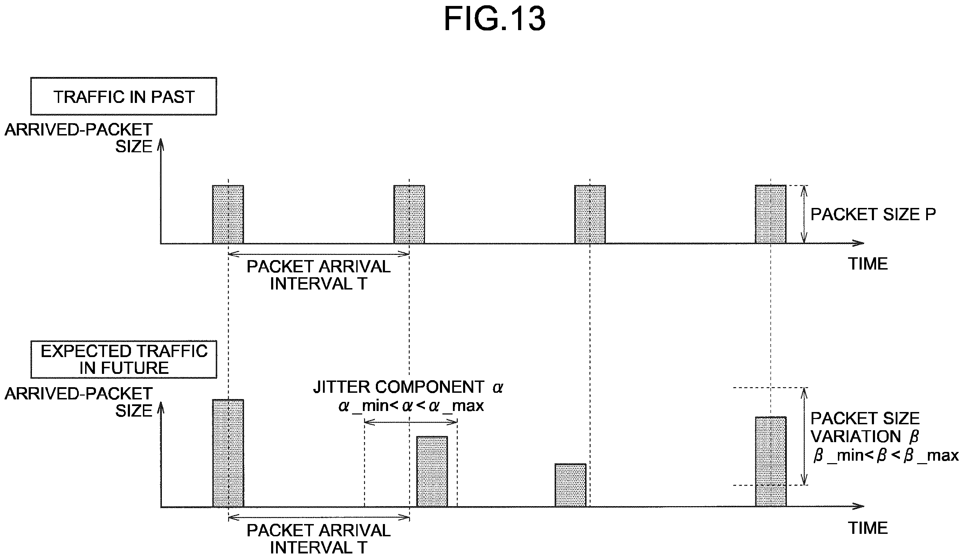

For example, FIG. 13 is an explanatory diagram for explaining the overview of the features of the packets expected in the NR V2X communication. In FIG. 13, the difference in the traffic in the NR V2X communication and the conventional sidelink communication is schematically illustrated. In the upper diagram in FIG. 13, the traffic expected in the conventional sidelink communication is illustrated. That is, in the conventional sidelink communication, a packet arrival interval T of the packets from the upper layer to the physical layer and the packet size P of those packets are assumed to be always constant. In contrast, in the lower diagram in FIG. 13, an example of the traffic expected in the NR V2X communication is illustrated. That is, in the NR V2X communication, a jitter component α of the packet arrival interval T of the packets from the upper layer to the physical layer and a variation component β of the packet size P need to be taken into account. With such a background, in the NR V2X communication, even in a situation in which the effects of the jitter component α of the packet arrival interval T and the variation component β of the packet size P are conspicuous, it is required to perform resource management in such a way that sidelink communication becomes possible in a more suitable manner.

### (Existing sidelink resource allocation methods)

Given below is the explanation of the overview of the methods for sidelink resource allocation. As far as the methods for sidelink resource allocation are concerned, there are two methods, namely, a "Mode3 resource allocation" method in which the base station allocates resources to the sidelink, and a "Mode4 resource allocation" method in which the terminal device itself performs sensing and selects sidelink resources. In the application concerned, the focus is mainly given on the Mode4 resource allocation method.

### •Resource pool allocation

With the aim of performing the Mode4 resource allocation, resource pool allocation is performed in advance. The resource pool allocation is performed by, for example, the base station. Moreover, as another example, the resource pool allocation can be preconfigured. The terminal device performs sensing of the resources for sidelink communication from the allocated resource pool; selects the appropriate resources on its own; and performs communication.

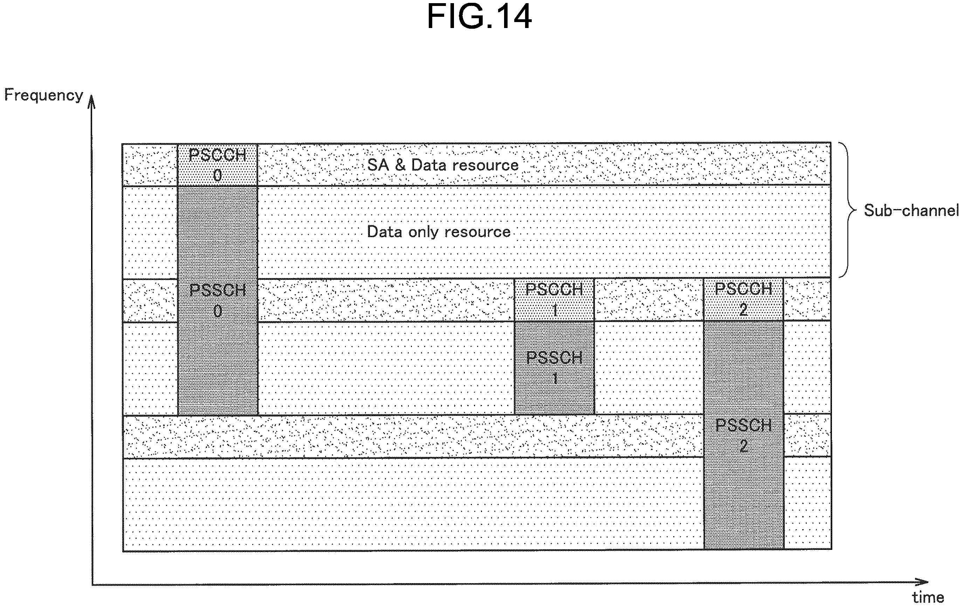

For example, FIG. 14 is a diagram illustrating an exemplary configuration of the resources (resource pool) allocated for sidelink communication. In FIG. 14 is illustrated an example about the case in which frequency division multiplexing (FDM) is applied. As illustrated in FIG. 14, the resource pool is partitioned into an SA (Scheduling Assignment) area and a data area that are used in the transmission of the PSCCH (Physical Sidelink Control Channel) and the PSSCH (Physical Sidelink Shared Channel), respectively. In the following explanation, although the focus is on the case in which FDM is applied as illustrated in FIG. 14, it does not necessarily limit the application of the technology according to the application concerned. As a specific example, even when time division multiplexing (TDM) is applied, the technology according to the application concerned as explained below is applicable. Meanwhile, when TDM is applied, the SA area and the data area become orthogonal to each other on the temporal axis.

### •Mode4 resource allocation

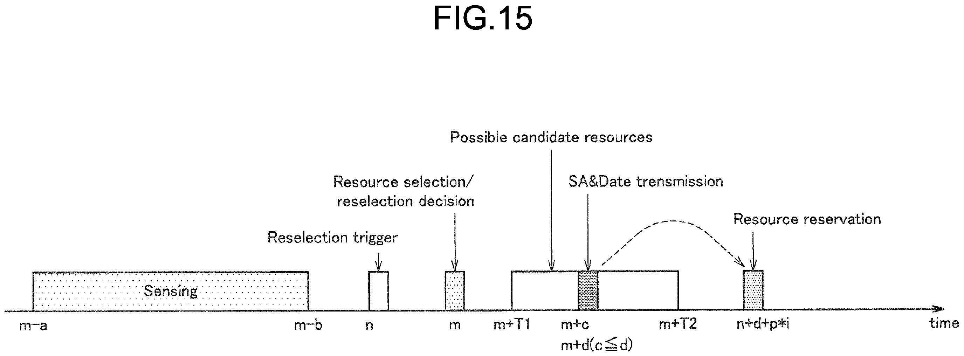

Explained below with reference to FIG. 15 is the overview of the Mode4 resource allocation. FIG. 15 is an explanatory diagram for explaining an example of the operation timeline in the case in which a terminal device transmits packets based on the Mode4 resource allocation. As illustrated in FIG. 15, the terminal device that has to transmit packets firstly performs sensing for the purpose of finding, from the resource pool, the resources to be used in transmitting those packets. Then, based on the result of sensing, the terminal device selects resources from the resource pool. Subsequently, the terminal device transmits the packets using the selected resources. Moreover, at that time, as may be necessary, the terminal device makes a reservation of the resources to be used in the subsequent packet transmission.

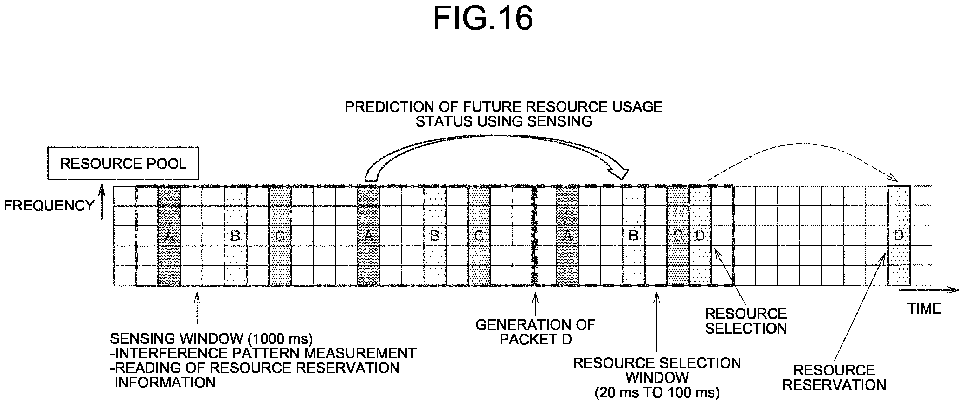

Explained below with reference to FIG. 16 is an example of the sensing operation. FIG. 16 is an explanatory diagram for explaining an example of the sensing operation performed for selecting resources from the resource pool.

More particularly, based on the measurement result of the interference patterns within a sensing window and based on the resource reservation status within the sensing window, the terminal device selects resources within a resource selection window or makes a reservation of future resources. As a specific example, in the example illustrated in FIG. 16, when a packet D is generated as the target packet for transmission, based on the result of sensing, the terminal device makes a prediction about the future usage status of resources, such as a prediction about the resources used in the future transmission of other packets A to C. Then, the terminal device refers to the prediction result and becomes able to select or make a reservation of such resources which are available for the transmission of the packet D, that is, such resources which are predicted to remain unused in the transmission of the other packets.

### (Technical issue)

As described above, in the conventional sidelink communication, since the packets have a fixed periodicity and a fixed packet size; at the time of making a reservation after performing packet selection, the terminal device need not take into account the jitters and the changes in the packet size. That is, in the conventional sidelink communication, after the elapse of the packet arrival interval T, a reservation of the resources can be made under the premise of transmitting resources of the same size as before.

On the other hand, in the NR V2X communication, the effects of the jitter component α of the packet arrival interval T and the variation component β of the packet size P need to be taken into account. Hence, sometimes it becomes difficult to implement the same resource allocation method as implemented in the conventional sidelink communication.

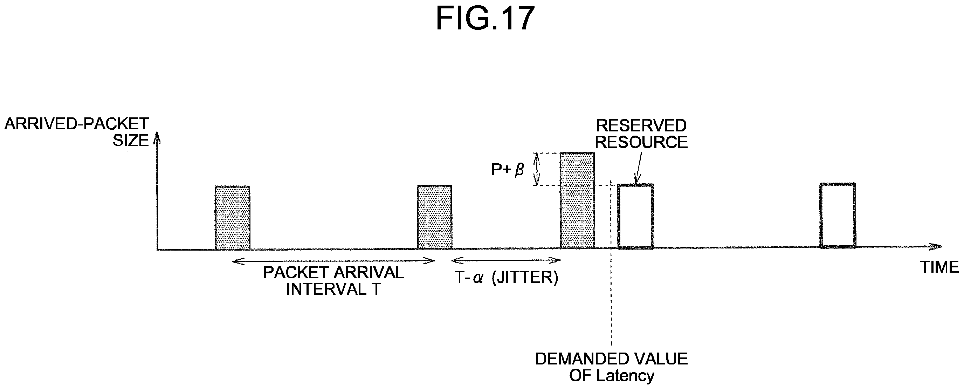

For example, FIG. 17 is an explanatory diagram for explaining a case in which the same resource allocation method as implemented in the conventional sidelink communication is implemented in the NR V2X communication. As illustrated in FIG. 17, when the resource allocation is performed in an identical manner to the conventional sidelink communication, in case jitters occur in the packet arrival interval T, sometimes it becomes difficult to satisfy the latency requirement. Moreover, if there is a change in the packet size P, it is also possible to think of problems such as resource deficiency and excessive resource reservation.

In view of such situation, in the application concerned, a technology is proposed that enables resource allocation in a more flexible manner during the inter-device communication including the V2X communication. More particularly, in the application concerned, a technology is proposed that is related to sidelink resource allocation and that can deal with the jitters in the packet arrival interval T and the changes in the packet size P in a more flexible manner.

### <3.2. Technical features>

As the technical features of the system according to the application concerned, the following explanation is given about an example of the technology that is related to sidelink resource allocation and that can deal with the jitters in the packet arrival interval T and the changes in the packet size P in a more flexible manner. More particularly, as an example of the technology meant for performing resource reservation, the explanation is given according to the following two approaches.
- Proactive-type resource reservation
- Reactive-type resource reservation

### <3.2.1. Proactive-type resource reservation>

Firstly, as the proactive-type resource reservation, the explanation is given about an example of the method for making a reservation of the resources in advance by taking into account the jitters in the packet arrival interval T and the changes in the packet size P.

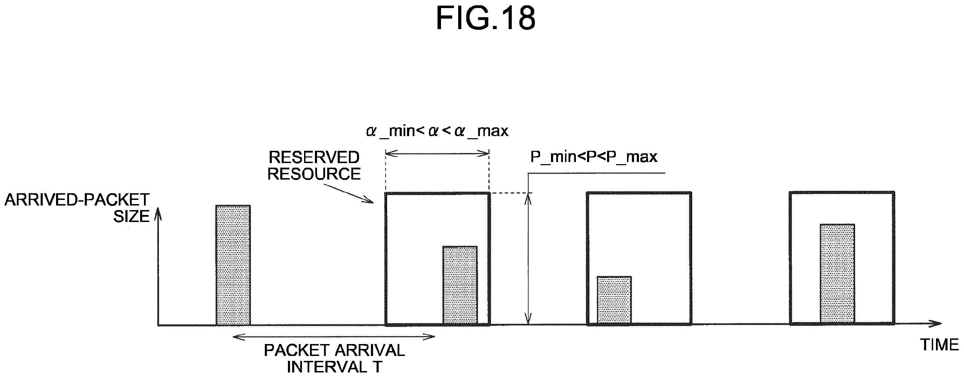

For example, FIG. 18 is an explanatory diagram for explaining the overview of the proactive-type resource reservation. As illustrated in FIG. 18, in the proactive-type resource reservation, the terminal device controls the range for making a reservation of the resources (hereinafter, also called the "range for reserved resources") by taking into account the jitter component α of the packet arrival interval T and the variation component β of the packet size P. More particularly, the terminal device performs control in such a way that the range in the temporal axis direction of the reserved resources becomes wider so as to allow mismatch in the packet arrival timings, that is, to allow the jitter component α of the packet arrival interval T (α_min<α<α_max). Moreover, the terminal device controls the size of the reserved resources (in other words, controls the range of the allowed sizes of the reserved resources) so as to allow the changes in the packet size P (P_min<P<P_max) corresponding to the variation component β. In the following explanation, unless specified otherwise, the "range for reserved resources" is assumed to include the range in the temporal axis direction of the reserved resources as well as the range of the allowed sizes of the reserved resources. Herein, the range for reserved resources represents an example of a "first-type range".

On the other hand, in the present method, wider the range for reserved resources, the more limited becomes the availability of resources for the other surrounding terminal devices. In other words, according to the range for reserved resources, the range for selectable resources becomes narrower for the other terminal devices. Due to such tradeoff, in the present method, it is desirable to set the range for reserved resources in a more appropriate manner. Herein, the range for selectable resources for the other terminal devices represents an example of a "second-type range".

In light of the points given above, as the details of the proactive-type resource reservation, the explanation is given about a reserved-resources setting method implemented by the terminal device that has to make a reservation, and about a resource selection method implemented by the other terminal devices based on the setting of the reserved resources. As far as the reserved-resource setting method is concerned, the explanation is given about two types of methods, namely, a method called "burst resource reservation" and a method called "partial resource reservation". In the following explanation, as a matter of convenience, the terminal device that makes a reservation of the resources is referred to as a "first-type terminal device", and a terminal device that selects resources based on that reservation is referred to as a "second-type terminal device". When the "first-type terminal device" and the "second-type terminal device" need not be particularly distinguished from each other, they are simply referred to as "terminal devices".

### (Burst resource reservation)

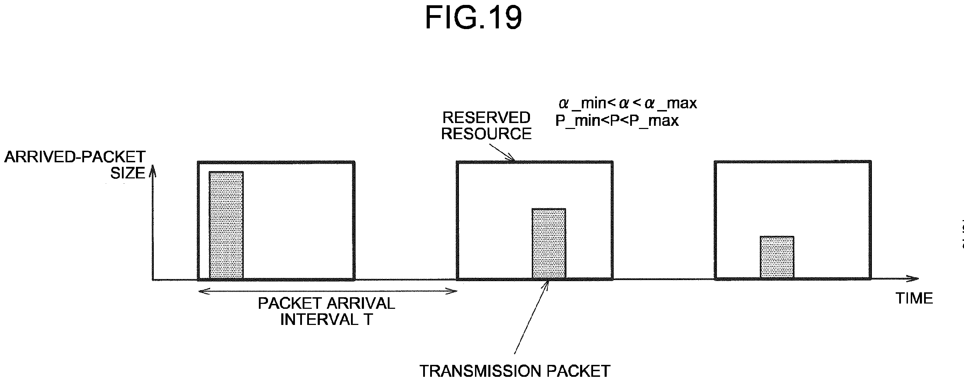

Firstly, the explanation is given about the burst resource reservation. For example, FIG. 19 is an explanatory diagram for explaining the overview of the burst resource reservation. As illustrated in FIG. 19, in the burst resource reservation, the first-type terminal device, which has to make a reservation, makes a reservation of resources in such a way that a range that is continuous in the temporal direction and the frequency direction and that is likely to be used in the subsequent packet transmission is secured as the range for reserved resources. At that time, the range for reserved resources is controlled according to the expected range for the jitter component α(α_min<α<α_max) and the expected range for the packet size P (P_min<P<P_max). Under such control, the first-type terminal device selects some of the resources within the secured range for reserved resources, and uses the selected resources in packet transmission. That is, within the secured range for reserved resources, basically, the first-type terminal can transmit packets freely.

The range for reserved resources can be controlled based on various conditions. For example, the range for reserved resources can be decided according to the jitter component α and according to the variation component β of the packet size P. More particularly, the range for reserved resources can be decided by combining one or more conditions given below.
- the minimum value α_min and the maximum value α_max of the jitter component α
- the average and the variance value of the jitter component α
- the minimum value β_min and the maximum value β_max of the variation component β of the packet size
- the average and the variance value of the variation component β of the packet size

As another example, the range for reserved resources can be decided according to the CBR (Channel Busy Ratio) measured in the used frequency band. As a more specific example, when the CBR is lower than the threshold value (i.e., in the uncongested state), the range for reserved resources can be controlled to become wider. On the other hand, when the CBR is higher than the threshold value (i.e., in the congested state), the range for reserved resources can be controlled to be more restricted.

As still another example, the range for reserved resources can be decided according to the priority of the packets. As a more specific example, regarding the packets having high priority, the range for reserved resources can be controlled to become wider. On the other hand, regarding the packets having low priority, the range for reserved resources can be controlled to be more restricted.

As still another example, the range for reserved resources can be decided according to the type of the operation service such as "sensor data sharing" or "automated driving". In that case, based on the information (such as a table) in which the range for reserved resources that is to be secured is defined for each service type, the first-type terminal device can decide on the range for reserved resources. Herein, the concerned information can be preconfigured in the terminal devices, or can be provided to the terminal devices from the base station.

As still another example, the range for reserved resources can be decided according to packet-type information such as eMBB (enhanced Mobile Broadband) or URLLC (Ultra Reliable Low Latency Communication). In that case, the first terminal device can decide on the range for reserved resources based on the information (such as a table) in which the range for reserved resources that is to be secured is defined for each type of packets. Herein, the concerned information can be preconfigured in the terminal devices, or can be provided to the terminal devices from the base station.

As still another example, the range for reserved resources can be decided according to the position information of the terminal devices. As a more specific example, when an automobile (equivalent to a terminal device) is running on an expressway, since sometimes there is a decrease in the jitters, the range for reserved resources can be controlled to be more restricted. Alternatively, when an automobile (equivalent to a terminal device) is running around a traffic intersection, since sometimes there is an increase in the jitters, the range for reserved resources can be controlled to become wider. In such cases, the first-type terminal device can decide on the range for reserved resources based on the information (such as a table) in which the range for reserved resources that is to be secured is defined for each set of position information. Herein, the concerned information can be preconfigured in the terminal devices, or can be provided to the terminal devices from the base station.

Meanwhile, the range for reserved resources can be set to include a plurality of partial ranges having mutually different levels set therein from among a plurality of levels. In the following explanation, the levels set in the partial ranges are also referred to as "reservation levels". In other words, the range for reserved resources can be partitioned into a plurality of partial ranges according to the reservation levels. Moreover, a partial range corresponding to a reservation level is simply referred to as a "range corresponding to a reservation level". Herein, a range corresponding to a reservation level represents an example of a "third-type range".

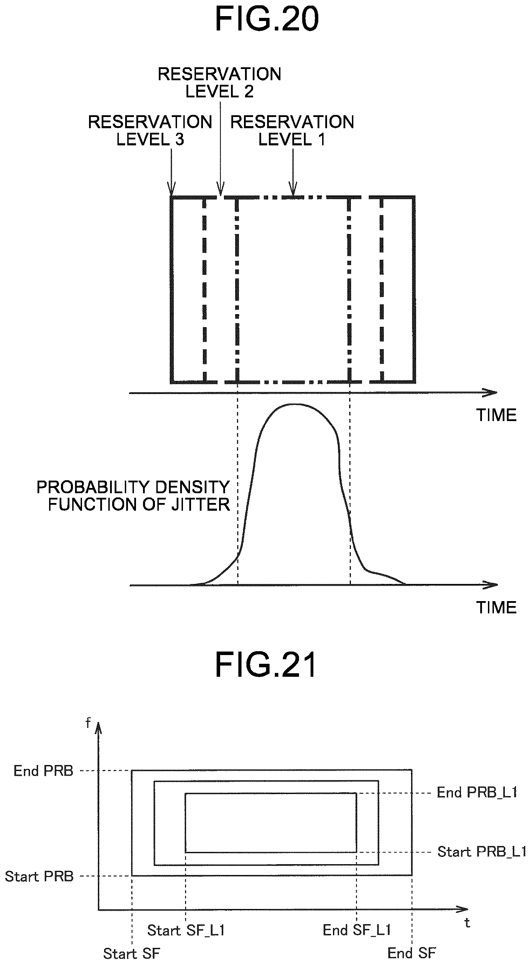

For example, FIG. 20 is a diagram illustrating an example in which the range for reserved resources is partitioned into a plurality of ranges according to the reservation levels. More particularly, in the example illustrated in FIG. 20, the reservation levels (i.e., reservation levels 1 to 3) are set according to the average and the variance value of a probability density function of the jitter component, and the range for reserved resources is partitioned into a plurality of ranges according to the reservation levels (i.e., into ranges corresponding to the reservation levels 1 to 3). In the example illustrated in FIG. 20, the range corresponding to the reservation level 1 represents the range in which packet transmission is highly likely to be performed. In contrast, the range corresponding to the reservation level 3 represents the range in which packet transmission is less likely to be performed.

Meanwhile, regarding the information about the conditions (for example, the partition count, the partition size, the upper limit of the partition count, and the upper limit of the partition size) for partitioning the range for reserved resources into a plurality of ranges according to the reservation levels; the information can be notified to the terminal device in advance from the base station or can be decided by the terminal device on its own.

Alternatively, for each reservation level, the conditions (constraints) related to the use of the range corresponding to that reservation level can be set on an individual basis. As a specific example, for each reservation level, the conditions can be set in such a way that the use of the range corresponding to that reservation level is classified as either exclusive use or inclusive use. More particularly, when the exclusive use is set for a reservation level, the usage conditions of the range corresponding to that reservation level are restricted in such a way that the range is exclusively used by the first-type terminal device that made the reservation. On the other hand, when the inclusive use is set for a reservation level, the usage conditions of the range corresponding to that reservation level are mitigated in such a way that, even when a reservation is made by a particular first-type terminal device, it is allowed to have overlapping of the ranges in which other terminal devices (i.e., the second-type terminal devices) can select resources. For example, in Table 1 given below, an example of the correspondence relationship between the reservation levels and the classification thereof is illustrated.

**Table 1**

| Reservation level | Reservation level classification |
|---|---|
| 1 | Exclusive |
| 2 | Inclusive |
| 3 | Inclusive |

Meanwhile, when the first-type terminal device, which has already made a reservation of the resources, sets reservation levels in regard to the use of the secured range for reserved resources (i.e., in regard to the selection of resources from the secured range for reserved resources) (i.e., when the concerned first-type terminal device partitions the secured range for reserved resources into ranges corresponding to the reservation levels), it can notify the second-type terminal devices about the information regarding the ranges corresponding to the reservation levels. In the following explanation, as a matter of convenience, the information about the ranges corresponding to the reservation levels is also referred to as "reservation level information". Moreover, in this case, the first-type terminal device, which has already made a reservation of the resources, can notify the second-type terminal devices about the reservation level information using, for example, SCI (Sidelink Control Information). That is, in this case, the first-type terminal device, which has already made a reservation of the resources, can notify the second-type terminal devices about the information regarding the secured range for reserved resources and about the reservation level information corresponding to the reservation levels set in regard to the use of the secured range for reserved resources.

Given below is the explanation of an example of the method by which the first-type terminal device sets the ranges according to the reservation levels. For example, based on the conditions specified in advance by the base station, the first-type terminal device partitions at least some part of the secured range for reserved resources, and thus can set the ranges according to the reservation levels. For example, in Table 2 given below, exemplary conditions related to the setting of the ranges according to the reservation levels are illustrated.

**Table 2: Example of conditions related to setting of ranges according to reservation levels**

| Maximum jitters in packet | Maximum size variation of packet | Reservation level | Size of reserved resource (e.g., defined as area of time×frequency) |
|---|---|---|---|
| 2 ms | 10 kbyte | 3 | 10 resource blocks |
| 5 ms | 50 kbyte | 2 | 20 resource blocks |
| 10 ms | 100 kbyte | 1 | 30 resource blocks |

For example, when information (such as a table) in which conditions as illustrated in Table 2 are defined is notified from the base station, the first-type terminal device compares the information of the packets to be transmitted (for example, the jitter amount of the packets and the variation amount in the packet size) with the conditions, and thus can set the ranges according to the reservation levels.

Alternatively, regarding the information about the conditions for setting the ranges according to the reservation levels (for example, the conditions illustrated in Table 2), the information can be preconfigured in the terminal devices.

Subsequently, regarding a decision method for deciding the area for resource reservation (i.e., deciding the range for reserved resources), an example is explained below along with explaining a method for notifying the information about the area decided according to the decision method.

For example, FIG. 21 is an explanatory diagram for explaining the overview of an exemplary decision method for deciding the area for resource reservation. In the example illustrated in FIG. 21, an area for resource reservation (i.e., the range for reserved resources) is set as the area in the frequency direction and the temporal direction, and some part of that area is set as partial areas corresponding to the reservation levels (i.e., set as the ranges corresponding to the reservation levels). With reference to FIG. 21, "Start SF" and "End SF" represent the start position and the end position, respectively, in the temporal direction of the range for reserved resources. Moreover, "Start PRB" and "End PRB" represent the start position and the end position, respectively, in the frequency direction of the range for reserved resources. Furthermore, "Start SF_Li" and "End SF_Li" represent the start position and the end position in the temporal direction of the range corresponding to a reservation level i (i=1, 2, ..., Max_level). As a specific example, "Start SF_L1" and "End SF_L1" represent the start position and the end position in the temporal direction of the range corresponding to the reservation level 1. Moreover, "Start PRB_Li" and "End PRB_Li" represent the start position and the end position in the frequency direction of the range corresponding to the reservation level i. As a specific example, "Start PRB_L1" and "End PRB_L1" represent the start position and the end position in the frequency direction of the range corresponding to the reservation level i.

In the example illustrated in FIG. 21, as the information about the range for reserved resources or about the ranges corresponding to the reservation levels, the first-type terminal device can notify the second-type terminal devices about the information that enables identification of the target range.

For example, as the information enabling identification of the target range, the first-type terminal device can notify the second-type terminal devices about the start position and the end position of that range in the temporal direction and the frequency direction. As a specific example, as the information enabling identification of the range corresponding to the reservation level i (i=1, 2, ..., Max_level), the first-type terminal device can notify the second-type terminal devices about "Start SF_Li", "End SF_Li", "Start PRB_Li", and "End PRB_Li".

As another example, as the information enabling identification of the target range, the first-type terminal device can notify the second-type terminal devices about the start position and the width of that range in the temporal direction and the frequency direction. For example, assume that "number SF_Li" represents the width (in other words, the resource count) in the temporal direction of the range corresponding to the reservation level i (i=1, 2, ..., Max_level), and assume that "number PRB_Li" represents the width (in other words, the resource count) in the frequency direction of that range. In that case, as the information enabling identification of the range corresponding to the reservation level i, the first-type terminal device can notify the second-type terminal devices about "Start SF_Li", "number SF_Li", "Start PRB_Li", and "number PRB_Li".

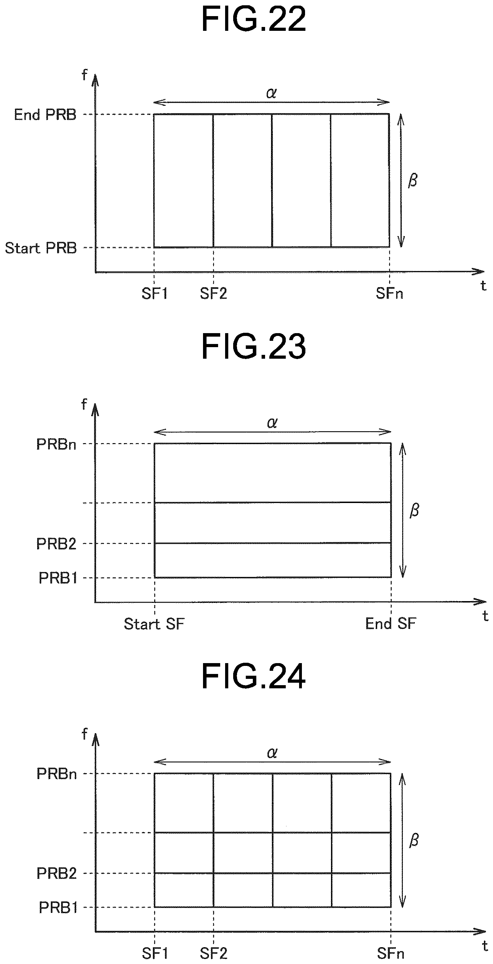

FIG. 22 is an explanatory diagram for explaining the overview of another example of the decision method for deciding the area for resource reservation. In the example illustrated in FIG. 22, the area for resource reservation (i.e., the range for reserved resources) is partitioned into a plurality of partial areas in the temporal direction. With reference to FIG. 22, "SF1", "SF2", ..., and "SFn" represent the information about the first partial area, the second partial area, ..., and the n-th partial area, respectively, from among a plurality of partial areas obtained by partitioning the range for reserved resources in the temporal direction. As a specific example, "SFi" represents the information about the i-th partial area and, for example, can contain information enabling identification of that partial area, such as the start position (Start SF_Li) and the end position (End SF_Li) in the temporal direction of that partial area.

In the example illustrated in FIG. 22, the first-type terminal device can notify the second-type terminal devices about the information regarding the partial areas obtained by partitioning the range for reserved resources in the temporal direction. As a specific example, the first-type terminal device can notify the second-type terminal devices about "SFi" as the temporal direction information about the i-th partial area from among a plurality of partial areas obtained by partitioning the range for reserved resources in the temporal direction. In that case, as far as the frequency direction information is concerned, the frequency direction information (for example, "Start PRB" and "End PRB") enabling identification of the range for reserved resources can be notified.

FIG. 23 is an explanatory diagram for explaining the overview of still another example of the decision method for deciding the area for resource reservation. In the example illustrated in FIG. 23, the area for resource reservation (i.e., the range for reserved resources) is partitioned into a plurality of partial areas in the frequency direction. With reference to FIG. 23, "PRB1", "PRB2", ..., and "PRBn" represent the information about the first partial area, the second partial area, ..., and the n-th partial area, respectively, from among a plurality of partial areas obtained by partitioning the range for reserved resources. As a specific example, "PRBi" represents the information about the i-th partial area and, for example, can contain information enabling identification of that partial area, such as the start position (Start PRB_Li) and the end position (End PRB_Li) in the frequency direction of that partial area.

In the example illustrated in FIG. 23, the first-type terminal device can notify the second-type terminal devices about the information regarding the partial areas obtained by partitioning the range for reserved resources in the frequency direction. As a specific example, the first-type terminal device can notify the second-type terminal devices about "PRBi" as the frequency direction information about the i-th partial area from among a plurality of partial areas obtained by partitioning the range for reserved resources in the frequency direction. In that case, as far as the temporal direction information is concerned, the temporal direction information (for example, "Start SF" and "End SF") enabling identification of the range for reserved resources can be notified.

Meanwhile, in the example illustrated in FIG. 23, the partial areas obtained by partitioning the range for reserved resources in the frequency direction can have different sizes in the frequency direction. Moreover, some partial areas can be included in other partial areas.

FIG. 24 is an explanatory diagram for explaining the overview of still another example of the decision method for deciding the area for resource reservation. In the example illustrated in FIG. 24, the area for resource reservation (i.e., the range for reserved resources) is partitioned into a plurality of partial areas in the temporal direction as well as the frequency direction. With reference to FIG. 24, "SF1", "SF2", ..., and "SFn" are identical to "SF1", "SF2", ..., and "SFn" illustrated in the example in FIG. 22. Moreover, with reference to FIG. 24, "PRB1", "PRB2", ..., and "PRBn" are identical to "PRB1", "PRB2", ..., and "PRBn" illustrated in the example in FIG. 23.

In the example illustrated in FIG. 24, the first-type terminal device can notify the second-type terminal devices about the information regarding the partial areas obtained by partitioning the range for reserved resources in the temporal direction and the frequency direction. As a specific example, the first-type terminal device can notify the second-type terminal devices about "SFi" as the information about the i-th partial area in the temporal direction from among the information about the partial areas obtained by partitioning the range for reserved resources. In an identical manner, the first-type terminal device can notify the second-type terminal devices about "PRBj" as the information about the j-th partial area in the frequency direction from among the information about the partial areas obtained by partitioning the range for reserved resources.

Meanwhile, in the example illustrated in FIG. 24, the partial areas obtained by partitioning the range for reserved resources in the temporal direction and the frequency direction can have different sizes in the frequency direction. Moreover, some partial areas can be included in other partial areas.

Given below is the explanation of an example of the operation for selecting resources as performed by a second-type terminal device that, upon being notified about the information regarding the range for reserved resources and the information about the reservation levels, takes into account the reservation levels.

For example, at the time of selecting the resources to be used in packet transmission, the second-type terminal device can select the resources by taking into account the notified reservation levels.

As a specific example, at the time of resource selection, from among the partial ranges included in the notified range for reserved resources (i.e., from among the ranges corresponding to the reservation levels), the second-type terminal device determines that the resources included in the ranges corresponding to some of the reservation levels are already-reserved resources and can exclude those resources from the candidate resources for selection. That is, regarding the resources included in the ranges corresponding to the remaining reservation levels other than the excluded reservation levels, the second-type terminal device can determine that those resources are the available resources.

As a specific example, the second-type terminal device can determine that the resources included in the ranges corresponding to the reservation levels equal to or higher than a predetermined threshold value are already-reserved resources. As another example, the second-type terminal device can determine that the resources included in the ranges corresponding to the reservation levels equal to or lower than a predetermined threshold value are already-reserved resources. That is, the priority among the reservation levels can be appropriately varied according to the setting method of the reservation levels and the use case.

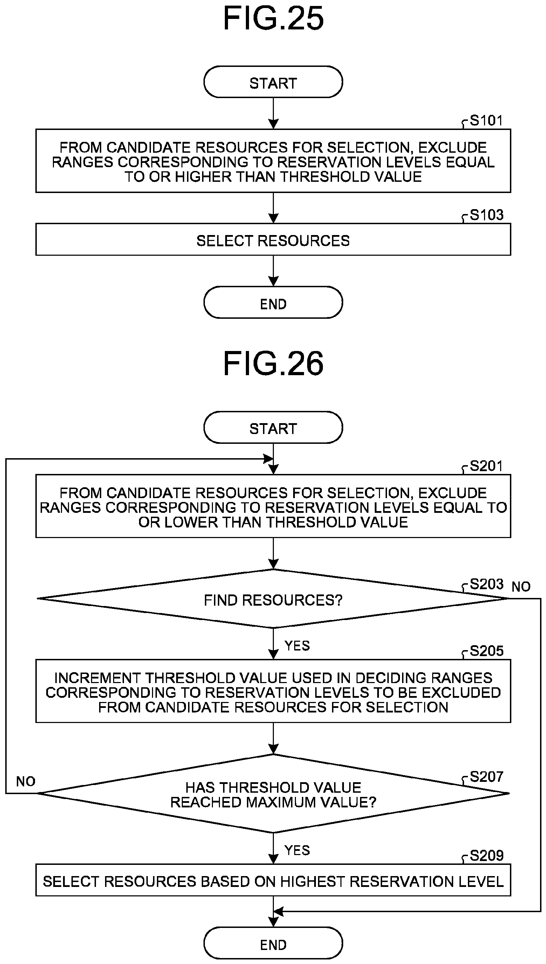

For example, FIG. 25 is a flowchart for explaining an example of the flow of operations performed at the time of selecting the resources according to the reservation levels.

In the example illustrated in FIG. 25, the terminal device 200 (the determining unit 245) identifies, from among the ranges corresponding to the reservation levels and included in the range for reserved resources, the ranges corresponding to the reservation levels that are equal to or higher than a threshold value. Then, the terminal device 200 (the communication control unit 241) excludes, from the candidate resources for selection for use in packet transmission, the identified ranges corresponding to the reservation levels equal to or higher than the threshold values (S101). That is, according to the range for reserved resources and the reservation levels, the terminal device 200 restricts the range for resource selection. Then, the terminal device 200 (the communication control unit 241) determines that the resources included in the remaining ranges other than the excluded ranges (i.e., other than the ranges corresponding to the reservation levels equal to or higher than the threshold value) are the available resources, and accordingly selects resources for packet transmission (S103).

Meanwhile, regarding the information about the reservation levels excluded from the candidate resources for selection (in other words, the information about the ranges corresponding to the reservation levels), for example, the information can be notified from the base station to the terminal devices or can be preconfigured in the terminal devices.

Meanwhile, the second-type terminal device can decide on the reservation levels to be excluded from the candidate resources for selection (in other words, the ranges corresponding to the reservation levels) based on the priority of the packets to be transmitted by itself and based on the priority of the packets to be transmitted by the other terminal devices (for example, the first-type terminal device).

As a specific example, based on the information about the priority of the packets to be transmitted by the first-type terminal device and based on at least either the information about the priority of the packets being attempted to be transmitted by the second-type terminal device or the CBR (Channel Busy Ratio) information, the second-type terminal device can decide on the reservation levels to be excluded from the candidate resources for selection. Herein, the information about the priority of the packets to be transmitted by the first-type terminal device represents an example of "first-type priority information". Moreover, the information about the priority of the packets to be transmitted by the second-type terminal device represents an example of "second-type priority information".

As a specific example, under the condition that, lower the level of priority, the more important is the communication; assume that the first-type communication terminal is transmitting packets at priority 4 and that the second-type communication terminal is attempting to transmit packets at priority 1. Moreover, assume that the first-type communication terminal defines that lower the reservation level, the higher is the priority for exclusive use; and then specifies the ranges corresponding to the reservation levels 1 to 4 and makes a reservation. In such a case, the second-type communication terminal can exclude the resources included in the range corresponding to the reservation level 1 from the candidate resources for selection, and can determine that the resources included in the ranges corresponding to the reservation levels 2 to 4 are the available resources.

On the other hand, in the example explained above, if the packets to be transmitted by the first-type communication terminal have higher priority than the packets to be transmitted by the second-type communication terminal, the control is performed to ensure that the reserved resources of the first-type communication terminal are secured to the extent possible. As a specific example, the second-type terminal device excludes, from the candidate resources for selection, the resources included in the ranges corresponding to all of the reservation levels 1 to 4, and then selects resources to be used in packet transmission.

Moreover, in the example explained above, the CBR can also be taken into account. As a specific example, assume that, after excluding, from the candidate resources for selection, the resources included in the ranges corresponding to all of the reservation levels 1 to 4 as explained above; the second-type terminal device has a higher CBR than a threshold value (i.e., has an extremely congested band frequency). In that case, the second-type terminal device can modify the target reservation levels for exclusion from the "reservation levels 1 to 4" to the "reservation levels 1 to 3". In this way, in the tight resource conditions, the second-type terminal device can perform control to further mitigate the CBR. On the other hand, when the CBR is lower than the threshold value, the second-type terminal device can perform control in such a way that there are more candidate resources for selection in the range outside of the range for reserved resources set by the first-type communication terminal.

As another example, from the first-type terminal device, the second-type terminal device can receive the setting result about the ranges corresponding to the reservation levels, and can select resources in a stepwise manner based on those reservation levels.

For example, FIG. 26 is a flowchart for explaining another example of the flow of operations performed at the time of selecting the resources according to the reservation levels. In FIG. 26 is illustrated an example of the operations performed by the second-type terminal device.

In the example illustrated in FIG. 26, from among the ranges corresponding to the reservation levels included in the range for reserved resources, the terminal device 200 (the determining unit 245) identifies the ranges corresponding to the reservation levels equal to or lower than a threshold value. Moreover, the terminal device 200 (the communication control unit 241) excludes the ranges corresponding to the identified reservation levels from the candidate resources for selection for use in packet transmission (S201). That is, the terminal device 200 restricts the range for resource selection according to the range for reserved resources and the reservation levels.

Then, the terminal device 200 (the determining unit 243) searches the remaining ranges, other than the excluded ranges, for the available resources for packet transmission (S203). If the resources are found (YES at S203), then the terminal device 200 (the communication control unit 241) selects those resources as the resources to be used in packet transmission.

On the other hand, if resources are not found (NO at S203), then the terminal device 200 (the determining unit 245) adds (increments) the threshold value used in deciding the ranges corresponding to the reservation levels to be excluded from the candidate resources for selection for use in packet transmission (S205). Then, if the threshold value has not yet reached the maximum value (NO at S207), the terminal device 200 again performs the operations performed from S201 to S205.

When the threshold value reaches the maximum value (YES at S207), the terminal device 200 (the communication control unit 241) selects resources based on the highest reservation level (S209).

As described above, when the second-type terminal device is unsuccessful in selecting resources with reference to a particular reservation level, it updates the reference reservation level for resource selection and attempts to select resources with reference to the updated reservation level. In this way, the second-type terminal device can sequentially update the reference reservation level for resource selection, and can search for or select the available resources for packet transmission. In that case too, based on the information about the priority of the packets to be transmitted from the first-type terminal device and based on at least either the information about the priority of the packets being attempted to be transmitted by the second-type terminal device or the CBR information, the second-type terminal device can decide on the reservation levels to be excluded from the candidate resources for selection.

Meanwhile, the first-type terminal device can make a burst resource reservation with respect to each of a plurality of different frequency carriers. As a specific example, regarding a frequency carrier A that is normally used, the first-type terminal device can make a reservation of resources having a periodic nature and a constant packet size; and then can make a burst resource reservation in a different frequency carrier B for the backup purposes. Subsequently, if it is determined that the reserved resources are difficult to use in the frequency carrier A, the first-type terminal device can select resources in the frequency carrier B. Meanwhile, the resource reservation using a plurality of different frequency carriers can be implemented regarding partial resource reservation too (described below in detail). As a specific example, in the example explained above, in the frequency carrier B, the partial resource reservation can be implemented in place of the burst resource reservation.

Till now, the explanation with reference to FIGS. 19 to 26 was given about the burst resource reservation.

### (Partial resource reservation)

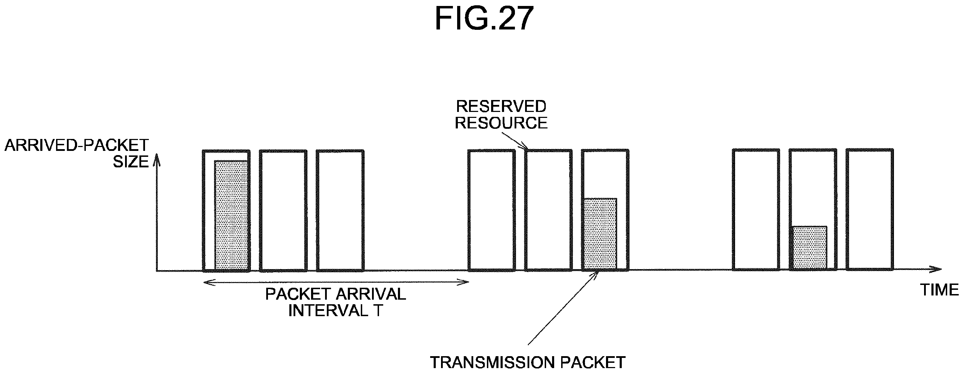

Given below is the explanation about the partial resource reservation. For example, FIG. 27 is an explanatory diagram for explaining the overview of the partial resource reservation. As illustrated in FIG. 27, the partial resource reservation differs from the burst resource reservation in the way that the first-terminal device, which has to make a reservation, makes a reservation in such way that a plurality of ranges set to be mutually separated in chronological order is secured as the ranges for reserved resources. In the following explanation, as a matter of convenience, each of a plurality of ranges secured to be mutually separated in chronological order is also referred to as a "partial resource".

In the partial resource reservation, the distance among the partial resources can be decided according to the maximum permissible delay amount of the packets and the maximum jitter amount of the packets. That is, even in the case of having the maximum jitter amount; it is desirable that the partial resources are placed in such a way that the maximum permissible delay amount of the packets is not exceeded.

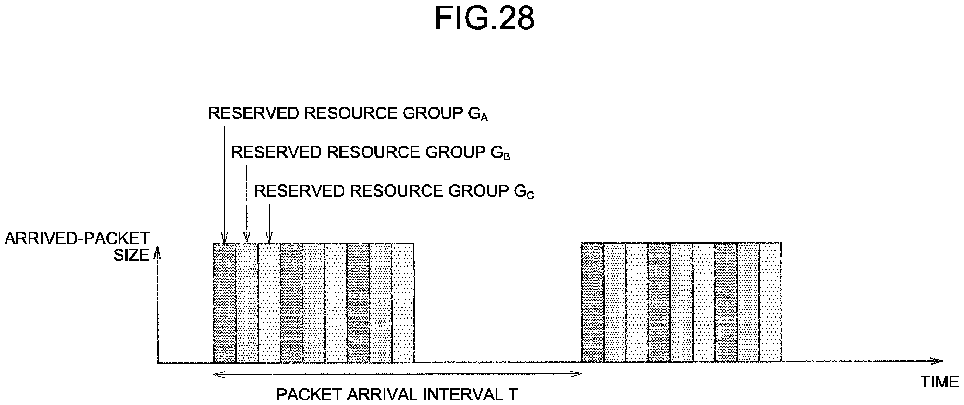

Moreover, in the partial resource reservation, reserved-resource groups can be defined. For example, FIG. 28 is an explanatory diagram for explaining the overview of one mode of the partial resource reservation. In FIG. 28 is illustrated an example in which reserved-resource groups are defined. In the example illustrated in FIG. 28, reserved-resource groups G_{A} to G_{C} are set as three groups each of which includes a plurality of partial resources.

A reserved-resource group can be defined to be orthogonal to other reserved-resource groups in the time-frequency direction, or can be defined to be non-orthogonal but having partial overlapping with other reserved-resource groups. Regarding the groups of partial resources set as reserved-resource groups, the definition can be notified to the terminal devices from the base station using system information. Moreover, the reserved-resource groups can be defined in such a way that resources having a different size are selectable in each reserved-resource group.

Furthermore, the reserved-resource groups can be allocated to groups of terminal devices (hereinafter, also referred to as "terminal device groups"). In that case, for example, a plurality of reserved-resource groups can be allocated to mutually different terminal device groups. Meanwhile, as another example, the reserved-resource group to be selected can be decided based on the minimum value or the maximum value of the size and the jitters of the transmission packets. Moreover, as still another example, the reserved-resource group to be selected can be decided according to the priority of the transmission packets.

The first-type terminal device can select a reserved-resource group according to the jitter amount of the transmission packets. For example, assume that three reserved-resource groups G_{A}, G_{B}, and G_{C} are defined and are set in such a way the manageable maximum jitter amount goes on decreasing in the reserved-resource groups G_{A}, G_{B}, and G_{C} in that order. In that case, at the time of transmitting packets having relatively more jitters, the first-type terminal device can select the reserved-resource group G_{A} having the greater manageable jitter amount.

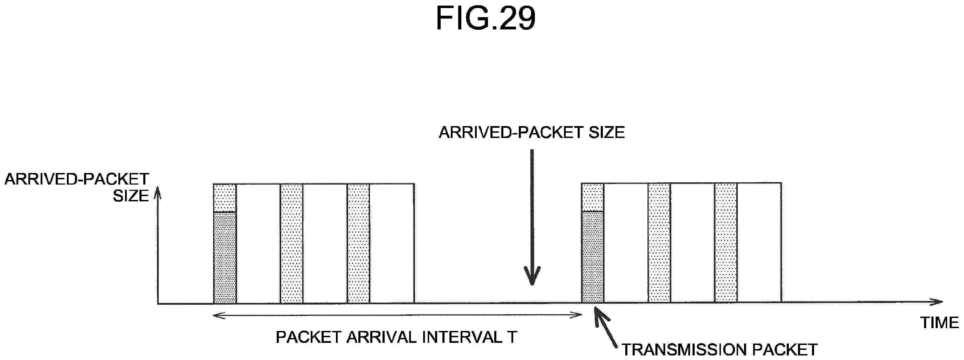

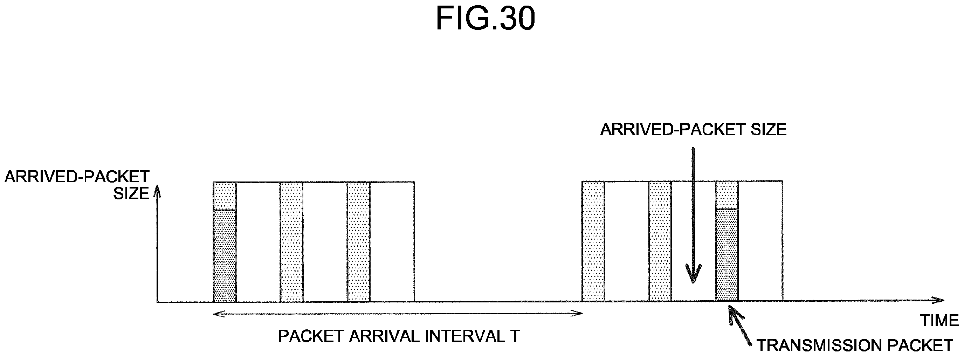

Explained below with reference to FIGS. 29 and 30 are examples of the operations related to packet transmission when the partial resource reservation is implemented. FIGS. 29 and 30 are explanatory diagrams for explaining examples of the operations related to packet transmission when the partial resource reservation is implemented.

The first-type terminal device decides which resources are to be used from among a plurality of partial resources reserved in advance. The resources for use are decided, from the arrival of packets from the upper layer to the physical layer, by selecting one or more partial resources present within the range satisfying the packet latency requirement.

As a specific example, in FIG. 29 is illustrated an example in which packets from the upper layer to the physical layer arrive before the elapse of the expected packet arrival interval T. In that case, the target packets for transmission are transmitted based on the first partial resource (i.e. the partial resource having the earliest timing). Meanwhile, in this example, if the first partial resource does not satisfy the latency requirement, the first-type terminal device can perform a resource selection procedure as an event trigger message, and reselect the resources.

As another example, in FIG. 30 is illustrated a case in which the packets arrive from the upper layer to the physical layer arrive at or after the second partial resource. In that case, the third partial resource is selected for the transmission of the target packets for transmission. Meanwhile, if the packets from the upper layer to the physical layer arrive at or after the third partial resource; since no partial resource is present that can satisfy the latency requirement, the first-type terminal device can perform a resource selection procedure as an event trigger message, and reselect the resources in an identical manner to the example illustrated in FIG. 29.

Meanwhile, even if the reserved-resource groups are defined in such a way that resources having a different size are selectable in each reserved-resource group; when the priority is given to the latency requirement, the resources other than the reserved-resource groups allocated in advance may also be used.

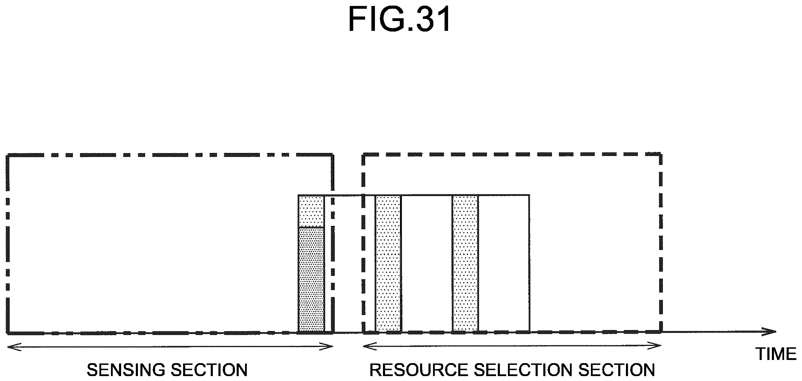

Given below is the explanation of the operations in which, when the partial resource reservation is implemented, the first-type terminal device that has made a reservation performs sensing and transmits packets. When the first-type terminal device performs resource reservation and resource selection based on the partial resource reservation and then transmits packets, it can identify the available resources based on the conditions explained below. For example, FIG. 31 is an explanatory diagram for explaining the overview of the operations of the terminal device that performs sensing when the partial resource reservation is implemented.

In the example illustrated in FIG. 31, some part of a single period section of a reserved-resource group is partially overlapping with the sensing section. In such a case, of the sensing section, in the period of time overlapping with the single period section of the reserved-resource group, the first-type terminal device can identify the resources to be used in packet transmission. For example, in the example illustrated in FIG. 31, the section of the first partial resource, from among a plurality of partial resources, is overlapping with the end part of the sensing section. In that case, the first-type terminal device can transmit packets based on the first partial resource.

Meanwhile, in the example given above, the resource to be used in packet transmission is already selected in the sensing section. Hence, for example, there are times when the remaining partial resources overlapping with the resource selection section (i.e., the reserved resources) are not used in the packet transmission performed by the first-type terminal device. In such a case, the partial resources (reserved resources) included in that resource selection section can be treated as empty resources and, for example, can be used as candidate resources for selection for packet transmission by other terminal devices. However, it is also possible to think of a case in which the first-type terminal device uses a plurality of partial resources in packet transmission. In view of such a situation, for example, the first-type terminal device can notify the surrounding terminal devices (for example, the second-type terminal devices) about the information regarding the number of partial resources used by the first-type terminal device. As another example, the first-type terminal device can notify the surrounding terminal devices about the information enabling identification of the partial resources not used by the first-type terminal device. Herein, the notification can be performed using, for example, the SCI.

Till now, the explanation with reference to FIGS. 27 to 31 was given about the partial resource reservation.

### <3.2.2. Reactive-type resource reservation»

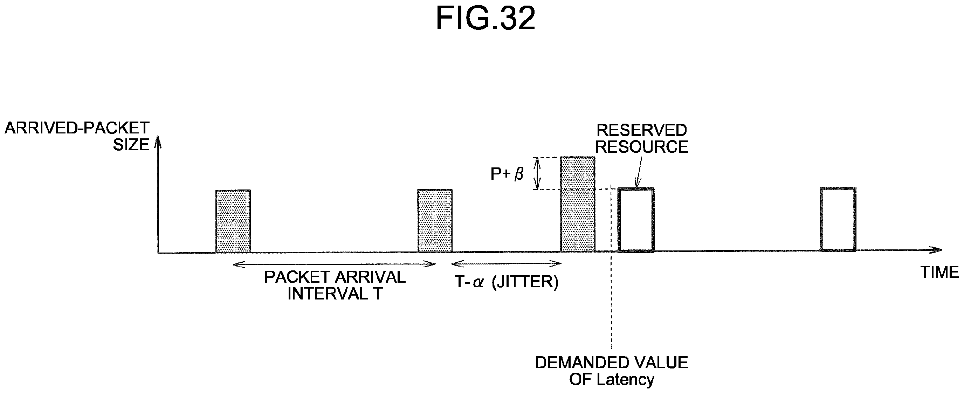

Given below is the explanation about the reactive-type resource reservation. In the reactive-type resource reservation, in an identical manner to the conventional resource reservation method, a terminal device makes a reservation of the resources in such a way that the period and the packet size are constant; but, if any problem occurs at the time of packet transmission, selects different resources or makes a reservation of different resources. For example, FIG. 32 is an explanatory diagram for explaining the overview of the reactive-type resource reservation.

As illustrated in FIG. 32, whether or not a problem has occurred at the time of packet transmission is determined, for example, based on whether or not the jitter amount has exceeded the latency requirement or based on whether or not the size of the scheduled packets for transmission has exceeded the size of the reserved resources. As a more specific example, the determination can be performed, for example, based on whether or not the maximum permissible delay amount can be satisfied, whether or not the required resources can be secured, whether or not the required QoS can be satisfied, and whether or not the required transmission power can be set up.

Given below is the explanation of the examples of the response to a case in which a problem is determined to have occurred at the time of packet transmission.

### (Invocation of resource selection trigger)

For example, when a problem is determined to have occurred at the time of packet transmission, a terminal device can invoke a resource selection trigger. More particularly, the terminal device searches for the resources satisfying the latency requirement or for the resources satisfying the excess data size. More particularly, at the point of time of determining that a problem would occur, the terminal device searches for resources using the result of background sensing.

Then, the terminal device selects resources. As a specific example, the terminal device can select additional resources. At that time, the terminal device can select additional resources so as to compensate for the shortfall in the size occurring in the case of using the already-reserved resources for packet transmission. Moreover, at the sensing stage, the terminal device can exclude the reserved resources from the candidate resources for selection. Herein, the reserved resources represent an example of "first-type resources". Moreover, the resources that are selected separately from the reserved resources (i.e., the resources that are additionally selected) represent an example of "second-type resources".

As another example, the terminal device can reselect the resources. More particularly, the terminal device can reselect the resources equivalent to the size required for packet transmission. In that case, for example, the terminal device can define the already-reserved resources as the candidate resources for selection, and then perform the operation for resource reselection involving those candidate resources too.

Moreover, after selecting the additional resources, the terminal device transmits data (data corresponding to the scheduled packets for transmission) using the selected resources. At that time, when a plurality of resources is used for data transmission; using the SCI of a packet (for example, the initial packet) transmitted using one of the resources, the area in each of a plurality of resources which corresponds to the data transmitted using that resource can be instructed. Moreover, regarding each of a plurality of resources, the area in that resource which corresponds to the data transmitted using that resource can be instructed in the SCI of the packets transmitted using that resource. In that case, in order to enable decoding of the data, the other communication terminals can be notified about the information indicating which packets should be merged.

### (Use of existing reserved resources to extent possible)

As another example, when a problem is determined to have occurred at the time of packet transmission, the terminal device can transmit data using the existing reserved resources to the extent possible. In that case, for example, the terminal device partitions the target data for transmission into two or more packets. Meanwhile, in that case, since the target data is partitioned into two or more packets, the information for merging the data transmitted in the packets can be notified to the other terminal devices using the SCI. Herein, the information for merging the data transmitted in the packets represents an example of "control information" that associates the data transmitted using mutually different resources (i.e., the data transmitted using mutually different packets).

Meanwhile, in the resource selection performed next time onward, since it is possible to think of a case in which there is deficit in the resource size; the terminal device can, for example, invoke the resource reselection trigger. As another example, in addition to the already-reserved resources, the terminal device can select additional resources for transmitting the shortfall data.

### (Stopping repeat transmission, and transmitting different packets)

As still another example, when a problem is determined to have occurred at the time of packet transmission, the terminal device can stop repeat transmission and transmit different packets. In that case, the terminal device notifies the other terminal devices representing the packet destinations about the fact that different packets have been transmitted without performing repeat transmission. More particularly, for example, the terminal device can use the SCI to notify the other terminal devices about the fact that the target packets are not the packets of repeat transmission.

Moreover, in the case of stopping repeat transmission and transmitting different packets, the terminal device can add, to the SCI of the initial packet arriving in the other terminal devices representing the packet destinations, information indicating that the data of the subsequently-arriving packets (i.e., the packets transmitted using the resources of repeat transmission) is continuation of the data of the previously-transmitted packets. As a result, the other terminal devices on the receiving side become able to recognize, at the time point of time of decoding the first SCI, that the packets arriving next represent continuation of the data of the received packets, and thus can combine the data transmitted in the packets.

As still another example, when different data than the data of repeat transmission is to be transmitted using the resources reserved for repeat transmission, the terminal device can add information such as NDI (New Data Indicator) to the SCI corresponding to the different data, and enable distinction from the data of repeat transmission. In that case, based on the information such as the NDI, the other terminal devices on the receiving side can determine whether or not the target data is data of repeat transmission; and can combine the data based on the determination result to restore the original transmission data.

Till now, the explanation with reference to FIG. 32 was given about the reactive-type resource reservation.

### <3.3. Evaluation>

As explained above, in the system according to the first embodiment of the application concerned, in order to use some of the resources during the inter-device communication, the first-type terminal device controls the first-type range in which those resources are reserved. Then, in order to control the second-type range in which the second-type terminal device selects resources for inter-device communication, the first-type terminal device notifies the second-type terminal device about the information regarding the first-type range. Moreover, the second-type terminal device obtains, from the first-type terminal device, the information about the first-type range of the resources reserved by the first-type terminal device for inter-device communication. Furthermore, based on the obtained information about the first-type range, the second-type terminal device controls the second-type range for selecting the resources to be used in the inter-device communication. For example, based on the information about the first-type range, the second-type terminal device restricts the second-type range.

With such a configuration, for example, even in situations in which there is variability in the packet transmission timings in accordance with the jitter component included in the traffic or in situations in which there is variation in the size of the transmitted packets, it becomes possible to allocate resources in a more flexible manner. That is, in the system according to the first embodiment of the application concerned, resources can be allocated in a more flexible manner in the inter-device communication including the V2X communication. Particularly, in the NR V2X communication, new use cases requiring high reliability, low delay, high-speed communication, and high capacity are supported that were not supportable in the LTE-based V2X communication in the past. In such a case too, in the system according to the first embodiment of the application concerned, each of a variety of use cases supported in the NR V2X communication can be handled in a more flexible manner.

### <<4. Second embodiment>>

Given below is the explanation of a second embodiment of the application concerned.

### <4.1. Study related to resource allocation in V2X communication>

In the second embodiment according to the application concerned, the focus is on the resource allocation for the V2V communication link in the NR V2X communication. In the conventional sidelink communication (particularly the V2V communication), it is fundamentally assumed to have periodic traffic for periodically broadcasting safety-related messages to the surrounding vehicles.

On the other hand, in the NR V2X communication, for example, it is expected to deal with new use cases such as "sensor data sharing" and "advanced driving", and it is possible to think of a situation in which there is a collapse in the periodicity of the traffic. That is, although the traffic is periodic in nature, it is anticipated that the jitter component is included in the traffic, and there is some mismatch in the timings of packet arrival in the physical layer (i.e., the timings of the arrival of packets from the upper layer to the physical layer).

Moreover, regarding the packet size too, conventionally it is assumed to mainly have the packets of the identical size. However, in the new use cases, it is possible to think of a traffic in which the size changes for each packet. Such changes in the packet size are attributed to, for example, the fact that the transmission data is dependent on the surrounding environment of the automobile.

For example, FIG. 13 is an explanatory diagram for explaining the overview of the features of the packets assumed in the NR V2X communication. In FIG. 13, the difference in the traffic in the NR V2X communication and the conventional sidelink communication is schematically illustrated. In the upper diagram in FIG. 13, the traffic expected in the conventional sidelink communication is illustrated. That is, in the conventional sidelink communication, the packet arrival interval T of the packets from the upper layer to the physical layer and the packet size P of those packets are assumed to be always constant. In contrast, in the lower diagram in FIG. 13, an example of the traffic expected in the NR V2X communication is illustrated. That is, in the NR V2X communication, the jitter component α of the packet arrival interval T of the packets from the upper layer to the physical layer and the variation component β of the packet size P need to be taken into consideration. With such a background, in the NR V2X communication, even in a situation in which the effects of the jitter component α of the packet arrival interval T and the variation component β of the packet size P are conspicuous, it is required to perform resource management in such a way that sidelink communication becomes possible in a more suitable manner.

### (Existing sidelink resource allocation method)

Given below is the explanation of the overview of the method for sidelink resource allocation. As far as the methods for sidelink resource allocation are concerned, there are two methods, namely, the "Mode3 resource allocation" method in which the base station allocates resources to the sidelink, and the "Mode4 resource allocation" method in which the terminal device itself performs sensing and selects sidelink resources. In the application concerned, the focus is mainly given on the Mode3 resource allocation method.

### •Resource pool allocation

With the aim of performing the Mode3 resource allocation, resource pool allocation is performed in advance. The resource pool allocation is performed by, for example, the base station. As another example, the resource pool allocation can be preconfigured.

For example, FIG. 14 is a diagram illustrating an exemplary configuration of the resources (resource pool) allocated for sidelink communication. In FIG. 14 is illustrated an example about the case in which frequency division multiplexing (FDM) is applied. As illustrated in FIG. 14, the resource pool is partitioned into an SA (Scheduling Assignment) area and a data area that are used in the transmission of the PSCCH (Physical Sidelink Control Channel) and the PSSCH (Physical Sidelink Shared Channel), respectively. In the following explanation, although the focus is on the case in which FDM is applied as illustrated in FIG. 14, it does not necessarily limit the application of the technology according to the application concerned. As a specific example, even when time division multiplexing (TDM) is applied, the technology according to the application concerned as explained below is applicable. Meanwhile, when TDM is applied, the SA area and the data area become orthogonal to each other on the temporal axis.

### •Mode3 resource allocation

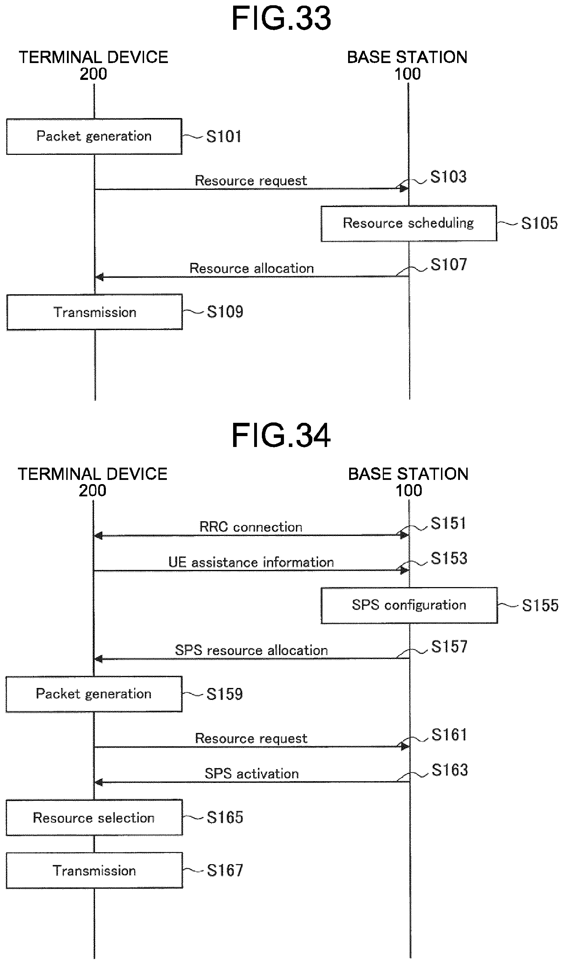

Given below is the explanation of the overview of the Mode3 resource allocation. Firstly, explained below with reference to FIG. 33 is an example of the flow of operations in the commonly-used Mode3 resource allocation. FIG. 33 is a sequence diagram illustrating an example of the flow of operations in the Mode3 resource allocation.

As illustrated in FIG. 33, when there is traffic (i.e., when target packets for transmission are generated) (S101), the terminal device 200 provides the base station 100 with a request for transmission delay and information such as the packet size via the uplink (PUCCH), and requests the base station 100 to allocate transmission resources (S103). Upon receiving that request from the terminal device 200, the base station 100 allocates transmission resources to the terminal device 200, that is, performs scheduling of transmission resources (S105); and notifies the terminal device 200 about the result of allocation of transmission resources via the downlink (PDCCH) (S107). Then, the terminal device 200 transmits packets using the resources allocated by the base station 100 (S109).

However, as a result of implementing the method illustrated in FIG. 33, the operations such as requesting for allocation of transmission resources (S103), scheduling of the transmission resources (S105), and notification of the result of allocation of transmission resources (S107) are performed for each instance of packet transmission. That leads to a large overhead of the operations related to scheduling.

On the other hand, in the V2X communication, since the major traffic is periodic in nature; for example, at the time of performing the Mode3 resource allocation, performing SPS (Semi-persistent scheduling) enables implementation of the V2X communication in which the abovementioned scheduling-related overhead is reduced. For example, FIG. 16 is a sequence diagram illustrating another example of the flow of operations of the Mode3 resource allocation. In FIG. 16 is illustrated an example in which the SPS is performed.

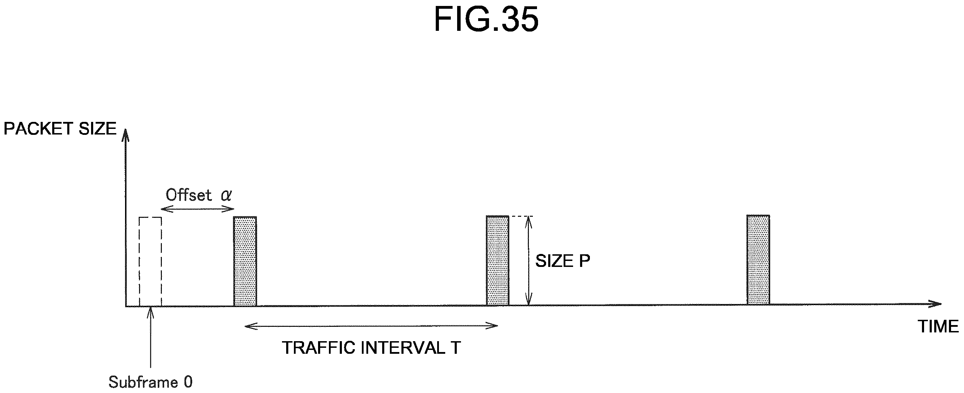

As illustrated in FIG. 34, upon getting connected to a cell, that is, upon establishing communication with the base station 100 (S151), the terminal device 200 provides the base station 100 with UE assistance information (S153). The UE assistance information contains information usable by the base station 100 in the SPS (i.e., contains SPS assistance information). For example, FIG. 35 is an explanatory diagram for explaining the overview of the SPS assistance information. As illustrated in FIG. 35, when the packets are generated at regular intervals, the terminal device 200 provides the base station 100 with the SPS assistance information such as the period T of the traffic, the offset α of a subframe 0, the packet size P, and the packet priority.

Then, based on the UE assistance information provided by the terminal device 200, the base station 100 sets the size of the transmission resources for the terminal device 200 and sets the SPS interval (Semi-persistent scheduling Interval) (S155). The base station 100 then notifies the terminal device 200 about the SPS configuration (S157).

Subsequently, when there is traffic (i.e., when target packets for transmission are generated) (S159), the terminal device 200 requests the base station 100 to allocate transmission resources (S161). Upon receiving that request from the terminal device 200, the base station 100 instructs the terminal device 200 to perform SPS activation (S163). Upon receiving the instruction from the base station 100, the terminal device 200 selects SPS-configured resources (S165). Then, the terminal device 200 transmits packets using the selected resources (S167).

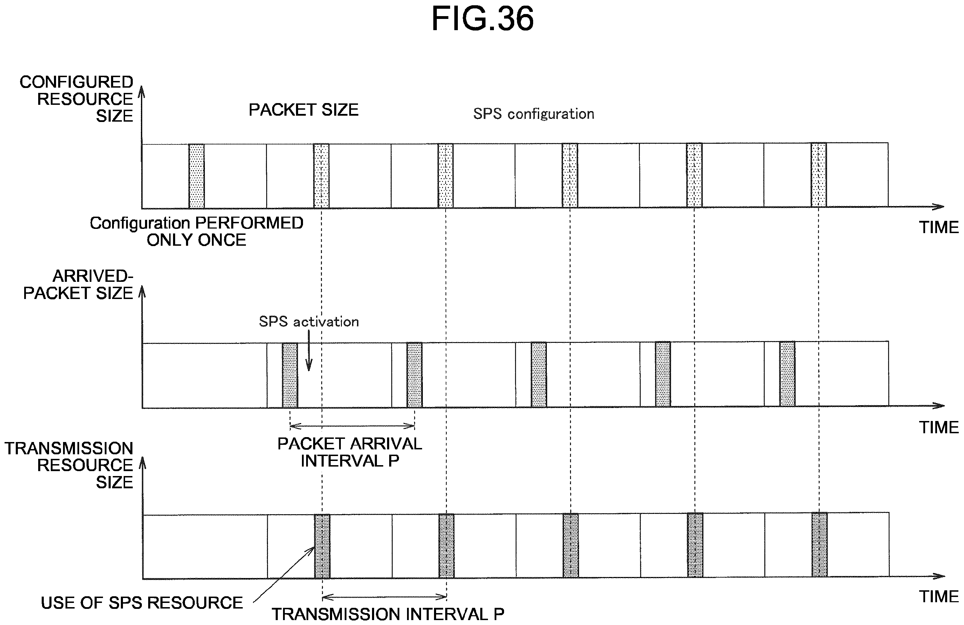

FIG. 36 is a timing chart illustrating an example of the flow of operations performed when the SPS is implemented. More particularly, in the upper diagram in FIG. 36 is illustrated an example of the relationship between the timing allocated to each resource and the size of that resource, in regard to the resources configured by the base station 100. In the middle diagram in FIG. 36 is illustrated an example of the relationship between the timing of arrival of each packet and the size of that packet, in regard to the packets arriving at regular interval from the upper layer to the physical layer (i.e., the target packets for transmission). In the lower diagram in FIG. 36 is illustrated an example of the relationship between the timing of allocation of each resource and the size of that resource, in regard to the resources used in transmitting the target packets for transmission. Thus, in the upper diagram, the middle diagram, and the lower diagram in FIG. 36; the horizontal axis represents time. In the upper diagram in FIG. 36, the vertical axis represents the size of the configured resources. In the middle diagram in FIG. 36, the vertical axis represents the size of the packets arriving at regular intervals from the upper layer to the physical layer. In the lower diagram in FIG. 36, the vertical axis represents the size of the resources used in transmitting the target packets for transmission. In the following explanation, a packet arriving from the upper layer to the physical layer in the terminal device 200 is sometimes referred to as an "arriving packet". That is, in the following explanation, when simply "arriving packet" is written, unless specified otherwise, it points to a packet arriving from the upper layer to the physical layer in the terminal device 200.

When the SPS is performed as illustrated in FIG. 36, the resources get configured in advance according to a transmission period P of the terminal device 200 (i.e., an arrival interval P of the packets from the upper layer to the physical layer in the terminal device 200). Hence, when there is traffic (i.e., when target packets for transmission are generated), the terminal device 200 becomes able to transmit those packets using the already-set resources. That is, the terminal device 200 no more needs to request the base station 100 for resource allocation at each instance of packet transmission.

### •Mode4 resource allocation

Explained below with reference to FIG. 15 is the overview of the Mode4 resource allocation. FIG. 15 is an explanatory diagram for explaining an example of the operation timeline in the case in which a terminal device transmits packets based on the Mode4 resource allocation. As illustrated in FIG. 15, the terminal device 200 that has to transmit packets firstly performs sensing for the purpose of finding, from the resource pool, the resources to be used in transmitting those packets. Then, based on the result of sensing, the terminal device 200 selects resources from the resource pool. Subsequently, the terminal device transmits the packets using the selected resources. Moreover, at that time, as may be necessary, the terminal device 200 makes a reservation of the resources to be used in the subsequent packet transmission.

Explained below with reference to FIG. 16 is an example of the sensing operation. FIG. 16 is an explanatory diagram for explaining an example of the sensing operation performed for selecting resources from the resource pool.

More particularly, based on the measurement result of the interference patterns within the sensing window and based on the resource reservation status within the sensing window, the terminal device 200 selects resources within the resource selection window or makes a reservation of future resources. As a specific example, in the example illustrated in FIG. 16, when the packet D is generated as the target packet for transmission, based on the result of sensing, the terminal device 200 makes a prediction about the future usage status of resources, such as a prediction about the resources used in the future transmission of the other packets A to C. Then, the terminal device 200 refers to the prediction result and becomes able to select or make a reservation of such resources which are available for the transmission of the packet D, that is, such resources which are predicted to remain unused in the transmission of the other packets.

### (Technical issue)

As described above, in the conventional sidelink communication, since the packets have a fixed periodicity and a fixed packet size; at the time of making a reservation of the resources to be used in periodic packet transmission, the jitters and the changes in the packet size need not taken into account. That is, in the conventional sidelink communication, after the elapse of the packet arrival interval T, a reservation of the resources can be made under the premise of transmitting resources of the same size as before.

On the other hand, in the NR V2X communication, the effects of the jitter component α of the packet arrival interval T and the variation component β of the packet size P need to be taken into account. Hence, sometimes it becomes difficult to implement the same resource allocation method as implemented in the conventional sidelink communication.

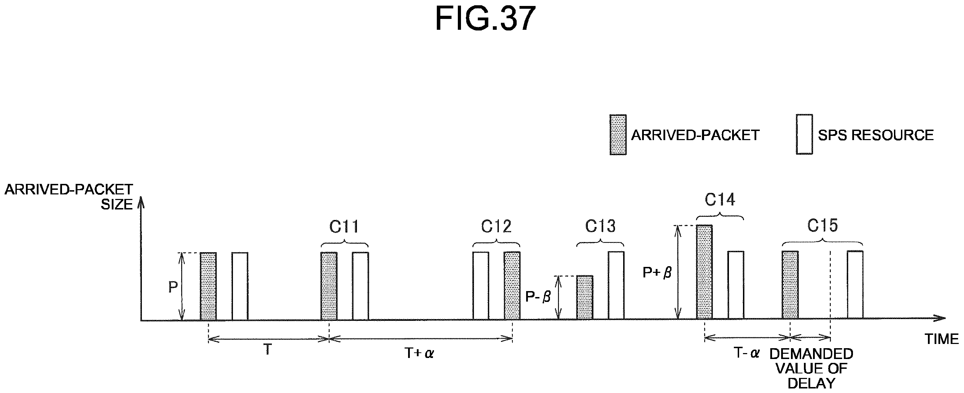

For example, FIG. 37 is an explanatory diagram for explaining a case in which the same resource allocation method as implemented in the conventional sidelink communication is implemented (i.e., a case in which the conventional SPS is adapted) in the NR V2X communication. In FIG. 37, the horizontal axis represents time; and the vertical axis represents the sizes of the arriving packets (i.e., the sizes of the resources required in packet transmission).

In FIG. 37 are illustrated specific examples C11 to C15 about the relationship between an arriving packet and the resource subjected to scheduling (SPS) for transmitting that arriving packet (hereinafter, also called "SPS resource"). For example, the example C11 is about a case in which the arriving packet can be normally transmitted using the SPS resource. That is, in the example C11, the size of the arriving packet is substantially same as the size of the SPS resource, and the SPS resource is allocated immediately after the timing of generation of the arriving packet.

In contrast, in the examples C12, C14, and C15, either the transmission request for the arriving packet using the SPS resource is not met, or the arriving packet is difficult to transmit.

More particularly, the example C12 is about a case in which the arrival timing of the packet is delayed due to the jitter component α. That is, due to the delay in the arrival timing of the packet, the packet has arrived after the timing at which the SPS resource was allocated. Hence, in this case, the terminal device 200 does not find any resource (SPS resource) available for transmission of the packet, and it sometimes becomes difficult to transmit the packet.

The example C14 is about a case in which the size of the packet increases due to the size variation β thereof and exceeds the size of the SPS resource meant for transmitting that packet. In this case, the terminal device 200 cannot secure any resource having the size required for packet transmission, and it sometimes becomes difficult to transmit the packet.

The example C15 is about a case in which the arrival timing of the packet is ahead of schedule due to the jitter component α. That leads to an increase in the time difference between the arrival timing of the packet and the timing of allocation of the SPS resource for transmitting the packet. As a result, the demanded value of the delay in the period from the arrival of the packet to the transmission thereof is no more satisfied. That is, in this case, from among the requests regarding packet transmission, the terminal device 200 sometimes finds it difficult to satisfy the requests regarding the delay.

The example C13 is of a case in which only some part of the SPS resource is used in packet transmission thereby causing, what is called, wastage in regard to the use of the resource (in other words, a case in which excessive resource reservation has occurred). More particularly, in the example C13, the size of the packet decreases due to the size variation β thereof, and some part of the SPS resource that has been secured for transmitting that packet remains unused in the transmission of that packet. That is, in this case, since some part of the secured SPS resource remains unused, there is wastage in regard to the use of the resource.

In view of the situations explained above, in the application concerned, a technology is proposed that enables allocation of resources in a more flexible manner in the inter-device communication including the V2X communication. More particularly, in the application concerned, a technology is proposed that is related to sidelink resource allocation and that can deal with the jitters in the packet arrival interval T and the changes in the packet size P in a more flexible manner.

### <4.2. Technical features>

As the technical features of the system according to the application concerned, the following explanation is given about an example of the technology that is related to the allocation of resources usable in the inter-device communication (for example, the allocation of resources to the sidelink) and that can deal with the jitters in the packet arrival interval T and the changes in the packet size P in a more flexible manner. More particularly, as an example of the technology meant for performing resource allocation, the explanation is given according to the following two approaches.
- Proactive-type resource allocation
- Reactive-type resource allocation

### <4.2.1. Proactive-type resource allocation>

Firstly, as the proactive-type resource allocation, the explanation is given about an example of the method for allocating the resources in advance (making a reservation of the resources) by taking into account the jitters in the packet arrival interval T and the changes in the packet size P.

### (Basic principle)

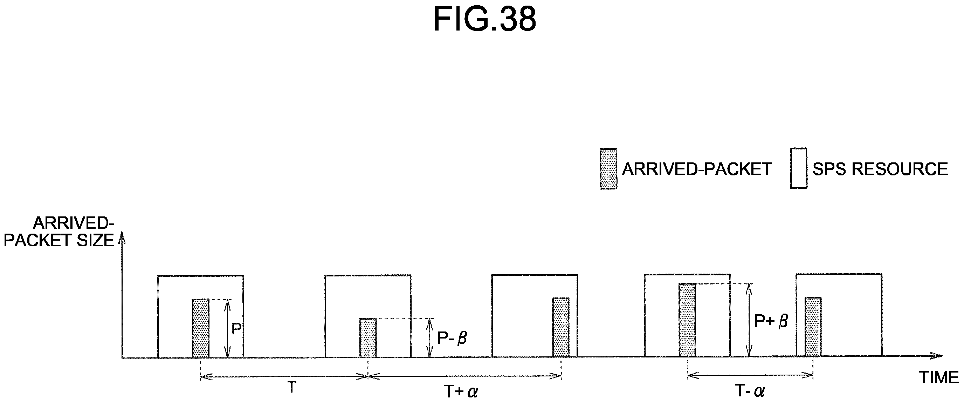

Firstly, the explanation is given about the overview of the basic principle of the proactive-type resource allocation. FIG. 38 is an explanatory diagram for explaining the overview of the proactive-type resource allocation. As illustrated in FIG. 38, in the proactive-type resource allocation (in other words, in the resource reservation), the base station controls the range for making a reservation of the resources (hereinafter, also referred to as the "range for reserved resources") by taking into account the jitter component α of the packet arrival interval T and the variation component β of the packet size P in the terminal device. As a specific example, the base station performs control in such a way that the range in the temporal axis direction of the reserved resources becomes wider so as to allow mismatch in the packet arrival timings, that is, to allow the jitter component α of the packet arrival interval T (α_min<α<α_max). Moreover, the base station controls the size of the reserved resources (in other words, controls the range of the allowed sizes of the reserved resources) so as to allow the changes in the packet size P (P_min<P<P_max) corresponding to the variation component β. In the following explanation, unless specified otherwise, the "range for reserved resources" is assumed to include the range in the temporal axis direction of the reserved resources as well as the range of the allowed sizes of the reserved resources.

As described above, the base station takes into account, in advance, the jitters and the changes in the packet size in the terminal device, and then allocates the resources (makes a reservation of the resources) that are available to the terminal device for periodic packet transmission. Hence, even when there is some mismatch in the packet transmission timing or even when there is some change in the packet size, the terminal device becomes able to transmit the packets using at least some of the resources reserved by the base station.

### (Flow of operations)

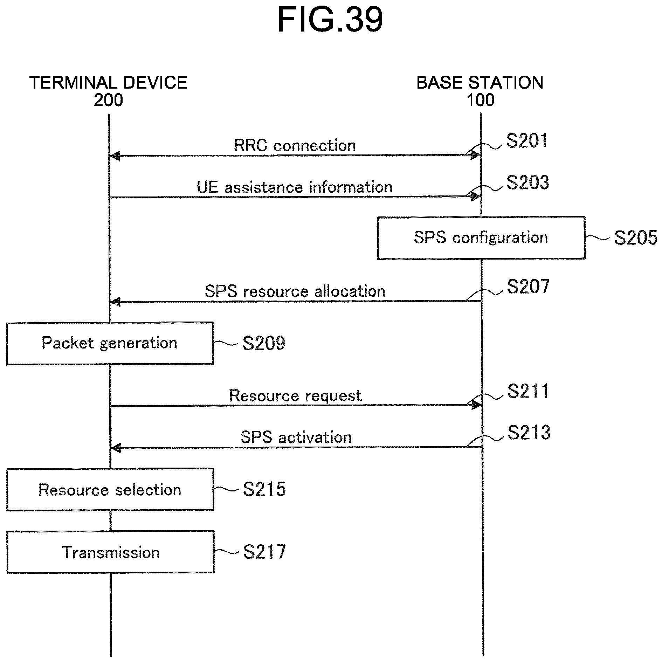

Explained below with reference to FIG. 39 is an example of the flow of operations performed in the system according to the second embodiment of the application concerned in the case in which the proactive-type resource allocation is performed. FIG. 39 is a sequence diagram illustrating an example of the flow of operations performed in the system according to the second embodiment of the application concerned.

As illustrated in FIG. 39, upon getting connected to a cell, that is, upon establishing communication with the base station 100 (S201), the terminal device 200 (the notifying unit 247) provides the base station 100 with UE assistance information (S203). The UE assistance information contains information usable by the base station 100 in the SPS (i.e., contains SPS assistance information). Regarding the UE assistance information and the SPS assistance information, the detailed explanation is given later separately with reference to specific examples. Meanwhile, as explained earlier, the information notified from the terminal device 200 to the base station 100, that is, the information included in the UE assistance information (particularly, the SPS assistance information) represents an example of "first-type information".

The base station 100 (the information obtaining unit 153) obtains the UE assistance information from the terminal device 200 (S203). Then, based on the UE assistance information provided by the terminal device 200, the base station 100 (the communication control unit 151) performs setting related to the resources to be used by the terminal device 200 in packet transmission, that is, performs scheduling (SPS) of the resources. As a specific example, the base station 100 (the communication control unit 151) sets the size of the reserved resources, sets the period of the reserved resources (i.e., the SPS period), and sets the range for reserved resources. Then, the base station 100 (the notifying unit 155) notifies the terminal device 200 about the information regarding the SPS configuration (S207). Meanwhile, as explained earlier, the information notified from the base station 100 to the terminal device 200, that is, the information about the SPS configuration (particularly, the information about the range for reserved resources) represents an example of "second-type information".

Subsequently, when there is traffic (i.e., when target packets for transmission are generated) (S209), the terminal device 200 (the notifying unit 247) requests the base station 100 to allocate transmission resources (S211). Upon receiving that request from the terminal device 200, the base station 100 (the notifying unit 155) instructs the terminal device 200 to perform SPS activation (S213). Upon receiving the instruction from the base station 100, the terminal device 200 selects SPS-configured resources (S215). At that time, based on the information about the SPS configuration notified in advance, the terminal device 200 selects, from within the range for reserved resources, the resources to be used in packet transmission. Then, the terminal device 200 (the communication control unit 241) transmits packets using the selected resources (S217).

Till now, the explanation with reference to FIG. 39 was given about an example of the flow of operations performed in the system according to the second embodiment of the application concerned in the case in which the proactive-type resource allocation is performed.

### (UE assistance information)

Given below is the explanation of the information that is provided as UE assistance information by the terminal device 200 to the base station 100 in the system according to the second embodiment.

The terminal device 200 provides the base station 100 with, for example, at least either the information about the jitter component α of the packet arrival interval T or the information about the variation component β of the packet size P as the UE assistance information. In addition, in the system according to the second embodiment of the application concerned, the terminal device 200 can provide the base station 100 also with the information provided as UE assistance information in the conventional system.

Examples of the information about the jitter component α of the packet arrival interval T include the information cited below. Of course, the information cited below is only exemplary and, if the base station 100 is capable of recognizing the jitters in the packet arrival interval of the terminal device 200, the information provided by the terminal device 200 to the base station 100 is not necessarily limited to the following information.
- the minimum value α_min of the jitter component α
- the maximum value α_max of the jitter component α
- the average of the jitter component α
- the variance value of the jitter component α

Examples of the information about the variation component β of the packet size P include the information cited below. Of course, the information cited below is only exemplary and, if the base station 100 is capable of recognizing the changes in the packet size of the terminal device 200, the information provided by the terminal device 200 to the base station 100 is not necessarily limited to the following information.
- the minimum value β_min of the variation component β of the packet size P
- the maximum value β_max of the variation component β of the packet size P
- the average of the variation component β of the packet size P
- the variance value of the variation component β of the packet size P

Till now, the explanation was given about an example of the information provided as UE assistance information by the terminal device 200 to the base station 100 in the system according to the second embodiment of the application concerned.

### (SPS configuration)

Given below is the explanation of the SPS configuration that is controlled by the base station 100 based on the UE assistance information in the system according to the second embodiment of the application concerned.

Based on the UE assistance information provided by the terminal device 200, the base station 100 allocates SPS resources to (i.e., makes a reservation of SPS resources for) the terminal device. At that time, for example, based on the jitter component α and the variation component β, the base station 100 makes a reservation of resources in such a way that a range that is continuous in the temporal direction and the frequency direction and that is likely to be used in transmission by the terminal device 200 is secured as the range for reserved resources (in other words, the range for allocating SPS resources). As a specific example, regarding the range for reserved resources, the control is performed according to the expected range of the jitter component α (α_min<α<α_max) and the expected range of the packet size P (P_min<P<P_max).

Moreover, in addition to taking into account the UE assistance information, the base station 100 can also take into account at least one of the following information and allocate resources (make a reservation of resources).
- CBR (Channel Busy Ratio)
- priority information of packets
- type of operation service
- type information of packets
- position information of terminal device
- speed of terminal device

As a specific example, the base station 100 can decide on the range for reserved resources according to the CBR (the degree of congestion of the band frequency) measured in the used frequency band. As a more specific example, when the CBR is lower than a threshold value (i.e., in the uncongested state), the base station 100 controls the range for reserved resources to become wider. On the other hand, when the CBR is higher than the threshold value (i.e., in the congested state), the base station 100 controls the range for reserved resources to be more restricted.

As another example, the base station can decide on the range for reserved resources according to the priority of the packets. As a more specific example, regarding the packets having high priority, the base station 100 can control the range for reserved resources to become wider. On the other hand, regarding the packets having low priority, the base station 100 can control the range for reserved resources to be more restricted.

As still another example, the base station 100 can decide on the range for reserved resources according to the type of the operation service such as "sensor data sharing" or "automated driving".

As still another example, the base station 100 can decide on the range for reserved resources according to packet-type information such as eMBB (enhanced Mobile Broadband) or URLLC (Ultra Reliable Low Latency Communication).

As still another example, the base station 100 can decide on the range for reserved resources according to the position information of the terminal device 200. As a more specific example, when an automobile (equivalent to the terminal device 200) is running on an expressway, since sometimes there is a decrease in the jitters or a decrease in the changes in the size of transmission packets, the base station 100 can control the range for reserved resources to be more restricted. Moreover, when the automobile is running around a traffic intersection, since sometimes there is an increase in the jitters or an increase in the changes in the size of transmission packets, the base station 100 can control the range for reserved resources to become wider.

As still another example, the base station 100 can decide on the range for reserved resources according to the speed of the terminal device 200. As a more specific example, when an automobile (equivalent to the terminal device 200) is running slowly due to traffic congestion, sometimes there is a decrease in the jitters and a decrease in the changes in the size of transmission packets. Hence, the base station 100 can control the range for reserved resources to be more restricted. On the other hand, when the automobile is running at high speed, the base station 100 can control the range for reserved resources to become wider.

Till now, the explanation was given about an example of the SPS configuration that is controlled by the base station 100 based on the UE assistance information in the system according to the second embodiment of the application concerned.

### (Resource selection)

Explained below with reference to examples are the operations for resource selection as performed by the terminal device 200 in the system according to the second embodiment of the application concerned.

In the conventional Mode3 resource allocation, the base station 100 allocates only the necessary resources for the terminal device 200 to transmit packets. In contrast, in the second embodiment of the application concerned, as explained earlier, in the case of performing the proactive-type resource allocation, the base station 100 allocates more resources to the terminal device 200 than in the conventional case. That is, the number of resources reserved for the terminal device 200 is greater than the number of resources actually used by the terminal device 200 in packet transmission. For that reason, the terminal device 200 selects, as the resources to be used in packet transmission, at least some of the resources from among the resources reserved by the base station 100.

The base station 100 can instruct the terminal device 200 about the method for selecting the resources to be used in packet transmission. In that case, for example, the base station can notify the terminal device about the resource selection method using the SIB, the RRC, the PBCH, the PDCCH, or the PDSSH. As another example, the method for selecting the resources to be used in packet transmission can be preconfigured in the terminal device 200.

Explained below with reference to specific examples is the method for selecting the resources to be used in packet transmission.

### •Random selection

For example, the terminal device 200 can select, in a random manner, the resources to be used in packet transmission.

### •Sensing based selection

As another example, the terminal device 200 can perform sensing of the usage status of the resources used by the other terminal devices 200 and, based on the result of sensing, select the resources to be used in packet transmission. In that case, for example, the base station 100 can notify (instruct) the terminal device 200 about whether or not to perform sensing.

Moreover, in that case, according to the number of terminal devices having identical SPS configuration to the target terminal device 200 (in other words, the number of terminal devices among which the resources are likely to be shared), the base station 100 can decide on whether or not to instruct the target terminal device 200 to perform sensing. As a more specific example, when the number of terminal devices having identical SPS configuration to the target terminal device 200 is equal to or smaller than a threshold value, the base station need not instruct the target terminal device 200 to perform sensing.

Moreover, the base station 100 can notify the terminal device 200 about the area that should be targeted for sensing by the terminal device 200.

Furthermore, the base station 100 can notify the concerned terminal device 200 about the number of terminal devices having identical or partially identical SPS configuration to the concerned terminal device 200 (in other words, the number of terminal devices with which the resources are likely to be shared). In this case, according to the number of terminal devices notified by the base station 100, the concerned terminal device 200 can decide on whether or not to perform sensing. Meanwhile, in this case, the base station 100 can notify the concerned terminal device 200 about the information regarding the conditions based on which the concerned terminal device 200 can decide on whether or not to perform sensing. As a more specific example, the base station 100 can notify the concerned terminal device 200 about the information that, as the information about the abovementioned conditions, indicates the relationship of whether or not to perform sensing with the number of terminal devices having identical or partial identical SPS configuration to the concerned terminal device 200. As another example, the information about the conditions can be preconfigured in the terminal device 200.

### •Selection of resources according to transmittable timing of packet

As another example, according to the transmittable timing of a generated packet, the terminal device 200 can select the resources to be used in packet transmission. As a specific example, the terminal device 200 can select the resources that enable the earliest transmission of the generated packet as the resources to be used in packet transmission.

### •Selection of resources according to level associated to each resource

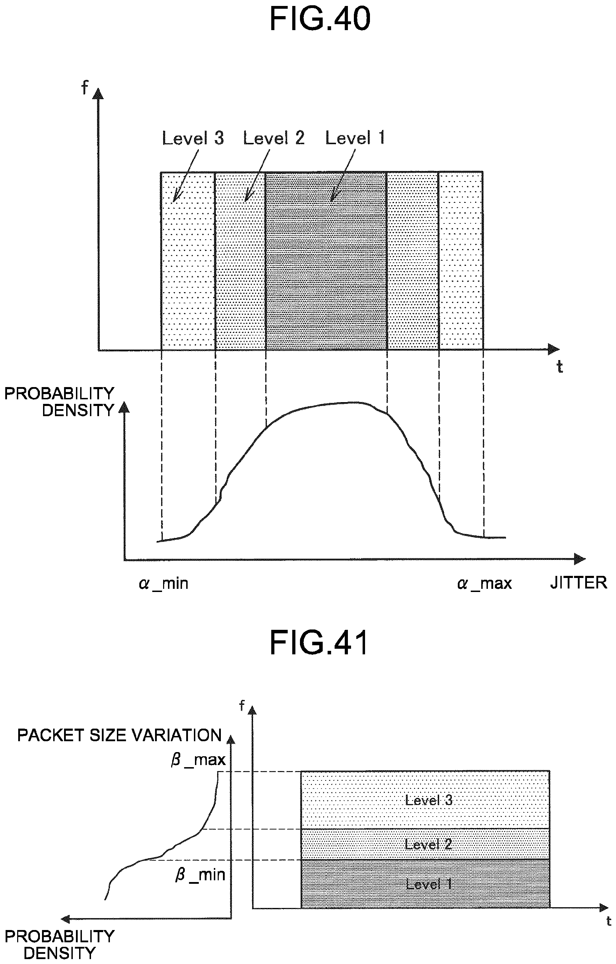

As another example, the range for reserved resources can be set to include a plurality of partial ranges in which mutually different levels are set from among a plurality levels. In other words, a SPS resource reserved by the base station 100 can be partitioned into a plurality of resource blocks, and mutually different levels from among a plurality of levels can be set in the resource blocks. For example, FIGS. 40 to 42 are explanatory diagrams for explaining examples of the method for setting the levels in the resource blocks obtained by partitioning an SPS resource.

More particularly, in FIG. 40 is illustrated an example in which the reserved SPS resource (in other words, the reservation range of resources) is partitioned into a plurality of resource blocks according to the probability density function of the jitter component α of the packet arrival interval T in the terminal device 200. As a more specific example, in FIG. 40 is illustrated an example in which levels are set according to the average and the variance value of the probability density function of the jitter component α, and the reserved SPS resource is partitioned into a plurality of resource blocks according to the levels (i.e., resource blocks according to the levels 1 to 3). In the example illustrated in FIG. 40, the resource block corresponding to the level 1 represents the resource block in which packet transmission is highly likely to be performed. In contrast, the resource block corresponding to the level 3 represents the resource block in which packet transmission is less likely to be performed.

In FIG. 41 is illustrated an example in which the reserved SPS resource (in other words, the reservation range of resources) is partitioned into a plurality of resource blocks according to the probability density function of the variable component β of the packet size P of the packets in the terminal device 200. As a more specific example, in FIG. 41 is illustrated an example in which levels are set according to the average and the variance value of the probability density function of the variation component β, and the reserved SPS resource is partitioned into a plurality of resource blocks according to the levels (i.e., resource blocks according to the levels 1 to 3). In the example illustrated in FIG. 41, the resource block corresponding to the level 1 represents the resource block in which packet transmission is highly likely to be performed. In contrast, the resource block corresponding to the level 3 represents the resource block in which packet transmission is less likely to be performed.

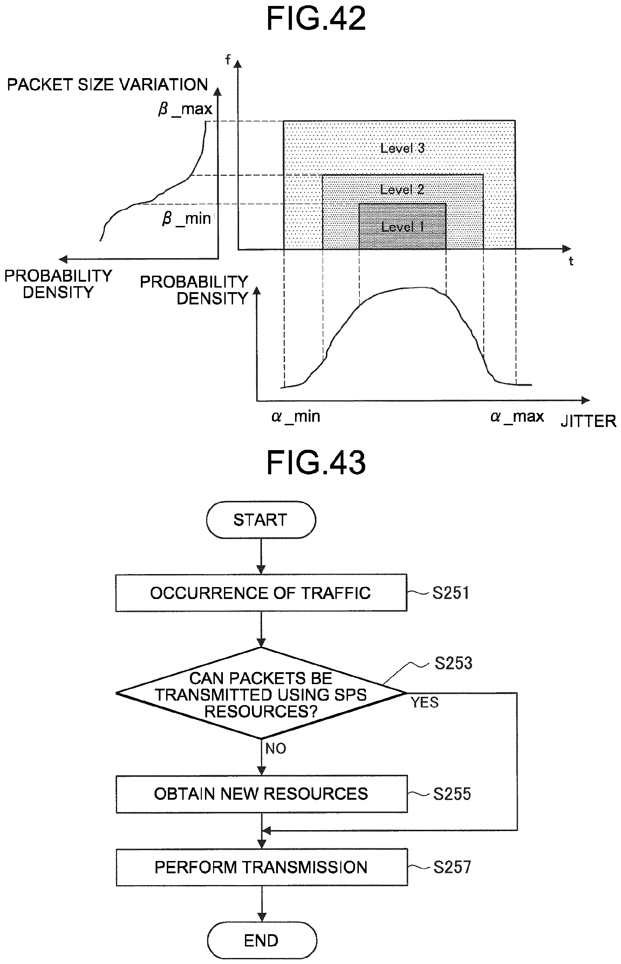

In FIG. 42 is illustrated an example in which the reserved SPS resource (in other words, the reservation range of resources) is partitioned into a plurality of resource blocks according to the probability density function of the jitter component α of the packet arrival interval T and the probability density function of the variable component β of the packet size P of the packets in the terminal device 200. As a more specific example, in FIG. 42 is illustrated an example in which levels are set according to the average and the variance value of the probability density function of the jitter component α as well as according to the average and the variance value of the probability density function of the variation component β, and the reserved SPS resource is partitioned into a plurality of resource blocks according to the levels (i.e., resource blocks according to the levels 1 to 3). In the example illustrated in FIG. 42, the resource block corresponding to the level 1 represents the resource block in which packet transmission is highly likely to be performed. In contrast, the resource block corresponding to the level 3 represents the resource block in which packet transmission is less likely to be performed.

In this case, in the case of allocating an SPS resource to the terminal device (i.e., in the case of making a reservation of a resource usable by the terminal device 200), the base station 100 partitions the SPS resource into a plurality of resource blocks and associates a level to each resource block. Meanwhile, regarding the conditions for partitioning a SPS resource into a plurality of resource blocks (for example, the partition count, the partition size, the upper limit of the partition count, and the upper limit of the partition size), the conditions can be appropriately varied according to the situation. Then, the base station 100 can notify the terminal device 200 about the information regarding the resource blocks obtained by partitioning the SPS resource (for example, the information about the time and the frequency) and the information about the levels associated to the resource blocks.

Moreover, in the case of selecting resources, the terminal device 200 can decide about which resource block associated to which level from among a plurality of levels is to be used for selecting resources for use in packet transmission. As a specific example, the terminal device 200 can select resources from the resource block having the highest level from among a plurality of resource blocks. As another example, the terminal device 200 can select resources from the resource block having the lowest level from among a plurality of resource blocks.

Moreover, according to the level, the conditions (constraints) related to the use of the resource block corresponding to that level can be individually set. As a specific example, according to the level, the conditions can be set in such a way that the use of the resource block corresponding to that level is classified into exclusive use or inclusive use. More particularly, when the exclusive use is set for a level, the usage conditions of the resource block corresponding to that level are restricted in such a way that the concerned terminal device 200 uses that resource block in an exclusive manner. On the other hand, when the inclusive use is set for a level, the usage conditions of the resource block corresponding to that level are mitigated in such a way that, even when a reservation is made for a particular terminal device 200, it is allowed to have overlapping of the resource blocks so that the other terminal devices can select resources. For example, in Table 3 given below, an example of the correspondence relationship between the levels and the classification thereof is illustrated.

**Table 3: Example of classification of levels**

| Level | Level classification |
|---|---|
| 1 | Exclusive |
| 2 | Inclusive |
| 3 | Inclusive |

Till now, as the proactive-type resource allocation, the explanation with reference to FIGS. 38 to 42 was given about an example of the method in which resources are allocated in advance (reserved) by taking into account the jitters in the packet arrival interval T and the changes in the packet size P.

### <4.2.2. Reactive-type resource allocation

Given below is the explanation of the reactive-type resource allocation. In the reactive-type resource allocation, in an identical manner to the conventional SPS, the resources are reserved in such a way that the frequency and the packet size become constant; and then separate resources are allocated in case of any problem in packet transmission.

### (Overview)

Firstly, the explanation is given about the overview of the reactive-type resource allocation. For example, FIG. 43 is an explanatory diagram for explaining the overview of the reactive-type resource allocation. In FIG. 43 is illustrated an example of the flow of operations performed by the terminal device when the reactive-type resource allocation is performed.

As illustrated in FIG. 43, when there is traffic (i.e., when target packets for transmission are generated) (S251), the terminal device 200 confirms with the base station 100 about whether or not packets can be transmitted using the SPS resources reserved by the base station 100 (S253). As a specific example, if the packet size exceeds the size of the SPS resources thereby resulting in a resource deficit for packet transmission, then the terminal device 200 can determine it to be difficult to transmit the packets using the SPS resources. Moreover, when the SPS resources are used in packet transmission; if it is difficult to meet the request for transmission delay (latency), the terminal device 200 can determine it to be difficult to transmit the packets using the SPS resources.

When it is possible to transmit the packets using the SPS resources (YES at S253), the terminal device 200 transmits the target packets for transmission using the SPS resources (S257).

On the other hand, when it is difficult to transmit the packets using the SPS resources (NO at S253), the terminal device 200 obtains new resources for transmitting the packets (S255). Meanwhile, regarding the method by which the terminal device 200 obtains new resources for packet transmission, mainly a "method of requesting base station to allocate resources" and a "method of selecting resources in terminal device itself" can be cited. Regarding those methods, the detailed explanation is given later separately. Subsequently, using the newly-obtained resources, the terminal device 200 transmits the target packets (S257).

Till now, the explanation with reference to FIG. 43 was given about the overview of the reactive-type resource allocation.

### (Method of requesting base station to allocate resources)

As an example of the method by which the terminal device 200 obtains new resources for packet transmission, given below is the explanation of examples of the method by which the terminal device 200 requests the base station 100 to allocate resources.

### (A-1) Method for allocating requested resources

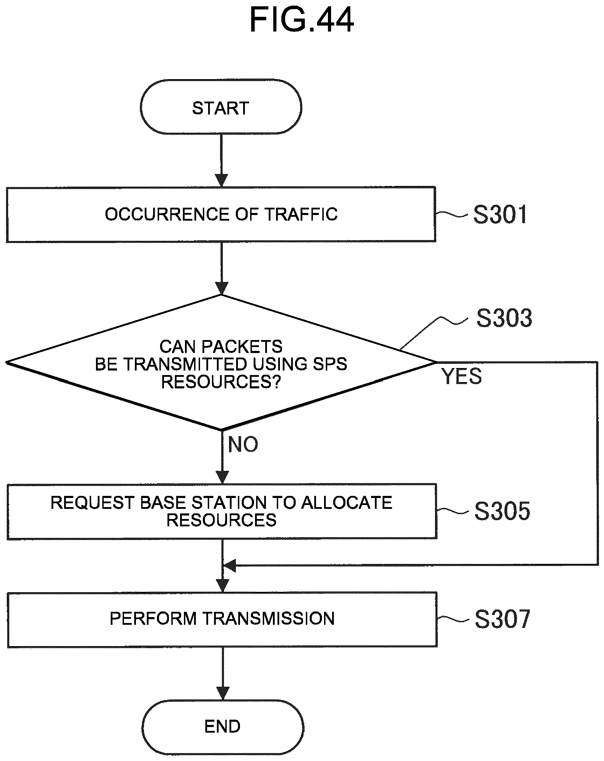

Firstly, the explanation is given about an example in which, when resource allocation is requested by the terminal device 200, the base station 100 allocates resources for transmission of the packets that the terminal device 200 is attempting to transmit at that time. For example, FIG. 44 is a flowchart for explaining an example of the flow of operations performed by the terminal device 200 when the reactive-type resource allocation is performed. More particularly, in FIG. 44 is illustrated an example of the flow of operations performed by the terminal device 200 in the case of requesting the base station 100 to allocate resources.

As illustrated in FIG. 44, when there is traffic (S301), the terminal device 200 confirms with the base station 100 about whether or not packets can be transmitted using the SPS resources reserved by the base station 100 (S303). If packets can be transmitted using the SPS resources (YES at S303), then the terminal device 200 transmits the target packets for transmission using the SPS resources (S307). This operation is identical to the example explained with reference to FIG. 43.

On the other hand, if it is difficult to transmit packets using the SPS resources (NO at S303), then the terminal device 200 requests the base station 100 to allocate resources (S305). In that case, for example, the terminal device 200 can provide the base station 100 with the information about the packets to be transmitted at that time, such as information about the demanded value of the transmission delay and the packet size. Moreover, the terminal device 200 can provide the base station 100 with the information about the jitter component α of the packet arrival interval T and the variation component β of the packet size P.

In response to the request from the terminal device 200, the base station 100 allocates resources for transmission of the packets that the terminal device 200 is attempting to transmit at that time. Herein, the base station 100 can additionally allocate resources equivalent to the deficit in the size in the case in which the packets are transmitted using the already-reserved SPS resources. More particularly, when an SPS resource equivalent to 10 resource blocks is already reserved, if the terminal device 200 is attempting to transmit packets equivalent to 15 resource blocks; the base station 100 allocates five resource blocks, which correspond to the deficit, to the terminal device 200. In that case, the terminal device 200 transmits the packets using the already-reserved SPS resource and the newly-allocated resources (S307).

As another example, separately from the already-reserved SPS resources, the base station 100 can newly allocate resources for transmission of the packets that the terminal device 200 is attempting to transmit at that time. More particularly, when the terminal device 200 is attempting to transmit packets equivalent to 15 resource blocks, the base station 100 can newly allocate 15 resource blocks to the terminal device 200 apart from the already-reserved SPS resources. In that case, the terminal device 200 transmits the packets using the newly-allocated resources (S307).

Meanwhile, in this case, the SPS resources reserved by the base station 100 represent an example of "first-type resources"; and the resources that are requested for allocation, separately from the SPS resources, from the terminal device 200 to the base station 100 represent an example of "second-type resources".

### (A-2) Method for again performing SPS configuration in addition to allocating requested resources

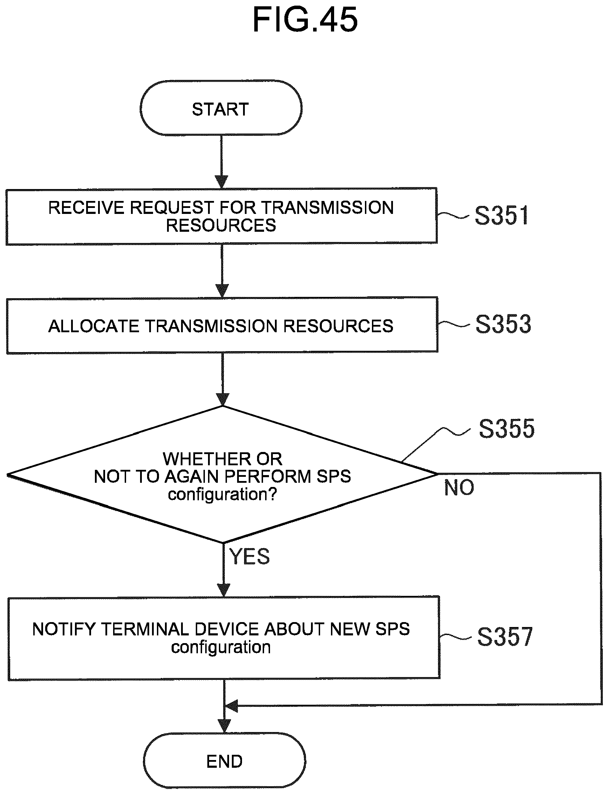

Given below is the explanation about an example in which, when resource allocation is requested by the terminal device 200, the base station 100 again performs the SPS configuration (i.e., resets the SPS configuration) in addition to allocating the requested resources. For example, FIG. 45 is a flowchart for explaining another example of the flow of operations performed by the terminal device 200 when the reactive-type resource allocation is performed. More particularly, in FIG. 45 is illustrated an example of the flow of operations performed by the base station 100 when the terminal device 200 requests the base station 100 to allocate resources. Since the operations performed by the terminal device 200 are identical to the example explained with reference to FIG. 44, the detailed explanation thereof is not given again.

As illustrated in FIG. 45, upon receiving a request from the terminal device 200 for allocating resources for packet transmission (S351), the base station newly allocates resources to the terminal device 200 (S353). That operation is identical to the operation explained with reference to FIG. 44. That is, the base station 100 can additionally allocate resources equivalent to the deficit in the size in the case in which the packets are transmitted using the already-reserved SPS resources. Moreover, separately from the SPS resources, the base station 100 can newly allocate resources for enabling the terminal device 200 to transmit the packets.

Then, the base station 100 estimates the future situation regarding the periodic packet transmission performed by the terminal device and determines whether or not to again perform SPS configuration (i.e., whether or not to reset the SPS configuration) (S355).

For example, depending on the contents of the request received from the terminal device 200, the base station 100 can determine whether or not to again perform the SPS configuration. As a specific example, when the demanded value of the transmission delay and the packet size required for the terminal device 200 to transmit packets differ from the current SPS setting values by a predetermined amount or more, the base station 100 can determine to again perform the SPS configuration. As a specific example, when an SPS resource equivalent to 10 resource blocks is already reserved, assume that 30 resource blocks are required according to the request from the terminal device 200. At that time, if the 20 resource blocks representing the deficit exceed a threshold value, the base station again performs the SPS configuration.

As another example, depending on the count of the requests received from the terminal device 200, the base station 100 can determine whether or not to again perform the SPS configuration.

As still another example, depending on the type of the service provided by the terminal device 200 (i.e., depending on the service type associated to the terminal device 200), the base station 100 can determine whether or not to again perform the SPS configuration. As a specific example, when a request is received from the terminal device 200 that transmits messages of high priority, the base station 100 can again perform the SPS configuration after estimating the future situation.

Given below is the explanation of an example of the concerned setting method in the case of again performing the SPS configuration. For example, based on the demanded values of a variety of setting meant for enabling the terminal device 200 to transmit packets, the base station 100 can update the SPS configuration.

As a specific example, when an SPS resource equivalent to 10 resource blocks is already reserved, assume that 15 resource blocks are required as per the request from the terminal device 200. In that case, for example, the base station can allocate 15 resource blocks for enabling the terminal device 200 to transmit packets and, in anticipation of the requirement of the same size in the subsequent periodic packet transmission, can also update the size of the SPS resource to 15 resource blocks.

Moreover, the base station 100 can update the SPS configuration by taking into account the jitter component α of the packet arrival interval T in the terminal device 200 and the variation component β of the packet size P. As a specific example, when an SPS resource equivalent to 10 resource blocks is already reserved, assume that 15 resource blocks are required as per the request from the terminal device 200; and assume that, considering the amount of variation in the size of the packets till then, 20 resource blocks are required. In that case, for example, the terminal device 200 requests the base station 100 to allocate the required resources (15 resource blocks) for packet transmission and also notifies the base station 100 about the amount of variation in the size of the packets. Then, for example, the base station 100 can allocate 15 resource blocks for enabling the terminal device 200 to transmit packets, and also can update the size of the SPS resource to 20 resource blocks by anticipating the variation in the size of the packets during subsequent periodic packet transmission. Moreover, when the information about the jitter component of the packet arrival interval has been obtained from the terminal device 200; the base station 100 can update, according to the jitter component, the timing of allocation (the position in the temporal axis direction) of the SPS resource, and can control the range in the temporal axis direction for allocating the SPS resource. That is, in an identical manner to the example explained earlier as the "proactive-type resource allocation", in response to the request from the terminal device 200, the base station 100 can make a reservation of the SPS resource according to the jitter component of the packet arrival interval.

### (Method of selecting resources in terminal device itself)

As an example of the method by which the terminal device 200 obtains new resources for packet transmission, a method by which the terminal device 200 itself newly selects resources to be used in packet transmission is explained below with reference to an example.

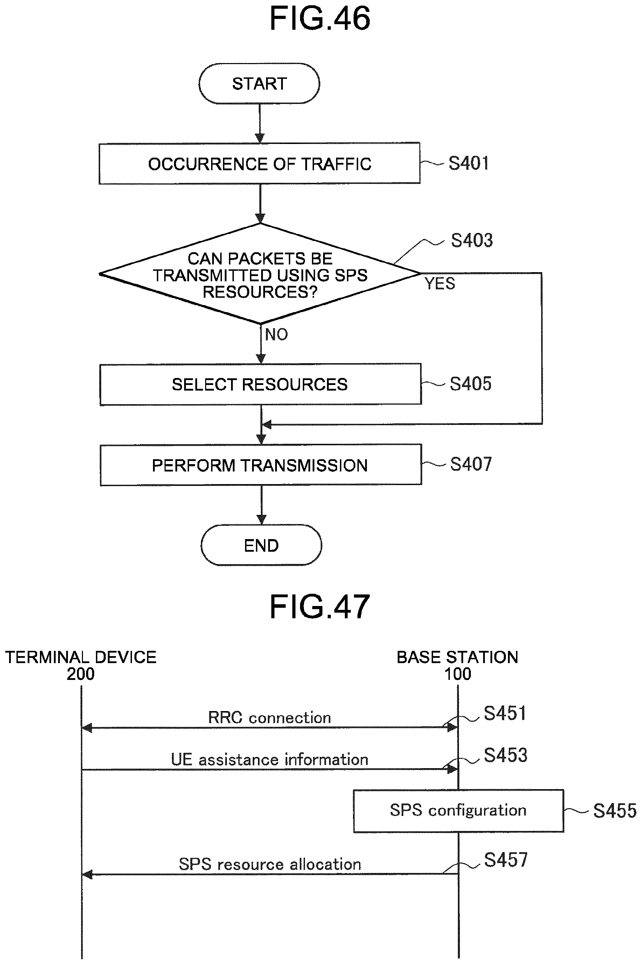

Firstly, explained below with reference to FIG. 46 is the overview of an example of the flow of operations performed by the terminal device 200 in the case of newly selecting, by itself, resources for packet transmission. FIG. 46 is a flowchart for explaining still another example of the flow of operations performed by the terminal device 200 when the reactive-type resource allocation is performed. More particularly, in FIG. 46 is illustrated an example of the flow of operations performed by the terminal device 200 in the case of newly selecting, by itself, resources for packet transmission.

As illustrated in FIG. 46, when target packets for transmission are generated (S401), the terminal device 200 confirms whether or not the packets can be transmitted using the SPS resources reserved by the base station 100 (S403). If the packets can be transmitted using the SPS resources (YES at S403), then the terminal device 200 transmits the target packets for transmission using the SPS resources (S407).

On the other hand, if it is difficult to transmit the packets using the SPS resources (NO at S403), then the terminal device 200 selects new resources for transmitting the packets (S405). At that time, the terminal device 200 can select, as the resources to be used in packet transmission, some of the resources secured in advance by the base station 100. As another example, the terminal device 200 can select, as the resources to be used in packet transmission, other resources other than the resources secured in advance by the base station 100. Regarding the method by which the terminal device 200 selects resources, the detailed explanation with specific examples is given later separately. Then, the terminal device 200 transmits the packets using the newly-selected resources (S407).

In this case, the SPS resources reserved by the base station 100 represent an example of "first-type resources", and the resources that are selected newly and separately from the SPS resources by the terminal device 200 represent an example of "second-type resources".

Explained below with reference to specific examples is the explanation of the method for selecting resources to be used in packet transmission.

### (B-1) Random selection

For example, the terminal device 200 can select, in a random manner, the resources to be used in packet transmission. At that time, the terminal device 200 can treat, as the selection targets, the resources likely to be used by the other terminal devices 200.

### (B-2) Sensing based selection

As another example, the terminal device 200 can perform sensing of the usage status of the resources used by the other terminal devices 200 and, based on the result of sensing, select the resources to be used in packet transmission. At that time, the terminal device 200 can treat, as the selection targets, the resources likely to be used by the other terminal devices 200.

### (B-3) Selection of resources according to transmittable timing of packet

As still another example, according to the transmittable timing of a generated packet, the terminal device 200 can select the resources to be used in packet transmission. As a specific example, the terminal device 200 can select the resources that enable the earliest transmission of the generated packet as the resources to be used in the packet transmission. At that time, the terminal device 200 can treat, as the selection targets, the resources likely to be used by the other terminal devices 200.

### (B-4) Selection of resources from backup resource pool (BRP)

The terminal device 200 can select the resources to be used in packet transmission from a resource pool that is secured as backup by the base station 100. In the following explanation, the resource pool that is secured as backup by the base station 100 is also referred to as a "backup resource pool (BRP)".

For example, FIG. 47 is a sequence diagram for explaining an example of the flow of operations performed regarding the setting of the backup resource pool (BRP). As illustrated in FIG. 47, upon getting connected to a cell, that is, upon establishing communication with the base station 100 (S451), the terminal device 200 provides the base station 100 with UE assistance information (S453). The UE assistance information contains information usable by the base station 100 in the SPS (i.e., contains SPS assistance information). Based on the UE assistance information provided by the terminal device 200, the base station 100 performs the SPS configuration (S455). That is, for example, the base station 100 decides on the size of the SPS resources and the SPS period, and allocates the SPS resources.

Moreover, in addition to performing the SPS configuration, the base station 100 performs BRP setting. At that time, for example, the base station 100 can set, as the BRP, some part of a common resource pool that is configured for the terminal devices 200 performing inter-device communication such as the V2X communication.

Furthermore, for example, the base station 100 can set a common BRP for a plurality of terminal devices 200 (eventually, all terminal devices 200). Moreover, as another example, the base station 100 can set mutually different BRPs for a plurality of terminal devices 200. As a specific example, when each of a plurality of terminal devices 200 has a different packet arrival timing; the base station 100 can set, for each terminal device 200, the BRP having the position on the temporal axis adjusted according to the packet arrival timing in that terminal device 200.

Furthermore, the base station 100 can change the BRP setting (for example, the position on the temporal axis and the size) according to the situation. In that case, for example, the base station 100 can update the BRP setting according to the information such as the count of the terminal devices 200 in which the BRP is to be set; the priority information of transmission messages; the service type; the travelling environments of the terminal devices 200; and the travelling speeds of the terminal devices 200. Of course, the base station 100 need not change the BRP setting.

Subsequently, as illustrated in FIG. 47, the base station 100 notifies the terminal device 200 about the information regarding the allocated SPS resources and the BRP (SPS&BRP resource allocation) (S457).

As explained above, for example, when it is difficult to perform packet transmission using the SPS resources, the terminal device 200 can select, from the BRP, the resources to be used in packet transmission.

As a specific example, when the use of the SPS resources in packet transmission makes it difficult to meet the request for transmission delay (latency), the terminal device 200 can select, from the BRP, the resources to be used in packet transmission.

As still another example, when the packet size exceeds the size of the SPS resources thereby resulting in a deficit of resources for packet transmission, the terminal device 200 can select, from the BRP, the resources to be used in packet transmission. At that time, the terminal device 200 can additionally select resources that are equivalent to the deficit in the size in the case in which the packets are transmitted using the SPS resources. In that case, the terminal device 200 can transmit the packets using the SPS resources and the resources additionally selected from the BRP. As still another example, separately from the SPS resources, the terminal device 200 can select, from the BRP, the resources to be used in packet transmission. In that case, the terminal device 200 can transmit packets using the resources selected from the BRP instead of using the SPS resources.

### (B-5) Selection resources not used by other terminal devices

As another example, by recognizing the situation regarding the selection of resources by the other terminal devices 200, the concerned terminal device 200 can select the resources not used by the other terminal devices 200.

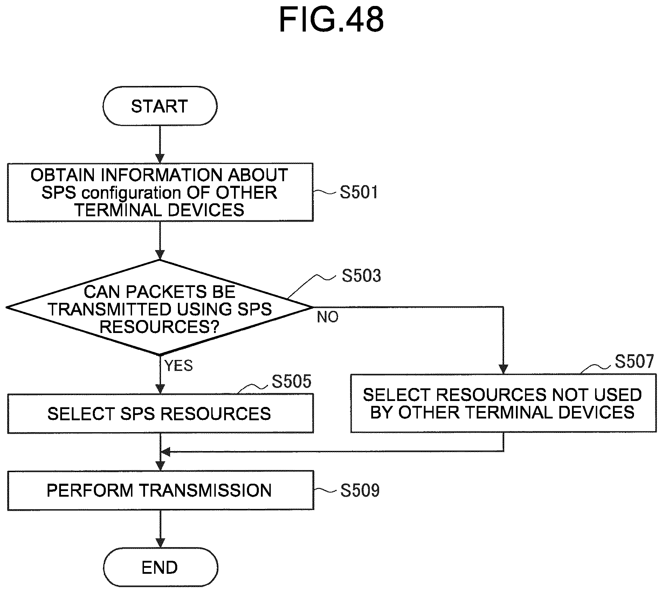

For example, FIG. 48 is a flowchart for explaining still another example of the flow of operations performed by the terminal device 200 when the reactive-type resource allocation is performed. More particularly, in FIG. 48 is illustrated another example of the operations performed by the terminal device 200 in the case in which the terminal device 200 itself newly selects resources to be used in packet transmission. In other words, in FIG. 48 is illustrated an example in which the terminal device 200 selects resources not used by the other terminal devices 200.

As illustrated in FIG. 48, the concerned terminal device 200 obtains information about the SPS configuration of the other terminal devices 200 (S501). As a result, based on the obtained information, the concerned terminal device 200 becomes able to recognize the resources not used by the other terminal devices 200. In this case, the concerned terminal device 200 can recognize the resources not used by the other terminal devices 200 based on, for example, the information transmitted (for example, broadcast) from the base station 100. As another example, the concerned terminal device 200 and the other terminal devices 200 can mutually share the information about the respective SPS configurations. In that case, the base station 100 can perform the SPS configuration in a plurality of terminal devices 200, which mutually shares the information, using a common SPS Cell RNTI. At that time, the base station 100 need not scramble the SPS Cell RNTI. On the other hand, in the case of scrambling the SPS Cell RNTI, the base station 100 can use a common scrambling sequence for a plurality of terminal devices 200 that mutually shares the information.

Subsequently, when target packets for transmission are generated, the terminal device 200 confirms whether or not the packets can be transmitted using the SPS resources (S503). If the packets can be transmitted using the SPS resources (YES at S503), then the terminal device 200 selects the SPS resources (S505) and transmits the target packets for transmission (S509).

On the other hand, if it is difficult to transmit the packets using the SPS resources (NO at S503), the terminal device 200 can select, as the resources to be used in packet transmission, the resources not used by the other terminal devices 200 as recognized according to the shared information (S507). Then, the terminal device 200 transmits the packets using the selected resources (i.e., using the resources not used by the other terminal devices 200) (S509).

Meanwhile, the terminal devices 200 among which the information about the SPS configuration is to be shared can be set based on predetermined conditions.

As a specific example, the terminal devices 200 among which the information is to be shared can be set according to the attributes of the packets transmitted by those terminal devices 200. As a more specific example, a plurality of terminal devices 200 having approximate distribution (eventually, substantially identical distribution) of the packet arrival timings can be set as the terminal devices 200 among which the information is to be shared. As another example, a plurality of terminal devices 200 having approximate distribution (eventually, substantially identical distribution) of the packet sizes can be set as the terminal devices 200 among which the information is to be shared. As still another example, a plurality of terminal devices 200 having substantially identical priority information of the packets can be set as the terminal devices 200 among which the information is to be shared. As still another example, a plurality of terminal devices 200 having substantially identical type of the provided services (substantially identical service type) can be set as the terminal devices 200 among which the information is to be shared.

Meanwhile, the terminal devices 200 among which the information is to be shared can be set according to the degree of interference among them. As a more specific example, a plurality of terminal devices 200 among which interference is difficult to occur can be set as the terminal devices 200 among which the information is to be shared.

### •Supplementary explanation

Meanwhile, the selection methods explained above are only exemplary, and do not necessarily limit the method by which the terminal device 200 itself selects resources. As a specific example, it is also possible to combine two or more of the selection methods explained above. As a more specific example, the terminal device 200 can randomly select, from the backup resource pool, the resources to be used in packet transmission.

### <4.2.3. Modification example>

Given below is the explanation of a modification example according to the application concerned.

In the case of the reactive-type resource allocation, since it is possible to have a situation in which the resources that are not secured in advance are used. Hence, it is likely to have a situation in which packet transmission is unsuccessful on a consecutive basis, such as a situation in which the periodic packet transmission is unsuccessful every time. In view of such a situation, when it is inferred by referring to the SPS configuration that the subsequent packet transmission is also likely to be unsuccessful, the terminal device 200 can notify the base station 100 about the same and request the base station 100 to again perform the SPS configuration. Moreover, regardless of a request from the terminal device 200, the base station 100 can again perform the SPS configuration based on its own judgement.

### (Operations performed by terminal device)

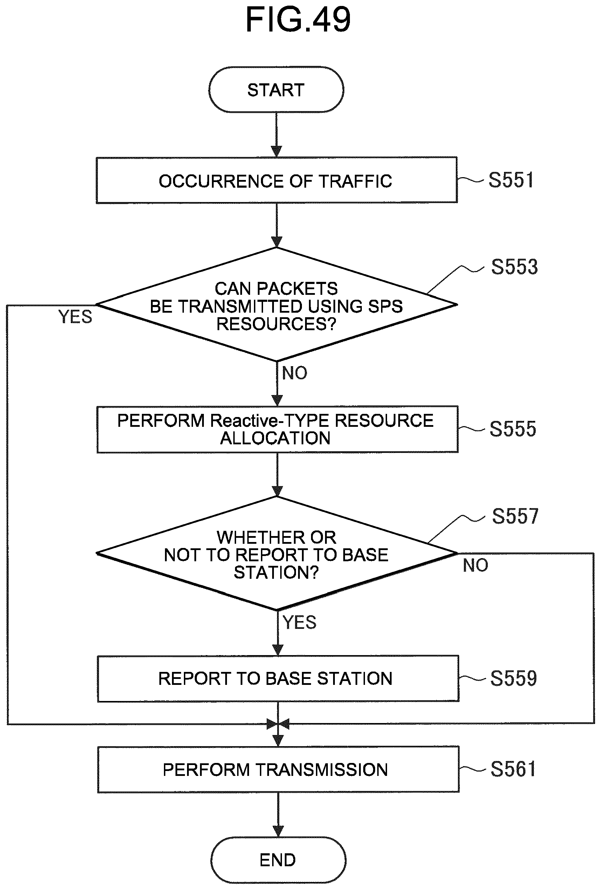

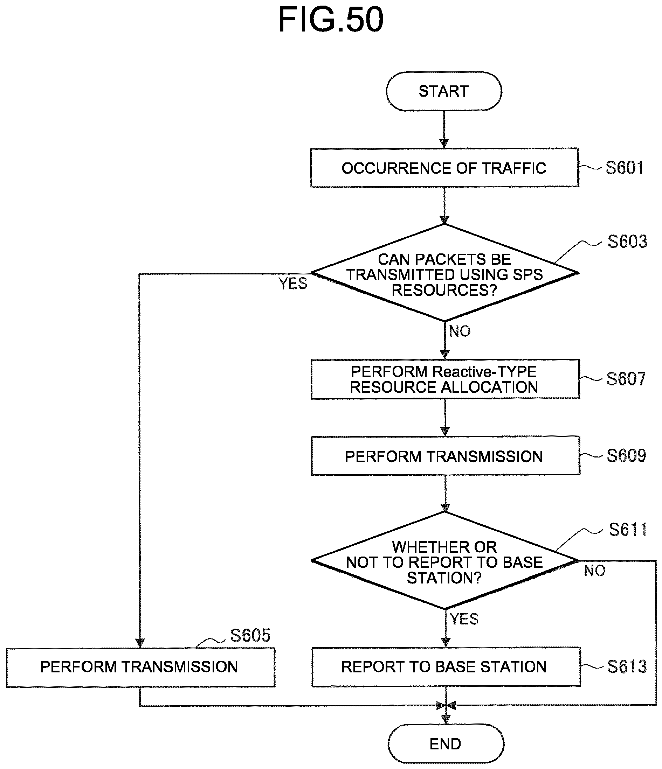

Explained below with reference to FIGS. 49 and 50 are examples of the operations performed by the terminal device 200 in the system according to the modification example. For example, FIG. 49 is a flowchart for explaining an example of the flow of operations performed by the terminal device 200 in the system according to the modification example.

In the example illustrated in FIG. 49, when there is traffic (i.e., when target packets for transmission are generated) (S551), the terminal device 200 confirms with the base station 100 about whether or not packets can be transmitted using the SPS resources reserved by the base station 100 (S553). If it is possible to transmit the packets using the SPS resources (YES at S553), the terminal device 200 transmits the target packets for transmission using the SPS resources (S561).

On the other hand, when it is difficult to transmit the packets using the SPS resources (NO at S553), the terminal device 200 obtains resources usable in packet transmission as explained earlier in the example of the "reactive-type resource allocation" (S555). Moreover, based on the SPS configuration at that time, the terminal device 200 determines whether or not subsequent packet transmission is possible (i.e., whether or not subsequent periodic packet transmission is possible) and determines whether or not to report the determination result to the base station 100 (S557). Regarding an example of the method for determining about whether or not packet transmission is possible, the detailed explanation is given later separately.

If it is determined that the base station 100 needs to be reported (YES at S557), then the terminal device 200 reports, to the base station 100, the fact that subsequent packet transmission may be unsuccessful (S559), and transmits the packets using the newly-obtained resources (S561). On the other hand, if it is determined that the base station 100 need not to be reported (NO at S559), then the terminal device 200 does not report to the base station 100 and transmits the packets using the newly-obtained resources (S561).

FIG. 50 is a flowchart for explaining another example of the flow of operations performed by the terminal device 200 in the system according to the modification example.

In the example illustrated in FIG. 50, when there is traffic (i.e., when target packets for transmission are generated) (S601), the terminal device 200 confirms with the base station 100 about whether or not packets can be transmitted using the SPS resources reserved by the base station 100 (S603). If it is possible to transmit the packets using the SPS resources (YES at S603), the terminal device 200 transmits the target packets for transmission using the SPS resources (S605).

On the other hand, if it is difficult to transmit the packets using the SPS resources (NO at S603); as explained earlier in the example of the "reactive-type resource allocation", the terminal device 200 obtains the resources usable in transmitting the packets (S607). Then, the terminal device 200 transmits the packets using the newly-obtained resources (S609).

Subsequently, based on the SPS configuration at that time, the terminal device 200 determines whether or not the subsequent packet transmission is possible and determines whether or not to report the determination result to the base station 100 (S611). Regarding an example of the method for determining whether or not packet transmission is possible, the detailed explanation is given later separately.

If it is determined that the base station 100 needs to be reported (YES at S611); then the terminal device 200 reports, to the base station 100, the fact that the subsequent packet transmission is likely to be unsuccessful (S613). On the other hand, if it is determined that the base station 100 need not be reported (NO at S611), the terminal device 200 does not report to the base station 100.

Till now, the explanation with reference to FIGS. 49 and 50 was given about examples of the flow of operations performed by the terminal device 200 in the system according to the modification example.

### (Determination of whether or not base station needs to be reported)

Given below is the explanation of an example of the method by which, based on the SPS configuration at that time, the terminal device 200 determines whether or not the subsequent packet transmission is possible and determines whether or not to report the determination result to the base station 100.

For example, based on the SPS configuration at that time, according to whether or not it is difficult to maintain the QoS (Quality of Service) of the communication; the terminal device 200 can report, to the base station 100, the fact that the subsequent packet transmission is likely to be unsuccessful. As a more specific example, if m number of transmission failures occur in a row (where m is an integer equal to or greater than one) for j number of times in a row (where j is an integer equal to or greater than one), the terminal device 200 can report the same to the base station 100. Herein, the variables m and j can be decided by the terminal device 200 itself, or can be decided by the base station 100. Moreover, regarding the variables m and j, the same values can be set in common in a plurality of terminal devices 200, or different values can be set individually in a plurality of terminal devices 200.

As still another example, when an NACK is received with respect to packet transmission, the terminal device 200 can report, to the base station 100, the fact that the subsequent packet transmission is likely to be unsuccessful.

### (Contents of report from terminal device to base station)

Given below is the explanation of an example of the contents of the report sent by the terminal device 200 to the base station 100 when the subsequent packet transmission is likely to be unsuccessful.

For example, in the case of reporting, to the base station 100, the fact that the subsequent packet transmission is likely to be unsuccessful; the terminal device 200 can include, in the report, at least the information about the reason for unsuccessful transmission. As a specific example, the terminal device 200 can report, to the base station 100, the fact that it is difficult to meet the request for transmission delay (latency) or the fact that there is a deficit of resources in packet transmission if only the SPS resources are used.

Moreover, the terminal device 200 can include, in the report to the base station 100, the information regarding the packet transmission. As a specific example, the terminal device 200 can include, in the report to the base station 100, the information indicating the number of times for which the QoS could not be maintained in the packet transmission of the past.

### (Operations performed by base station)

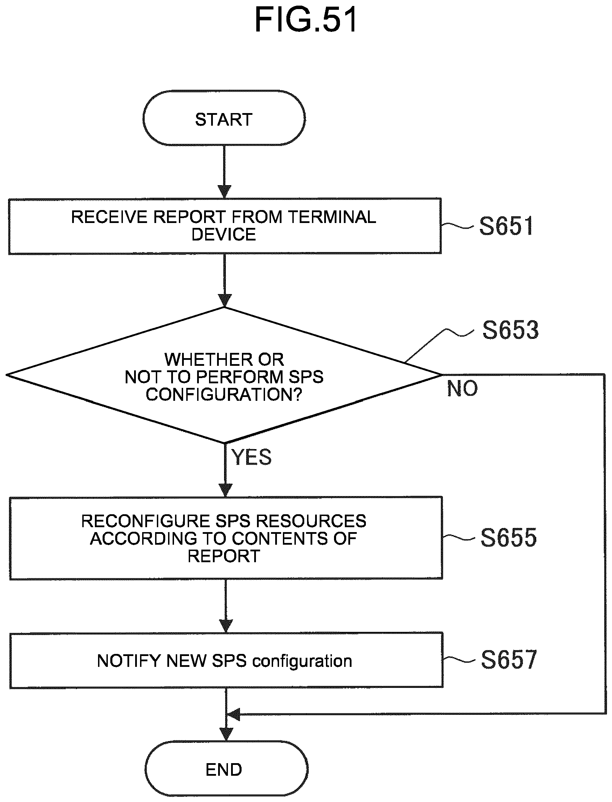

Explained below with reference FIG. 51 is an example of the flow of operations performed by the base station 100 upon receiving the report from the terminal device 200. FIG. 51 is a flowchart for explaining an example of the flow of operations performed by the base station 100 in the system according to the modification example, and particularly for explaining the flow of operations performed upon receiving the report from the terminal device 200.

As illustrated in FIG. 51, when the report indicating that the subsequent packet transmission is likely to be unsuccessful is received from the terminal device 200 (S651), the base station 100 determines whether or not to again perform the SPS configuration (i.e., whether or not to perform SPS reconfiguration) according to the contents of the report (S653). As a specific example, when it is determined that the terminal device 200, from which the report is received, is finding it difficult to maintain the QoS of the communication; the base station 100 can determine that the SPS configuration needs to be performed again. As a more specific example, when the report is received for n number of times or more (where n is an integer equal to or greater than one) is received from the terminal device 200; the base station 100 determines that the terminal device 200 is finding it difficult to maintain the QoS of the communication, and can determine that the SPS configuration needs to be performed again. Herein, regarding the variable n, the same value can be set in common in a plurality of terminal devices 200, or different values can be set individually in a plurality of terminal devices 200.

When it is decided to again perform the SPS configuration (YES at S653), the base station 100 reconfigures the SPS resources according to the contents of the report received from the terminal device 200 (S655). At that time, in an identical manner to the example explained earlier as the "proactive-type resource allocation", the base station 100 can reconfigure the SPS resources (i.e., can make a reservation of the SPS resources) according to the jitter component of the packet arrival interval. Then, the base station 100 notifies the terminal device 200 about the information regarding the new SPS configuration (S657). As a result, at the subsequent packet transmission timings, based on the new SPS configuration, the terminal device 200 becomes able to identify the SPS resources to be used in packet transmission.

Meanwhile, if it is determined that the SPS configuration need not be again performed (NO at S653), the base station 100 need not perform the operations at S655 and S657.

Till now, the explanation was given about the modification example of the system according to the application concerned.

### <4.3. Evaluation>

As explained above, in the system according to the second embodiment of the application concerned, the terminal device notifies the base station about the first-type information regarding the conditions for performing periodic packet transmission to the other terminal devices during the inter-device communication. The first-type information contains, for example, at least either the information related to the jitters in the packets that are periodically transmitted during the inter-device communication, or the information about the size variation of the packets. After notifying the first-type information, the terminal device obtains, from the base station, the second-type information about the transmission resources allocated to be usable in the periodic packet transmission. Then, based on the second-type information, the terminal device selects the resources to be used in the periodic packet transmission.

With such a configuration, for example, situations in which there is variability in the packet transmission timings in accordance with the jitter component included in the traffic or in situations in which there is variation in the size of the transmitted packets, the base station becomes able to allocate resources in a more flexible manner. That is, in the system according to the second embodiment of the application concerned, resources can be allocated in a more flexible manner in the inter-device communication including the V2X communication. Meanwhile, from among a plurality of terminal devices performing the inter-device communication, some terminal devices represent examples of the "first-type terminal device", and the remaining terminal devices represent examples of the "second-type terminal device".

Moreover, in the system according to the embodiments of the application concerned, according to the information about first-type resources allocated for use in packet transmission during the inter-device communication and according to the information about the packets scheduled to be transmitted, the terminal device requests the base station to allocate second-type resources that are different than the first-type resources.

With such a configuration, for example, even when it is difficult to transmit packets using the first-type resources that are allocated in advance (reserved), the terminal device can transmit the packets using the second-type resources that are newly allocated by the base station in response to the request. That is, even in situations in which there is variability in the packet transmission timings in accordance with the jitter component included in the traffic or in situations in which there is variation in the size of the transmitted packets, the terminal device can issue a resource allocation request to the base station according to the situation and thus can transmit packets in a stable manner.

Moreover, in the system according to the embodiments of the application concerned, according to the information about first-type resources allocated for use in packet transmission during the inter-device communication and according to the information about the packets scheduled to be transmitted, the terminal device selects second-type resources that are different than the first-type resources.

With such a configuration, for example, even when it is difficult to transmit packets using the first-type resources that are allocated in advance (reserved), the terminal device can transmit the packets using the newly-selected second-type resources. That is, even in situations in which there is variability in the packet transmission timings in accordance with the jitter component included in the traffic or in situations in which there is variation in the size of the transmitted packets, the terminal device can newly select resources according to the situation and thus can transmit packets in a stable manner.

Particularly, in the NR V2X communication, use cases requiring high reliability, low delay, high-speed communication, and high capacity are supported that were not supportable in the LTE-based V2X communication in the past. In such a case too, in the system according to the second embodiment of the application concerned, based on the configuration explained above, each of a variety of use cases supported in the NR V2X communication can be handled in a more flexible manner.

### «5. Application examples»

The technology disclosed in the application concerned can be applied in various products. For example, the base station 100 can be implemented as an eNB (evolved Node B) of either the macro eNB type or the small eNB type. A small eNB, such as a pico eNB, or a micro eNB, or a home (femto) eNB, can be an eNB covering smaller cells than macro cells. Alternatively, the base station 100 can be implemented as a base station of some other type such as NodeB or BTS (Base Transceiver Station). The base station 100 can include the main body (also called the base station device) that controls the wireless communication, and include one or more RRHs (Remote Radio Heads) placed at different locations than the main body. Still alternatively, various types of terminals (described later) can be configured to execute, temporarily or permanently, the base station function, and operate as the base station 100.

Meanwhile, for example, the terminal device 200 or 300 can be implemented as a mobile device such as a smartphone, a tablet PC (Personal Computer), a note PC, a portable game terminal, a portable-type/dongle-type mobile router, or a digital camera; or can be implemented as an in-vehicle terminal such as a car navigation device. Alternatively, the terminal device 200 or 300 can be implemented as a terminal performing M2M (Machine To Machine) communication (also called an MTC (Machine Type Communication) terminal). Still alternatively, the terminal device 200 or 300 can be a wireless communication module (for example, an integrated circuit module configured using a single base station 100 die) installed on such terminals.

### <5.1. Application examples related to base station>

### (First application example)

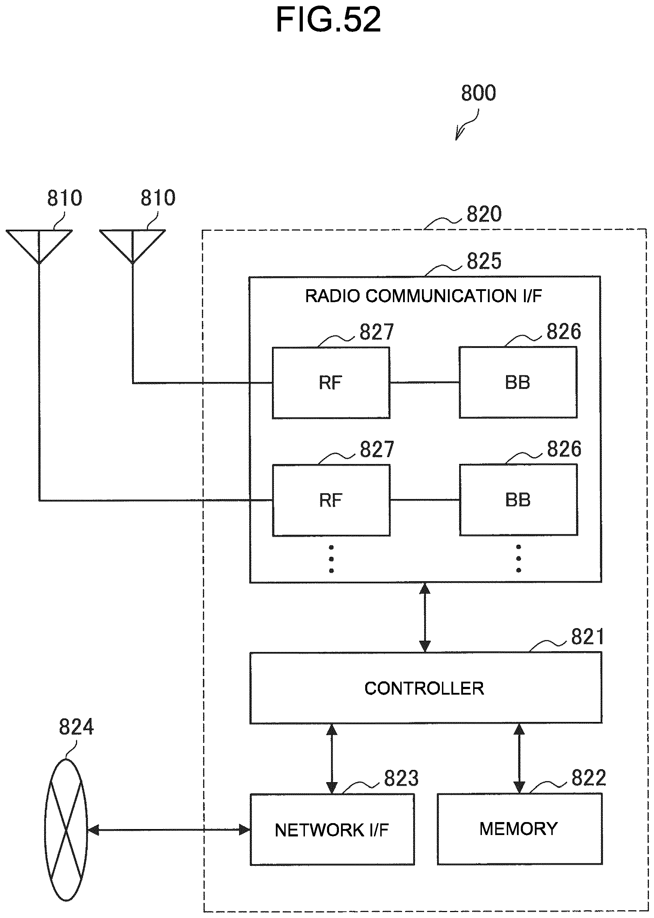

FIG. 52 is a block diagram illustrating a first example of a schematic configuration of the eNB in which the technology disclosed in the application concerned is applicable. An eNB 800 includes one or more antennas 810 and a base station device 820. The antennas 810 can be connected to the base station device 820 by RF cables.

Each antenna 810 includes one or more antenna elements (for example, a plurality of antenna elements constituting a MIMO antenna), and is used by the base station device 820 in transmitting and receiving radio signals. The eNB 800 includes a plurality of antennas 810 as illustrated in FIG. 52, and each antenna 810 corresponds to, for example, one of a plurality of frequency bands used by the eNB 800. Meanwhile, in the example illustrated in FIG. 52, although the eNB 800 includes a plurality of antennas 810, it can alternatively include only a single antenna 810.

The base station device 820 includes a controller 821, a memory 822, a network interface 823, and a wireless communication interface 825.

The controller 821 can be, for example, a CPU or a DSP, and implements various functions of the upper layer of the base station device 820. For example, the controller 821 generates data packets from the data present in the signals processed by the wireless communication interface 825, and transfers the generated data packets via the network interface 823. Moreover, the controller 821 can generate bundled packets by bundling the data received from a plurality of baseband processors, and transfer the bundled packets. Furthermore, the controller 821 can have logical functions for performing control such as radio resource control, radio bearer control, mobility management, admission control, and scheduling. That control can be performed in coordination with the surrounding eNBs or core network nodes. The memory 822 includes a RAM and a ROM, and is used to store programs executed by the controller 821 and to store a variety of control data (such as a terminal list, transmission power data, and scheduling data).

The network interface 823 is a communication interface for connecting the base station device 820 to a core network 824. The controller 821 can communicate with core network nodes and the other eNBs via the network interface 823. In that case, the eNB 800 can be connected to the core network nodes and the other eNBs by a logical interface (such as an S1 interface or an X2 interface). The network interface 823 can be a wired communication interface, or can be a wireless communication interface for radio backhauling. When the network interface 823 is a wireless communication interface, it can perform wireless communication using higher frequency bands than the frequency bands used by the wireless communication interface 825.

The wireless communication interface 825 supports any one cellular communication method such as the LTE (Long Term Evolution) or the LTE-Advanced, and provides wireless connection via the antennas 810 to the terminals located inside the cell of the eNB 800. Typically, the wireless communication interface 825 can include a baseband (BB) processor 826 and an RF circuit 827. The BB processor 826 can perform, for example, encoding/decoding, modulation/demodulation, and multiplexing/inverse multiplexing; and performs a variety of signal processing for each layer (for example, L1, MAC (Medium Access Control), RLC (Radio Link Control), and PDCP (Packet Data Convergence Protocol)). The BB processor 826 can include, in place of the controller 821, some or all of the logical functions mentioned earlier. The BB processor 826 can be a module including a memory for storing a communication control program, a processor for executing that program, and related circuits; and the functions of the BB processor 826 can be changed by updating the communication control program. Alternatively, the module can be a card or a blade that is inserted in a slot of the base station device 820, or can be a chip installed on the card or the blade. The RF circuit 827 can include a mixer, a filter, and an amplifier; and transmits and receives radio signals via the antennas 810.

The wireless communication interface 825 includes a plurality of BB processors 826 as illustrated in FIG. 52, and each BB processor 826 can correspond to, for example, one of a plurality of frequency bands used by the eNB 800. Moreover, the wireless communication interface 825 includes a plurality of RF circuits 827 as illustrated in FIG. 52, and each RF circuit 827 can correspond to, for example, one of a plurality of antenna elements. In FIG. 52 is illustrated the example in which the wireless communication interface 825 includes a plurality of BB processors 826 and a plurality of RF circuits 827. However, alternatively, the wireless communication interface 825 can include only a single BB processor 826 or only a single RF circuit 827.

In the eNB 800 illustrated in FIG. 52, one or more constituent elements of the base station 100 explained with reference to FIG. 2 (i.e., at least one of the communication control unit 151, the information obtaining unit 153, and the notifying unit 155) can be implemented in the wireless communication interface 825. Alternatively, at least some of the constituent elements can be installed in the controller 821. As an example, in the eNB 800, a module including either some part of the wireless communication interface 825 (for example, the BB processor 826) or the entire wireless communication interface 825 and/or the controller 821 can be installed, and the abovementioned one or more constituent elements can be implemented in that module. In that case, the module can store therein a program meant for making the processor function as the abovementioned one or more constituent elements (in other words, a program meant for executing the operations of the abovementioned one or more constituent elements in the processor), and can execute that program. As another example, the program meant for making a processor function as the abovementioned one or more constituent elements can be installed in the eNB 800, and the wireless communication interface 825 (for example, the BB processor 826) and/or the controller 821 can execute that program. As described above, the eNB 800, or the base station device 820, or the abovementioned module can be provided as a device including the abovementioned one or more constituent elements; or a program meant for making a processor function as the abovementioned one or more constituent elements can be provided. Alternatively, a readable recording medium in which the program is recorded can be provided.

Moreover, in the eNB 800 illustrated in FIG. 52, the wireless communication unit 120 explained with reference to FIG. 2 can be implemented in the wireless communication interface 825 (for example, the RF circuit 827). Furthermore, the antenna unit 110 can be implemented in the antenna 810. Moreover, the network communication unit 130 can be implemented in the controller 821 and/or the network interface 823. Furthermore, the memory unit 140 can be implemented in the memory 822.

### (Second application example)

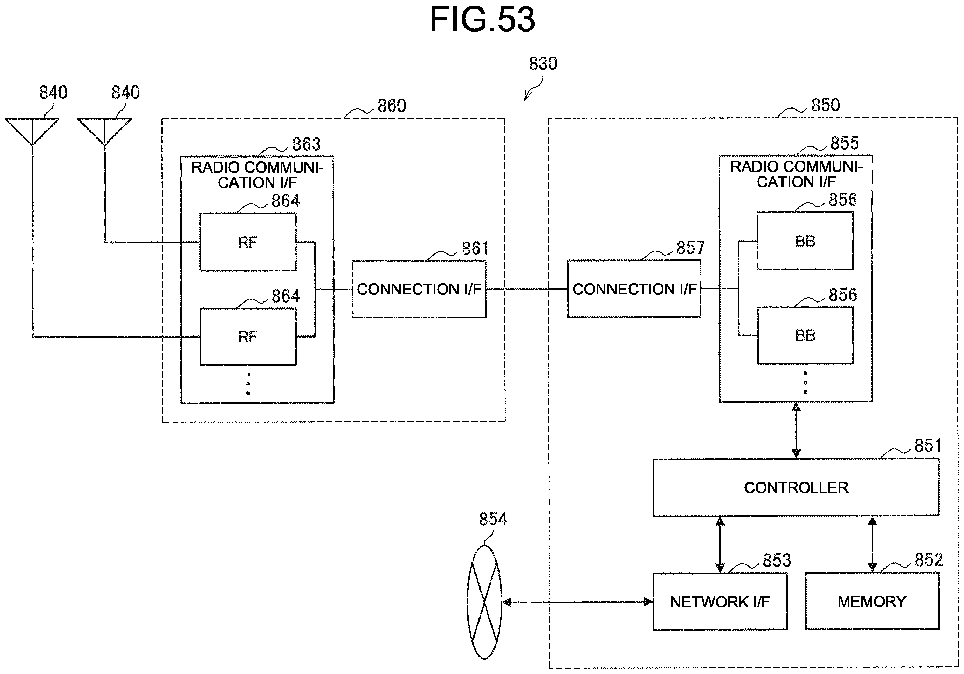

FIG. 53 is a block diagram illustrating a second example of a schematic configuration of the eNB in which the technology disclosed in the application concerned is applicable. An eNB 830 includes one or more antennas 840, a base station device 850, and an RRH 860. Each antenna 840 is connected to the RRH 860 by an RF cable. Moreover, the base station device 850 and the RRH 860 can be connected to each other by a high-speed line such as an optical fiber cable.

Each antenna 840 includes one or more antenna elements (for example, a plurality of antenna elements constituting a MIMO antenna), and is used by the RRH 860 in transmitting and receiving radio signals. The eNB 830 includes a plurality of antennas 840 as illustrated in FIG. 53, and each antenna 840 corresponds to, for example, one of a plurality of frequency bands used by the eNB 830. Meanwhile, in the example illustrated in FIG. 53, although the eNB 830 includes a plurality of antennas 840, it can alternatively include only a single antenna 840.

The base station device 850 includes a controller 851, a memory 852, a network interface 853, a wireless communication interface 855, and a connection interface 857. The controller 851, the memory 852, and the network interface 853 are identical to the controller 821, the memory 822, and the network interface 823, respectively, explained with reference to FIG. 52.

The wireless communication interface 855 supports any one cellular communication method such as the LTE or the LTE-Advanced, and provides wireless connection via the RRH 860 and the antennas 840 to the terminals located inside the sector corresponding to the RRH 860. Typically, the wireless communication interface 855 can include a BB processor 856. The BB processor 856 is identical to the BB processor 826 explained with reference to FIG. 52, except for the fact that the BB processor 856 is connected to an RF circuit 864 of the RRH 860 via the connection interface 857. The wireless communication interface 855 includes a plurality of BB processors 856 as illustrated in FIG. 53, and each BB processor 856 can correspond to, for example, one of a plurality of frequency bands used by the eNB 830. Meanwhile, in the example illustrated in FIG. 53, although the wireless communication interface 855 includes a plurality of BB processors 856, it can alternatively include only a single BB processor 856.

The connection interface 857 is meant for connecting the base station device 850 (the wireless communication interface 855) to the RRH 860. The connection interface 857 can be a communication module for enabling communication in the abovementioned high-speed line connecting the base station device 850 (the wireless communication interface 855) and the RRH 860.

The RRH 860 includes a connection interface 861 and a wireless communication interface 863.

The connection interface 861 is an interface for connecting the RRH 860 (the wireless communication interface 863) to the base station device 850. The connection interface 861 can be a communication module enabling communication in the high-speed line.

The wireless communication interface 863 transmits and receives radio signals via the antenna 840. Typically, the wireless communication interface 863 can include the RF circuit 864. The RF circuit 864 can include a mixer, a filter, and an amplifier; and transmits and receives radio signals via the antennas 840. The wireless communication interface 863 includes a plurality of RF circuits 864 as illustrated in FIG. 53, and each RF circuit 864 can correspond to, for example, one of a plurality of antenna elements. Meanwhile, in the example illustrated in FIG. 53, although the wireless communication interface 863 includes a plurality of RF circuits 864, it can alternatively include only a single RF circuit 864.

In the eNB 830 illustrated in FIG. 53, one or more constituent elements included in the base station 100 explained with reference to FIG. 2 (i.e., at least one of the communication control unit 151, the information obtaining unit 153, and the notifying unit 155) can be implemented in the wireless communication interface 855 and/or the wireless communication interface 863. Alternatively, at least some of the constituent elements can be installed in the controller 851. As an example, in the eNB 830, a module including either some part of the wireless communication interface 855 (for example, the BB processor 856) or the entire wireless communication interface 855 and/or the controller 851 can be installed, and the abovementioned one or more constituent elements can be implemented in that module. In that case, the module can store therein a program meant for making a processor function as the abovementioned one or more constituent elements (in other words, a program meant for executing the operations of the abovementioned one or more constituent elements in a processor), and can execute that program. As another example, the program meant for making a processor function as the abovementioned one or more constituent elements can be installed in the eNB 830, and the wireless communication interface 855 (for example, the BB processor 856) and/or the controller 851 can execute that program. As described above, the eNB 830, the base station device 850, or the abovementioned module can be provided as a device including the abovementioned one or more constituent elements; or a program meant for making a processor function as the abovementioned one or more constituent elements can be provided. Alternatively, a readable recording medium in which the program is recorded can be provided.

Moreover, in the eNB 830 illustrated in FIG. 53, the wireless communication unit 120 that is explained with reference to FIG. 2 can be implemented in the wireless communication interface 863 (for example, the RF circuit 864). Furthermore, the antenna unit 110 can be implemented in the antenna 840. Moreover, the network communication unit 130 can be implemented in the controller 851 and/or the network interface 853. Furthermore, the memory unit 140 can be implemented in the memory 852.

### <5.2. Application examples related to terminal device>

### (First application example)

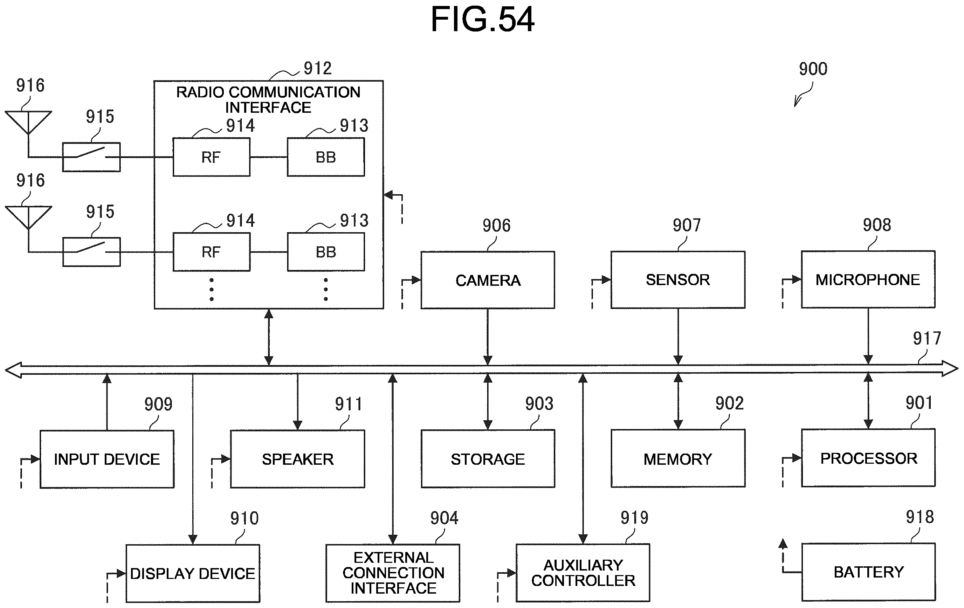

FIG. 54 is a block diagram illustrating an example of a schematic configuration of a smartphone 900 in which the technology disclosed in the application concerned is applicable. The smartphone 900 includes a processor 901, a memory 902, a storage 903, an external connection interface 904, a camera 906, a sensor 907, a microphone 908, an input device 909, a display device 910, a speaker 911, a wireless communication interface 912, one or more antenna switches 915, one or more antennas 916, a bus 917, a battery 918, and an auxiliary controller 919.

The processor 901 can be, for example, a CPU or an SoC (System on Chip), and controls the functions of the application layer and the other layers of the smartphone 900. The memory 902 includes a RAM and a ROM, and is used to store the programs executed by the processor 901 and to store data. The storage 903 can include a memory medium such as a semiconductor memory or a hard disk. The external connection interface 904 is an interface for connecting an external device, such as a memory card or a USB (Universal Serial Bus) device, to the smartphone 900.

The camera 906 includes an imaging device such as a CCD (Charge Coupled Device) or a CMOS (Complementary Metal Oxide Semiconductor), and generates captured images. The sensor 907 can include a group of sensors such as a positioning sensor, a gyro sensor, a geomagnetic sensor, and an acceleration sensor. The microphone 908 converts the sound input to the smartphone 900 into sound signals. The input device 909 includes, for example, a touch sensor for detecting a touch on the screen of the display device 910, or a keypad, or a keyboard, or buttons or switches; and receives operations and information input from the user. The display device 910 has a screen such as a liquid crystal display (LCD) or an organic light emitting diode (OLED) display, and displays output images of the smartphone 900. The speaker 911 converts the sound signals, which are output from the smartphone 900, into sound.

The wireless communication interface 912 supports any one cellular communication method such as the LTE or the LTE-Advanced, and implements wireless communication. Typically, the wireless communication interface 912 can include a BB processor 913 and an RF circuit 914. The BB processor 913 can perform, for example, encoding/decoding, modulation/demodulation, and multiplexing/inverse multiplexing; and performs a variety of signal processing for wireless communication. The RF circuit 914 can include a mixer, a filter, and an amplifier; and transmits and receives radio signals via the antennas 916. Meanwhile, the wireless communication interface 912 can be a one-chip module in which the BB processor 913 and the RF circuit 914 are integrated. Moreover, the wireless communication interface 912 can include a plurality of BB processors 913 and a plurality of RF circuits 914 as illustrated in FIG. 54. Meanwhile, in the example illustrated in FIG. 54, although the wireless communication interface 912 includes a plurality of BB processors 913 and a plurality of RF circuits 914, it can alternatively include only a single BB processor 913 or only a single RF circuit 914.

Moreover, in addition to supporting the cellular communication method, the wireless communication interface 912 can also support other types of wireless communication methods such as the near field communication method, the proximity wireless communication method, and the wireless LAN (Local Area Network) method. In that case, the wireless communication interface 912 can include the BB processors 913 and the RF circuits 914 separately for each wireless communication method.

Each antenna switch 915 switches the connection destinations of the antennas 916 among a plurality of circuits included in the wireless communication interface 912 (for example, the circuits meant for different wireless communication methods).

Each antenna 916 includes one or more antenna elements (for example, a plurality of antenna elements constituting a MIMO antenna), and is used by the wireless communication interface 912 in transmitting and receiving radio signals. The smartphone 900 can include a plurality of antennas 916 as illustrated in FIG. 54. Meanwhile, in the example illustrated in FIG. 54, although the smartphone 900 includes a plurality of antennas 916, it can alternatively include only a single antenna 916.

Moreover, the smartphone 900 can include the antennas 916 separately for each wireless communication method. In that case, the antenna switch 915 can be omitted from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 912, and the auxiliary controller 919 to each other. The battery 918 supplies electrical power to each block of the smartphone 900, which is illustrated in FIG. 54, via a power supply line that is partially illustrated in FIG. 54 using dashed lines. The auxiliary controller 919 implements the minimum required functions of the smartphone 900 in, for example, the sleep mode.

In the smartphone 900 illustrated in FIG. 54, one or more constituent elements included in the terminal device 200 explained with reference to FIG. 3 (i.e., at least one of the communication control unit 241, the information obtaining unit 243, the determining unit 245, and the notifying unit 247) can be implemented in the wireless communication interface 912. Alternatively, at least some of the constituent elements can be installed in the processor 901 or the auxiliary controller 919. As an example, in the smartphone 900, a module including either some part of the wireless communication interface 912 (for example, the BB processor 913) or the entire wireless communication interface 912, the processor 901, and/or the auxiliary controller 919 can be installed; and the abovementioned one or more constituent elements can be implemented in that module. In that case, the module can store therein a program meant for making a processor function as the abovementioned one or more constituent elements (in other words, a program meant for executing the operations of the abovementioned one or more constituent elements in a processor), and can execute that program. As another example, the program meant for making a processor function as the abovementioned one or more constituent elements can be installed in the smartphone 900; and the wireless communication interface 912 (for example, the BB processor 913), the processor 901, and/or the auxiliary controller 919 can execute that program. As described above, the smartphone 900 or the abovementioned module can be provided as a device including the abovementioned one or more constituent elements; or a program meant for making a processor function as the abovementioned one or more constituent elements can be provided. Alternatively, a readable recording medium in which the program is recorded can be provided.

Moreover, in the smartphone 900 illustrated in FIG. 54, the wireless communication unit 220 that is explained with reference to FIG. 3 can be implemented in the wireless communication interface 912 (for example, the RF circuit 914). Furthermore, the antenna unit 210 can be implemented in the antenna 916. Moreover, the memory unit 230 can be implemented in the memory 902.

### (Second application example)

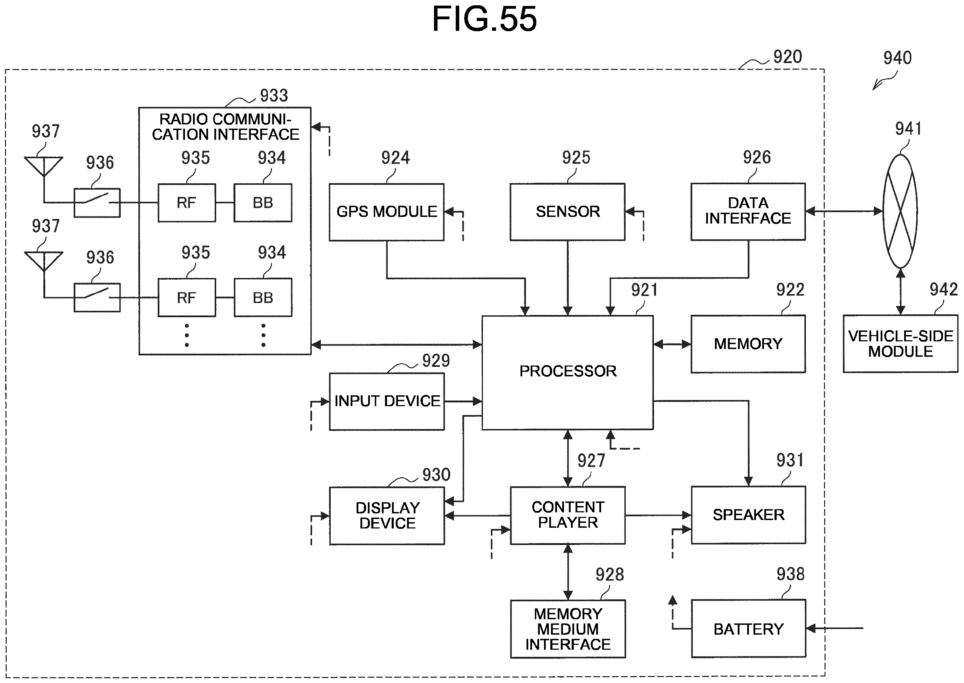

FIG. 55 is a block diagram illustrating an example of a schematic configuration of a car navigation device 920 in which the technology disclosed in the application concerned is applicable. The car navigation device 920 includes a processor 921, a memory 922, a GPS (Global Positioning System) module 924, a sensor 925, a data interface 926, a content player 927, a memory medium interface 928, an input device 929, a display device 930, a speaker 931, a wireless communication interface 933, one or more antenna switches 936, one or more antennas 937, and a battery 938.

The processor 921 can be, for example, a CPU or an SoC, and controls the navigation function and the other functions of the car navigation device 920. The memory 922 includes a RAM and a ROM, and is used to store the programs executed by the processor 921 and to store data.

The GPS module 924 uses GPS signals received from GPS satellites, and measures the location (for example, the latitude, the longitude, and the altitude) of the car navigation device 920. The sensor 925 can include a group of sensors such as a gyro sensor, a geomagnetic sensor, and a pressure sensor. The data interface 926 is connected to, for example, an in-vehicle network 941 via a terminal (not illustrated), and obtains data such as vehicle speed data generated in the vehicle.

The content player 927 reproduces the contents stored in a memory medium (such as a CD or a DVD) that is inserted in the memory medium interface 928. The input device 929 includes a touch sensor for detecting a touch on the screen of the display device 930, or includes buttons, or includes switches; and receives operations and information input from the user. The display device 930 has a screen such as an LCD or an OLED display, and displays the navigation functions or images of the reproduced contents. The speaker 931 outputs the sounds of the navigation functions or the sounds of the reproduced contents.

The wireless communication interface 933 supports any one cellular communication method such as the LTE or the LTE-Advanced, and implements wireless communication. Typically, the wireless communication interface 933 can include a BB processor 934 and an RF circuit 935. The BB processor 934 can perform, for example, encoding/decoding, modulation/demodulation, and multiplexing/inverse multiplexing; and performs a variety of signal processing for wireless communication. The RF circuit 935 can include a mixer, a filter, and an amplifier; and transmits and receives radio signals via the antennas 937. Meanwhile, the wireless communication interface 933 can be a one-chip module in which the BB processor 934 and the RF circuit 935 are integrated. Moreover, the wireless communication interface 933 can include a plurality of BB processors 934 and a plurality of RF circuits 935 as illustrated in FIG. 55. Meanwhile, in the example illustrated in FIG. 55, although the wireless communication interface 933 includes a plurality of BB processors 934 and a plurality of RF circuits 935, it can alternatively include only a single BB processor 934 or only a single RF circuit 935.

Moreover, in addition to supporting the cellular communication method, the wireless communication interface 933 can also support other types of wireless communication methods such as the near field communication method, the proximity wireless communication method, and the wireless LAN method. In that case, the wireless communication interface 933 can include the BB processors 934 and the RF circuits 935 separately for each wireless communication method.

Each antenna switch 936 switches the connection destinations of the antennas 937 among a plurality of circuits included in the wireless communication interface 933 (for example, the circuits meant for different wireless communication methods).

Each antenna 937 includes one or more antenna elements (for example, a plurality of antenna elements constituting a MIMO antenna), and is used by the wireless communication interface 933 in transmitting and receiving radio signals. The car navigation device 920 can include a plurality of antennas 937 as illustrated in FIG. 55. Meanwhile, in the example illustrated in FIG. 55, although the car navigation device 920 includes a plurality of antennas 937, it can alternatively include only a single antenna 937.

Moreover, the car navigation device 920 can include the antennas 937 separately for each wireless communication method. In that case, the antenna switch 936 can be omitted from the configuration of the car navigation device 920.

The battery 938 supplies electrical power to each block of the car navigation device 920, which is illustrated in FIG. 55, via a power supply line that is partially illustrated in FIG. 55 using dashed lines. Moreover, the battery 938 stores the electrical power supplied from the vehicle.

In the car navigation device 920 illustrated in FIG. 55, one or more constituent elements included in the terminal device 200 explained with reference to FIG. 3 (i.e., at least one of the communication control unit 241, the information obtaining unit 243, the determining unit 245, and the notifying unit 247) can be implemented in the wireless communication interface 933. Alternatively, at least some of the constituent elements can be installed in the processor 921. As an example, in the car navigation device 920, a module including either some part of the wireless communication interface 933 (for example, the BB processor 934) or the entire wireless communication interface 933 and/or the processor 921 can be installed; and the abovementioned one or more constituent elements can be implemented in that module. In that case, the module can store therein a program meant for making a processor function as the abovementioned one or more constituent elements (in other words, a program meant for executing the operations of the abovementioned one or more constituent elements in a processor), and can execute that program. As another example, the program meant for making a processor function as the abovementioned one or more constituent elements can be installed in the car navigation device 920; and the wireless communication interface 933 (for example, the BB processor 934) and/or the processor 921 can execute that program. As described above, the car navigation device 920 or the abovementioned module can be provided as a device including the abovementioned one or more constituent elements; or a program meant for making a processor function as the abovementioned one or more constituent elements can be provided. Alternatively, a readable recording medium in which the program is recorded can be provided.

Moreover, in the car navigation device 920 illustrated in FIG. 55, the wireless communication unit 220 that is explained with reference to FIG. 3 can be implemented in the wireless communication interface 933 (for example, the RF circuit 935). Furthermore, the antenna unit 210 can be implemented in the antenna 937. Moreover, the memory unit 230 can be implemented in the memory 922.

Meanwhile, the technology disclosed in the application concerned can be implemented as an in-vehicle system (or a vehicle) 940 that includes one or more blocks of the car navigation device 920; the in-vehicle network 941; and a vehicle-side module 942. The vehicle-side module 942 generates vehicle data such as the vehicle speed, the engine rotation count, and breakdown information; and outputs the generated data to the in-vehicle network 941.

### «6. Summary»

Although the application concerned is described above in detail in the form of an embodiment with reference to the accompanying drawings; the technical scope of the application concerned is not limited to the embodiment described above. That is, the application concerned is to be construed as embodying all modifications such as other embodiments, additions, alternative constructions, and deletions that may occur to one skilled in the art that fairly fall within the basic teaching herein set forth. In any form thereof, as long as the functions/effects of the application concerned are achieved, the modifications are included in the scope of the application concerned.

The effects described in the present written description are only explanatory and exemplary, and are not limited in scope. That is, in addition to or in place of the effects described above, the technology disclosed in the application concerned enables achieving other effects that may occur to one skilled in the art.

Meanwhile, a configuration as explained below also falls within the technical scope of the application concerned.
(1) A communication device comprising:
   a communication unit that performs wireless communication;
   an obtaining unit that obtains, from another communication device, information about a first-type range of some of resources which have been reserved by the other communication device for use in inter-device communication; and
   a control unit that, based on the obtained information about the first-type range, controls a second-type range from which the resources are to be selected for use in the inter-device communication.
(2) The communication device according to (1), wherein the control unit restricts the second-type range based on the information about the first-type range.
(3) The communication device according to (1) or (2), wherein
   the first-type range includes a plurality of third-type ranges,
   each of the plurality of third-type ranges has one of a plurality of levels associated thereto,
   in the information about the first-type range, information about the third-type ranges, which are included in the first-type range, is associated, and
   the control unit controls the second-type range according to the obtained information about the third-type ranges.
(4) The communication device according to (3), wherein
   the information about the third-type ranges contains level information about the levels set in the third-type ranges, and
   according to the obtained level information, the control unit performs control in such a way that some of the plurality of third-type ranges are included in the second-type range.
(5) The communication device according to (4), wherein
   the plurality of levels include
   a first level associated to the third-type ranges used in an exclusive manner, and
   a second level associated to the third-type ranges used in an inclusive manner, and
   according to the obtained level information, from among the third-type ranges associated to the second level, the control unit decides on candidates for the third-type ranges to be included in the second-type range.
(6) The communication device according to (4) or (5), wherein, based on a condition notified from a base station, the control unit decides on candidates for the third-type ranges to be included in the second-type range according to the level information.
(7) The communication device according to any one of (4) to (6), wherein
   according to result of a search performed in the second-type range, which is controlled to include the third-type ranges corresponding to some levels from among the plurality of levels, for the resources usable in the inter-device communication,
   the control unit controls the second-type range to include the third-type ranges corresponding to different other levels than the some levels, and performs a re-search in the second-type range for the resources usable in the inter-device communication.
(8) The communication device according to (7), wherein
   the control unit decides on the other levels for performing the re-search according to information indicating at least
   either priority of the inter-device communication performed using the resources selected from the first-type range set by the other communication device,
   or priority of the inter-device communication performed using the resources selected from the second-type range,
   or congestion of frequency band used in the inter-device communication.
(9) The communication device according to any one of (1) to (8), wherein
   the information about the first-type range contains first-type priority information which is set by the other communication device and which is about priority of the inter-device communication in which the resources selected from the first-type range are used, and
   the control unit controls the second-type range based on the first-type priority information.
(10) The communication device according to (9), wherein the control unit controls the second-type range based on the first-type priority information and based on second-type priority information about priority of the inter-device communication in which the resources selected from the second-type range are used.
(11) The communication device according to any one of (1) to (10), wherein
   the inter-device communication represents wireless communication in which packets are periodically transmitted among a plurality of communication devices, and
   during a period related to transmission of the packets, the first-type range is set as a single range continuous in chronological order.
(12) The communication device according to any one of (1) to (10), wherein
   the inter-device communication represents wireless communication in which packets are periodically transmitted among a plurality of communication devices, and
   during a period regarding transmission of the packets, the first-type range is set as a plurality of ranges mutually separated in chronological order.
(13) The communication device according to (12), wherein, regarding the plurality of ranges set to be mutually separated in chronological order as the first-type range, distance therebetween is decided according to at least either maximum permissible delay amount or maximum jitter amount in the inter-device communication in which the resources selected from the first-type range are used.
(14) The communication device according to (12) or (13), wherein, according to transmission timings of the packets, from among the plurality of ranges set to be mutually separated in chronological order, the control unit decides on a range for selection of resources for use in transmission of the packets.
(15) The communication device according to any one of (12) to (14), wherein, during a period related to transmission of the packets, a plurality of first-type ranges associated to mutually different reservation groups is set.
(16) The communication device according to any one of (1) to (15), wherein the inter-device communication represents communication performed among a plurality of communication devices, each of which is configured to be mobile, via a radio link.
(17) A communication device comprising:
   a communication unit that performs wireless communication;
   a control unit that, in order to use some of resources in inter-device communication, controls a first-type range from which the resources are to be reserved; and
   a notifying unit that, in order to control a second-type range from which another communication device selects the resources to be used in the inter-device communication, notifies the other communication device about information regarding the first-type range.
(18) The communication device according to (17), wherein
   the control unit sets a plurality of third-type ranges included in the first-type range, each of the plurality of third-type ranges being associated to one of a plurality of levels, and
   the notifying unit associates, to information regarding the first-type range, level information related to the third-type ranges included in the first-type range.
(19) The communication device according to (18), wherein condition regarding the inter-device communication includes condition related to at least either maximum jitter amount of packets transmitted in the inter-device communication or maximum size variation of the packets.
(20) The communication device according to (18) or (19), wherein size of data that is transmittable using the resources selected from the third-type range is set according to the level associated to the third-type range.
(21) The communication device according to any one of (18) to (20), wherein information related to condition for setting the third-type range associated to the level is notified from a base station.
(22) The communication device according to any one of (18) to (21), wherein the plurality of levels is set based on probability density function of jitter component in the inter-device communication in which the resources selected from the first-type range are used.
(23) A communication device comprising:
   a communication unit that performs wireless communication;
   a notifying unit that notifies a base station about first-type information regarding condition for periodic packet transmission to another terminal device during inter-device communication;
   an obtaining unit that, after notification of the first-type information, obtains, from the base station, second-type information regarding transmission resources allocated to be usable in the periodic packet transmission; and
   a control unit that, based on the second-type information, selects resources to be used in the periodic packet transmission.
(24) The communication device according to (23), wherein the first-type information contains at least either information about jitter in packets that are periodically transmitted during the inter-device communication or information about size variation of the packets.
(25) The communication device according to (23) or (24), wherein range for selection of the resources is decided based on the first-type information and condition related to the inter-device communication.
(26) The communication device according to (25), wherein
   the condition related to the inter-device communication includes condition related to at least one of
   congestion of frequency band used in the inter-device communication,
   priority of packets transmitted during the inter-device communication,
   type of service used in the inter-device communication,
   type of packets transmitted during the inter-device communication,
   position information of terminal devices that perform the inter-device communication, and
   speed of terminal devices that perform the inter-device communication.
(27) The communication device according to any one of (23) to (26), wherein, based on the second-type information and condition related to selection of resources, the control unit selects resources to be used in the periodic packet transmission.
(28) The communication device according to (27), wherein the condition related to selection of resources is notified from the base station.
(29) The communication device according to (27) or (28), wherein
   the condition related to selection of the resources includes at least one of
   condition related to random resource selection,
   condition related to sensing-based resource selection,
   condition related to resource selection according to transmittable timing for generated packets, and
   condition related to resource selection according to level associated to each resource.
(30) The communication device according to (29), wherein the level is set according to at least
   either probability density function of jitter component in the periodic packet transmission,
   or probability density function of component of size variation of the packets.
(31) A communication device comprising:
   a communication unit that performs wireless communication; and
   a control unit that, according to information about first-type resources usable in transmission of packets during inter-device communication and according to information about the packets scheduled to be transmitted, selects second-type resources that are different than the first-type resources.
(32) The communication device according to (31), wherein the first-type resources represent resources reserved for use in packet transmission during the inter-device communication.
(33) The communication device according to (32), wherein, when size of the packets scheduled to be transmitted exceeds size of data transmittable using the first-type resources, the control unit performs control in such a way that the packets are transmitted using the first-type resources and the second-type resources.
(34) The communication device according to (33), wherein the control unit associates, to at least either the first-type resources or the second-type resources, control information in which part of data of the packets transmitted using the first-type resources is associated to other part of data of the packets transmitted using the second-type resources.
(35) The communication device according to (31), wherein the first-type resources represent resources allocated for use in periodic packet transmission to other terminal device during the inter-device communication.
(36) The communication device according to (35), wherein the control unit issues a request to a base station for allocating the second-type resources, and obtains the second-type resources.
(37) The communication device according to (36), wherein
   the first-type resources represent resources allocated for use in periodic packet transmission to other terminal device during the inter-device communication, and
   the first-type resources are allocated according to result of allocation of the second-type resources in response to the request.
(38) The communication device according to (35), wherein the control unit selects and obtains the second-type resources.
(39) The communication device according to (38), wherein the control unit randomly selects the second-type resources.
(40) The communication device according to (38), wherein the control unit selects the second-type resources according to result of sensing of resources usable in the inter-device communication.
(41) The communication device according to (38), wherein the control unit selects the second-type resources according to transmittable timing for generated packets.
(42) The communication device according to (41), wherein the control unit selects the second-type resources which enable earliest transmission of generated packets.
(43) The communication device according to any one of (38) to (42), wherein the control unit selects the second-type resources from a resource pool that is allocated by a base station to be usable in the inter-device communication.
(44) The communication device according to (43), wherein at least some resources in the resource pool are allocated separately from another terminal device.
(45) The communication device according to (43), wherein at least some resources of the resource pool are allocated separately from another terminal device.
(46) The communication device according to any one of (38) to (45), wherein the control unit selects the second-type resources according to resource usage status of the other terminal device during the inter-device communication.
(47) The communication device according to (46), wherein information related to resource usage status of the other terminal device during the inter-device communication is notified from the other terminal device.
(48) The communication device according to (46), wherein information related to resources usage status of the other terminal device in the inter-device communication is notified from the other terminal device.
(49) The communication device according to any one of (46) to (48), wherein the other terminal device from which information related to resource usage status during the inter-device communication is to be obtained is decided according to at least
   either attributes of packets transmitted by the other terminal device,
   or degree of interference with the other terminal device.
(50) The communication device according to any one of (38) to (49), further comprising:
   a determining unit that determines whether or not periodic packet transmission using the first-type resources is possible; and
   a notifying unit that notifies a base station about determination result, wherein
   allocation of the first-type resources is controlled according to notification.
(51) A communication device including:
   a communication unit that performs wireless communication;
   an obtaining unit that obtains, from a first-type terminal device, first-type information regarding condition for periodic packet transmission from the first-type terminal device to a second-type terminal device during inter-device communication;
   a control unit that, based on the first-type information, controls allocation of resources usable in the periodic packet transmission; and
   a notifying unit that notifies the first-type terminal device about second-type information regarding allocation of resources usable in the periodic packet transmission.
(52) A communication method implemented in a computer, including:
   performing wireless communication;
   obtaining, from another communication device, information about a first-type range of some of resources which have been reserved by the other communication device for use in inter-device communication; and
   controlling, based on the obtained information about the first-type range, a second-type range from which the resources are to be selected for use in the inter-device communication.
(53) A communication method implemented in a computer, including:
   performing wireless communication;
   controlling, in order to use some of resources in inter-device communication, a first-type range from which the resources are to be reserved; and
   notifying, in order to control a second-type range from which another communication device selects the resources to be used in the inter-device communication, the other communication device about information regarding the first-type range.
(54) A communication method implemented in a computer, including:
   performing wireless communication;
   notifying a base station about first-type information regarding condition for periodic packet transmission to another terminal device during inter-device communication;
   obtaining, after notification of the first-type information, from the base station, second-type information regarding transmission resources allocated to be usable in the periodic packet transmission; and
   selecting, based on the second-type information, resources to be used in the periodic packet transmission.
(55) A communication method implemented in a computer, including:
   performing wireless communication; and
   selecting, according to information about first-type resources usable in transmission of packets during inter-device communication and according to information about the packets scheduled to be transmitted, second-type resources that are different than the first-type resources.
(56) A communication method implemented in a computer, including:
   performing wireless communication; and
   obtaining, from a first-type terminal device, first-type information regarding condition for periodic packet transmission from the first-type terminal device to a second-type terminal device during inter-device communication;
   controlling, based on the first-type information, allocation of resources usable in the periodic packet transmission; and
   notifying the first-type terminal device about second-type information regarding allocation of resources usable in the periodic packet transmission.
(57) A program that causes a computer to execute:
   performing wireless communication;
   obtaining, from another communication device, information about a first-type range of some of resources which have been reserved by the other communication device for use in inter-device communication; and
   controlling, based on the obtained information about the first-type range, a second-type range from which the resources are to be selected for use in the inter-device communication.
(58) A program that causes a computer to execute:
   performing wireless communication;
   controlling, in order to use some of resources in inter-device communication, a first-type range from which the resources are to be reserved; and
   notifying, in order to control a second-type range from which another communication device selects the resources to be used in the inter-device communication, the other communication device about information regarding the first-type range.
(59) A program that causes a computer to execute:
   performing wireless communication;
   notifying a base station about first-type information regarding condition for periodic packet transmission to another terminal device during inter-device communication;
   obtaining, after notification of the first-type information, from the base station, second-type information regarding transmission resources allocated to be usable in the periodic packet transmission; and
   selecting, based on the second-type information, resources to be used in the periodic packet transmission.
(60) A program that causes a computer to execute:
   performing wireless communication; and
   selecting, according to information about first-type resources usable in transmission of packets during inter-device communication and according to information about the packets scheduled to be transmitted, second-type resources that are different than the first-type resources.
(61) A program that causes a computer to execute:
   performing wireless communication; and
   obtaining, from a first-type terminal device, first-type information regarding condition for periodic packet transmission from the first-type terminal device to a second-type terminal device during inter-device communication;
   controlling, based on the first-type information, allocation of resources usable in the periodic packet transmission; and
   notifying the first-type terminal device about second-type information regarding allocation of resources usable in the periodic packet transmission.

### Reference Signs List

- 1: system
- 100: base station
- 110: antenna unit
- 120: wireless communication unit
- 130: network communication unit
- 140: memory unit
- 150: control unit
- 151: communication processing unit
- 153: information obtaining unit
- 155: notifying unit
- 200: terminal device
- 210: antenna unit
- 220: wireless communication unit
- 230: memory unit
- 240: control unit
- 241: communication processing unit
- 243: information obtaining unit
- 245: determining unit
- 247: notifying unit

## Claims

1. A communication device comprising:
a communication unit that performs wireless communication;
an obtaining unit that obtains, from another communication device, information about a first-type range of some of resources which have been reserved by the other communication device for use in inter-device communication; and
a control unit that, based on the obtained information about the first-type range, controls a second-type range from which the resources are to be selected for use in the inter-device communication.

2. The communication device according to claim 1, wherein the control unit restricts the second-type range based on the information about the first-type range.

3. The communication device according to claim 1, wherein
the first-type range includes a plurality of third-type ranges,
each of the plurality of third-type ranges has one of a plurality of levels associated thereto,
in the information about the first-type range, information about the third-type ranges, which are included in the first-type range, is associated, and
the control unit controls the second-type range according to the obtained information about the third-type ranges.

4. The communication device according to claim 3, wherein
the information about the third-type ranges contains level information about the levels set in the third-type ranges, and
according to the obtained level information, the control unit performs control in such a way that some of the plurality of third-type ranges are included in the second-type range.

5. The communication device according to claim 4, wherein
the plurality of levels include
a first level associated to the third-type ranges used in an exclusive manner, and
a second level associated to the third-type ranges used in an inclusive manner, and
according to the obtained level information, from among the third-type ranges associated to the second level, the control unit decides on candidates for the third-type ranges to be included in the second-type range.

6. The communication device according to claim 4, wherein, based on a condition notified from a base station, the control unit decides on candidates for the third-type ranges to be included in the second-type range according to the level information.

7. The communication device according to claim 1, wherein
the information about the first-type range contains first-type priority information which is set by the other communication device and which is about priority of the inter-device communication in which the resources selected from the first-type range are used, and
the control unit controls the second-type range based on the first-type priority information.

8. The communication device according to claim 7, wherein the control unit controls the second-type range based on the first-type priority information and based on second-type priority information about priority of the inter-device communication in which the resources selected from the second-type range are used.

9. The communication device according to claim 1, wherein
the inter-device communication represents wireless communication in which packets are periodically transmitted among a plurality of communication devices, and
during a period related to transmission of the packets, the first-type range is set as a single range continuous in chronological order.

10. The communication device according to claim 1, wherein
the inter-device communication represents wireless communication in which packets are periodically transmitted among a plurality of communication devices, and
during a period regarding transmission of the packets, the first-type range is set as a plurality of ranges mutually separated in chronological order.

11. The communication device according to claim 10, wherein, regarding the plurality of ranges set to be mutually separated in chronological order as the first-type range, distance therebetween is decided according to at least either maximum permissible delay amount or maximum jitter amount in the inter-device communication in which the resources selected from the first-type range are used.

12. The communication device according to claim 10, wherein, according to transmission timings of the packets, from among the plurality of ranges set to be mutually separated in chronological order, the control unit decides on a range for selection of resources for use in transmission of the packets.

13. The communication device according to claim 10, wherein, during a period related to transmission of the packets, a plurality of first-type ranges associated to mutually different reservation groups is set.

14. A communication device comprising:
a communication unit that performs wireless communication;
a control unit that, in order to use some of resources in inter-device communication, controls a first-type range from which the resources are to be reserved; and
a notifying unit that, in order to control a second-type range from which another communication device selects the resources to be used in the inter-device communication, notifies the other communication device about information regarding the first-type range.

15. The communication device according to claim 14, wherein
the control unit sets a plurality of third-type ranges included in the first-type range, each of the plurality of third-type ranges being associated to one of a plurality of levels, and
the notifying unit associates, to information regarding the first-type range, level information related to the third-type ranges included in the first-type range.

16. The communication device according to claim 15, wherein condition regarding the inter-device communication includes condition related to at least either maximum jitter amount of packets transmitted in the inter-device communication or maximum size variation of the packets.

17. The communication device according to claim 15, wherein size of data that is transmittable using the resources selected from the third-type range is set according to the level associated to the third-type range.

18. The communication device according to claim 15, wherein information related to condition for setting the third-type range associated to the level is notified from a base station.

19. A communication device comprising:
a communication unit that performs wireless communication;
a notifying unit that notifies a base station about first-type information regarding condition for periodic packet transmission to another terminal device during inter-device communication;
an obtaining unit that, after notification of the first-type information, obtains, from the base station, second-type information regarding transmission resources allocated to be usable in the periodic packet transmission; and
a control unit that, based on the second-type information, selects resources to be used in the periodic packet transmission.

20. The communication device according to claim 19, wherein the first-type information contains at least either information about jitter in packets that are periodically transmitted during the inter-device communication or information about size variation of the packets.

21. The communication device according to claim 19, wherein
range for selection of the resources is decided based on the first-type information and condition related to the inter-device communication, and
the condition related to the inter-device communication includes condition related to at least one of
congestion of frequency band used in the inter-device communication,
priority of packets transmitted during the inter-device communication,
type of service used in the inter-device communication,
type of packets transmitted during the inter-device communication,
position information of terminal devices that perform the inter-device communication, and
speed of terminal devices that perform the inter-device communication.

22. The communication device according to claim 19, wherein
based on the second-type information and condition related to selection of resources, the control unit selects resources to be used in the periodic packet transmission, and
the condition related to selection of the resources includes at least one of
condition related to random resource selection,
condition related to sensing-based resource selection,
condition related to resource selection according to transmittable timing for generated packets, and
condition related to resource selection according to level associated to each resource.

23. The communication device according to claim 22, wherein the level is set according to at least
either probability density function of jitter component in the periodic packet transmission,
or probability density function of component of size variation of the packets.

24. A communication device comprising:
a communication unit that performs wireless communication; and
a control unit that, according to information about first-type resources usable in transmission of packets during inter-device communication and according to information about the packets scheduled to be transmitted, selects second-type resources that are different than the first-type resources.

25. The communication device according to claim 24, wherein the first-type resources represent resources reserved for use in packet transmission during the inter-device communication.

26. The communication device according to claim 25, wherein, when size of the packets scheduled to be transmitted exceeds size of data transmittable using the first-type resources, the control unit performs control in such a way that the packets are transmitted using the first-type resources and the second-type resources.

27. The communication device according to claim 26, wherein the control unit associates, to at least either the first-type resources or the second-type resources, control information in which part of data of the packets transmitted using the first-type resources is associated to other part of data of the packets transmitted using the second-type resources.

28. The communication device according to claim 24, wherein the first-type resources represent resources allocated for use in periodic packet transmission to other terminal device during the inter-device communication.

29. The communication device according to claim 28, wherein the control unit issues a request to a base station for allocating the second-type resources, and obtains the second-type resources.

30. The communication device according to claim 29, wherein
the first-type resources represent resources allocated for use in periodic packet transmission to other terminal device during the inter-device communication, and
the first-type resources are allocated according to result of allocation of the second-type resources in response to the request.

31. The communication device according to claim 28, wherein the control unit selects and obtains the second-type resources.

32. The communication device according to claim 31, wherein the control unit randomly selects the second-type resources.

33. The communication device according to claim 31, wherein the control unit selects the second-type resources according to result of sensing of resources usable in the inter-device communication.

34. The communication device according to claim 31, wherein the control unit selects the second-type resources according to transmittable timing for generated packets.

35. The communication device according to claim 31, wherein the control unit selects the second-type resources from a resource pool that is allocated by a base station to be usable in the inter-device communication.

36. The communication device according to claim 35, wherein at least some resources in the resource pool are allocated separately from another terminal device.

37. The communication device according to claim 31, wherein the control unit selects the second-type resources according to resource usage status of the other terminal device during the inter-device communication.

38. The communication device according to claim 37, wherein information related to resource usage status of the other terminal device during the inter-device communication is notified from the other terminal device.

39. The communication device according to claim 37, wherein the other terminal device from which information related to resource usage status during the inter-device communication is to be obtained is decided according to at least
either attributes of packets transmitted by the other terminal device,
or degree of interference with the other terminal device.

40. The communication device according to claim 31, further comprising:
a determining unit that determines whether or not periodic packet transmission using the first-type resources is possible; and
a notifying unit that notifies a base station about determination result, wherein
allocation of the first-type resources is controlled according to notification.
